(19) Europäisches Patentamt / European Patent Office / Office européen des brevets

(11) **EP 2 487 029 B1**

(12) **EUROPEAN PATENT SPECIFICATION**

(45) Date of publication and mention of the grant of the patent:
**31.07.2019  Bulletin 2019/31**

(21) Application number: **10821760.5**

(22) Date of filing: **23.02.2010**

(51) Int Cl.:
*B42D 13/00* (2006.01)   *B42D 25/24* (2014.01)
*B42D 25/41* (2014.01)   *B42D 25/455* (2014.01)
*B42D 25/46* (2014.01)   *B32B 5/02* (2006.01)

(86) International application number:
**PCT/JP2010/052685**

(87) International publication number:
**WO 2011/043087 (14.04.2011 Gazette 2011/15)**

(54) **COMPOSITE HINGE SHEET FOR LASER-MARKABLE MULTILAYER LAMINATE FOR ELECTRONIC PASSPORT, LASER-MARKABLE MULTILAYER LAMINATE FOR ELECTRONIC PASSPORT, ELECTRONIC PASSPORT, METHOD FOR MANUFACTURING A COMPOSITE HINGE SHEET, AND USE OF A MOLTEN THERMOPLASTIC RESIN**

VERBUNDDATENBLATT FÜR EIN LASERMARKIERBARES MEHRSCHICHTIGES LAMINAT FÜR ELEKTRONISCHE AUSWEISE, LASERMARKIERBARES MEHRSCHICHTIGES LAMINAT FÜR ELEKTRONISCHE AUSWEISE, ELEKTRONISCHER AUSWEIS, VERFAHREN ZUR HERSTELLUNG EINES VERBUNDDATENBLATTS UND VERWENDUNG EINES GESCHMOLZENEN THERMOPLASTISCHEN HARZES

FEUILLE D'ARTICULATION COMPOSITE POUR UN STRATIFIÉ MULTICOUCHE MARQUABLE AU LASER POUR PASSEPORT ÉLECTRONIQUE, STRATIFIÉ MULTICOUCHE MARQUABLE AU LASER POUR PASSEPORT ÉLECTRONIQUE, PASSEPORT ÉLECTRONIQUE, PROCÉDÉ DE FABRICATION D'UN STRATIFIÉ MULTICOUCHE, ET UTILISATION D'UNE RÉSINE THERMOPLASTIQUE FONDUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.10.2009  JP 2009235754**

(43) Date of publication of application:
**15.08.2012  Bulletin 2012/33**

(73) Proprietor: **Mitsubishi Chemical Corporation Tokyo 100-8251 (JP)**

(72) Inventors:
• **SAKAGAMI, Toshinori**
  **Yokkaichi-shi**
  **Mie 510-0883 (JP)**
• **WATANABE, Takashi**
  **Yokkaichi-shi**
  **Mie 510-0883 (JP)**
• **SUEISHI, Yuuki**
  **Yokkaichi-shi**
  **Mie 510-0883 (JP)**
• **HASHIMOTO, Akira**
  **Yokkaichi-shi**
  **Mie 510-0883 (JP)**

(74) Representative: **TBK**
  **Bavariaring 4-6**
  **80336 München (DE)**

(56) References cited:
EP-A1- 1 502 765       WO-A1-2006/092273
WO-A1-2006/097276   WO-A1-2007/034129
WO-A1-2008/135285   WO-A2-2006/053738
JP-A- 10 128 926      JP-A- 2000 136 482
JP-Y2- 5 041 009      US-A1- 2007 182 154

**Description**

Technical Field

The present invention relates to a composite hinge sheet for laser-markable multilayer laminate for electronic passport that is used for an electronic passport, a laser-markable multilayer laminate for electronic passport using the composite hinge sheet, and an electronic passport. The present invention particularly relates to a composite hinge sheet having excellent thermal adhesiveness, durability, foldability and processability, a laser-markable multilayer laminate for electronic passport capable of being marked thereon by laser beam irradiation without damage, capable of having clear letters, symbols, and images with high contrast between the original surface color and the printed portions and excellent thermal resistance and productivity, and an electronic passport using such a laser-markable multilayer laminate for electronic passport.

Background Art

While the movement of human resources has been activated lately in the midst of ongoing international exchanges, the importance of a passport recording personal information therein has been growing as means for identifying an individual and verifying identity. In particular, a passport has been playing a role as a so-called identification (identification card or the like) issued by a country, which is an official body and has reliability.

In particular, since the September, 2001 terrorist attacks, in order to tighten up immigration and departure control of each country, ICAO (International Civil Aviation Organization), which is a specialized agency of the United Nations, established a standard, and the work for introducing electronic passports has been started. Since it is important to inhibit forgery in the work, a technique of laser-markable personal names, symbols, letters, photographs and the like has been drawing attention.

By the way, since such an electronic passport can identify an individual and verify the identity, if personal information can easily be falsified or faked by a third party other than a country (or an agent on behalf of a country), the reliability on the identification deteriorates, and it may pose a problem for the development of international exchanges or worldwide movement of human resources.

Therefore, how to inhibit falsification and forgery in the aforementioned electronic passport is an important problem. Since the electronic passport has a light, thin, short and small standard, how to clearly indicate personal names, symbols, letters, photographs and the like with high contrasts is important. Further, since realization of clear indication with high contrasts leads to previous inhibition of falsification and forgery, the market expectation is great.

In addition to problems such as falsification and forgery, electronic passports are required to have durability because they are carried all over the place of the world. Particularly, data capable of specifying individuals is often attached to an electronic passport via a hinge sheet, and therefore such a hinge sheet is required to have durability that is resistant to damages. That is, in order to prevent damages in advance such as a hinge sheet tearing off from a main body of the electronic passport, a hinge sheet or the like is required to have durability. Such durability can surely prevent falsification and forgery by a third party other than an official body as an issuer to intentionally (on purpose) replace a hinge sheet or the like with another one. To this end, urgent response thereto has been required.

For such problems, attention is paid to a technique of laser-markable personal names, symbols, letters, photographs and the like, specifically, to a laminate for laser-markable. For example, there are the following Patent Documents 1 and 2.

Patent Document 1 aims to obtain a multilayer laser-markable sheet having no damage in appearance, good contrasts, and excellent surface smoothness. Patent Document 1 discloses a multilayer sheet for laser marking which is a multilayer sheet having at least a surface layer and an internal layer and formed by melt-coextrusion of (A) a surface layer made of a transparent thermoplastic resin and (B) an internal layer made of a thermoplastic resin composition containing, with respect to (b-1) 100 parts by weight of a thermoplastic resin, (b-2) 0.01 to 5 parts by weight of an energy absorber absorbing a laser beam and (b-3) 0.5 to 7 parts by weight of a colorant.

Patent Document 2 aims to obtain a multilayer laser-markable sheet having no damage in appearance, good contrasts, and excellent smoothness as well as excellent thermal resistance. Patent Document 2 discloses a multilayer sheet for laser marking which is a multilayer sheet having a first surface layer/an internal layer/a second surface layer and formed by melt-coextrusion of (A) the first and the second transparent surface layers of a thermoplastic resin composition containing 0.001 to 5 parts by weight of at least one selected from mica and carbon black with respect to 100 parts by weight of a transparent thermoplastic resin and (B) the internal layer of a thermoplastic resin composition containing 0.001 to 3 parts by weight of an energy absorber absorbing a laser beam with respect to 100 parts by weight of a thermoplastic resin with a thickness ratio of the first surface layer/the internal layer/the second layer of 1:4:1 to 1:10:1.

Further, the following Patent Documents 3 to 9 are available, for example, which disclose a hinge sheet that is a sheet for letting an information page bound with a cover together with other pages.

Patent Document 3 discloses a technique of, when binding a printed matter sheet or the like with a thread, performing the binding while providing a binding margin. Patent Document 4 discloses a technique of, when binding an information page including a transparent layer/a color layer/a transparent layer, making the transparent layers as both outer layers of the transparent layer/the color layer/the transparent layer protrude and making the same narrower, and using this portion as a binding margin. Patent Document 5 discloses a technique of making a face film and a back film narrower, and using this narrowed portion as a binding margin.

Patent Document 6 discloses a technique of binding an information page including cover foil covering a plastic inlay made of a plastic sheet together with other pages. Patent Document 7 discloses a technique of binding several sheets of paper with a cover.

Patent Documents 8 and 9 disclose a technique of providing a sheet to be bound at a center portion of a laminate, i.e., a hinge sheet.

WO2006097276 (A1) describes a data carrier for integrating into a passport, comprising at least two plastic layers which are connected in a durable manner. Said data carriers comprise a fixing area which is embodied in a particular manner and which is to be fixed into the passport. Further, a flexible, open-pored, web grill (50) is integrated between the layers and protrudes over the edge of at least one of the layers and extends into the fixing area. Said web grill is laminated during the production of the data carrier.

WO2006053738 (A2) mentions a personal document in the form of a book, comprising a book cover, a multi-layered personalised side which contains personalised data, in addition to inner pages. The personalised side and the inner pages are secured by means of a seam to the book cover. The multi-layered personalising side is provided with a central area which is made of a textile layer which is joined on both sides to a thermoplastic layer which covers the central area until the projecting end. A RFID element comprising an IC element is integrated into the central area for the contactless transfer of biometric data of the personal document owner. The personalised side is sewn by means of a seam in the region of the projecting end.

WO2007034129 (A1) discloses an authentication or validation document incorporating a page for holding data relating to the intended holder of the document, said page incorporating an inlay provided with a microchip, the chip being adapted to be encoded with data in electronic form, a sheet of material capable of being provided with data in visually legible form, and plastics layers between which the inlay and sheet are laminated so as to embed the inlay and sheet of material within said page.

Prior Art Documents

Patent Documents

Patent Document 1: JP-A-2002-273832
Patent Document 2: Japanese Patent No. 3889431
Patent Document 3: JP-A-09-123636
Patent Document 4: WO98/19870
Patent Document 5: JP-A-2001-213072
Patent Document 6: U.S. Patent No. 006135503
Patent Document 7: JP-A-2000-203174
Patent Document 8: European Patent No. 1592565
Patent Document 9: European Patent No. 1502765

WO 2006/097276 A1, WO 2006/053738 A2, WO 2007/034129 A1

Summary of the Invention

Since each of the multilayer sheets for laser marking in Patent Documents 1 and 2 has surely excellent thermal adhesiveness between these multilayer sheets or, for example, with a thermoplastic resin sheet such as a PETG sheet or an ABS resin sheet and can obtain sufficient printability for printing letters and numbers by laser marking by laser beam irradiation, it deserves recognition. However, the inner layer of Patent Document 1 contains 0.5 to 7 parts by weight of a colorant. In the case of a so-called identification card such as a passport with personal information recorded therein as stated above, printing is performed typically at an inlay layer as an intermediate layer. In such a case, the multilayer sheet used for the outermost layer (overlay) will not give sufficient transparency because of the colorant contained. This causes a problem of deterioration in the image clarity at a printing portion. The multilayer sheet of Patent Document 2 contains at least one type selected from mica and carbon black as a laser light absorbing agent at the surface layers as well. In the case of using this multilayer sheet at the outermost layer (overlay) of a so-called identification card such as a passport with personal information recorded therein as stated above, upon irradiation with laser light, these laser light absorbing agents contained at the surface layers will absorb laser light energy, causing phenomena such as foaming. This results in problems such as deterioration in surface smoothness.

Patent Document 3 does not disclose a technique of binding a laminate together with other sheets. In Patent Document 4, the configuration including the transparent layer/the color layer/the transparent layer has a thickness different from that of the binding margin, and therefore it is difficult to mass produce such a laminate stably. In Patent Document 5, this technique also has the same problem as stated above in its manufacturing method, and it is difficult to mass produce such a laminate stably. In Patent Document 6, since a plurality of sheets of cover foil is made to protrude from the information page portion to be a narrow binding part, it has the same problem as stated above. In Patent Document 7, several sheets of paper are attached to a cover using a band made of synthetic resin, and therefore the binding portion will be thick, causing a problem that it may open after bookbinding, and therefore this is not suitable for bookbinding in large quantities such as for passports.

In Patent Document 8, a sheet provided for connection with others is inserted at a center part of the laminate but only partially. Such partial insertion causes a difference in thickness between a part into which a sheet for connection with the laminate is inserted during heat lamination and other parts. In other words, a part into which the sheet for connection is inserted will swell as compared with other parts. Then, this causes problems such as in that a passport after bookbinding accidentally opens by itself, when a plurality of passports after bookbinding is allowed to stand, they have the shape of a sector. As a result, when a passport is to be conveyed to a printing process as the next process, a failure may occur in the conveyance. Furthermore, it includes a typical layer structure, and a surface layer thereof includes PE and a core layer thereof includes PET as sheet materials of the connection portion. Further, it is described that a sheet material of the information pages is PC. Based on these descriptions, since the PC sheet and the surface layer PE of the connection portion do not adhere by heating, a certain adhesive is required for adhesion. The document, however, does not have any particular description on the adhesive, and simply describes the adhesion with a cover or the like with a high-temperature activation adhesive. Therefore, this disclosed technique requires a method of applying a certain adhesive to both surfaces of the sheet material at the connection portion in advance, for example, thus making the manufacturing process complicated. Additionally, the document does not describe the adhesive strength of this portion, which is not clear for the disclosed technique.

Patent Document 9 discloses a technique of inserting a flexible layer having openings at a center portion of the laminate entirely or partially, or providing a flexible layer at an outermost layer of a laminate. As already described, the techniques of partially inserting a flexible layer and of providing a flexible layer at an outermost layer of the laminated have the above problems. Herein, as for the technique of providing a flexible layer having openings at a center portion of the laminate entirely, this document describes woven fabric being used as the flexible layer having openings. Such woven fabric, however, has a problem of a cut portion getting frayed during cutting into a certain size, and therefore this woven fabric cannot be used directly. To cope with this problem, some countermeasures are required, such as applying an adhesive to prevent fraying of a thread during cutting or melting a thread at a high temperature to prevent fraying of a thread, thus posing a problem for manufacturing. Further, when cutting into fixed dimensions, the woven fabric has a problem of poor dimension accuracy because of woven fabric. This may be a factor to degrade the dimension accuracy of the laminate, thus similarly posing a problem for manufacturing. Moreover, this patent discloses a technique for a flexible layer having openings as a technique for a binding portion, and hardly discloses a technique for laminate.

In this way, none of these Patent Documents have solved the problems sufficiently, and early improvement has been requested.

The present invention has been made in order to solve the aforementioned problems and aims to provide a composite hinge sheet for laser-markable multilayer laminate for electronic passport being excellent in thermal adhesiveness and in dimension accuracy for a laser-markable multilayer laminate for an electronic passport, being soft after bookbinding for binding with a cover or the like and having excellent resistance to repeated bending, and additionally being excellent in tearing and tensile strength at a binding portion and excellent in time-related stability for lightfastness during actual use. This hinge sheet can be particularly preferably used for a laser-markable multilayer laminate for electronic passport having a multilayer configuration.

The present invention further aims to provide a laser-markable multilayer laminate for electronic passport having excellent laser-markability and high contrast between the original surface color and the printed portions and enabling clear letters, symbols and images, being excellent in thermal adhesiveness in a lamination step of multilayer sheets, and further having improved transparency in terms of the whole beam transmittance, having a sheet conveyance property, releasability from a die after thermal press, thermal resistance, foldability and wear resistance. The present invention further aims to provide an electronic passport using such a multilayer laser-markable multilayer laminate for electronic passport. In particular, they are excellent in inhibiting falsification and forgery thereof.

The present invention further aims to provide a laser-markable multilayer laminate for electronic passport using a laminating film having strength, flexibility, and transparency at a central portion of the laser-markable multilayer laminate for electronic passport in order to be bound with a cover or a back cover of an electronic passport by a simple manufacturing step such as machine sewing when the electronic passport is manufactured using the above-stated laser-markable multilayer laminate for electronic passport, and to provide a manufacturing method of an electronic passport using the laser-markable multilayer laminate for electronic passport.

The present invention provides the following composite hinge sheet for laser-markable multilayer laminate for electronic passport, laser-markable multilayer laminate for electronic passport and an electronic passport.

[1] A composite hinge sheet for a laser-markable multilayer laminate for electronic passport as defined in claim 1.

[2] The composite hinge sheet for a laser-markable multilayer laminate for electronic passport according to [1], wherein the woven-fabric like sheet has a thickness of 60 $\mu$m or greater and 200 $\mu$m or less, a fiber diameter of 40 to 100 $\mu$m, and an opening ratio of 50% or greater and less than 80%.

[3] The composite hinge sheet for a laser-markable multilayer laminate for electronic passport according to [1] or [2], wherein the composite hinge sheet is obtained by, immediately after melt coextrusion of the thermoplastic resin in a sheet form, a resultant is heat-laminated with the woven-fabric like sheet so that the thermoplastic resin layers are integrated with the woven-fabric like sheet.

[4] The composite hinge sheet for a laser-markable multilayer laminate for electronic passport according to any one of [1] to [3], wherein the thermoplastic resin layers are further uniformly formed on surfaces of both sides of the woven-fabric like sheet.

[5] The composite hinge sheet for a laser-markable multilayer laminate for electronic passport according to any one of [1] to [4], wherein the thermoplastic resin layers have a color difference $\Delta$E after 100 hours of 6 or less in the accelerated weathering test as defined in the description.

[6] A laser-markable multilayer laminate for electronic passport comprising, as a basic constitutional unit, three sheets of a sheet A/a multilayer sheet B/the composite hinge sheet for a laser-markable multilayer laminate for electronic passport according to any one of [1] to [5].

[7] A laser-markable multilayer laminate for electronic passport comprising, as a basic constitutional unit, five sheets of a sheet A/a multilayer sheet B/the composite hinge sheet for a laser-markable multilayer laminate for electronic passport according to any one of [1] to [5]/a multilayer sheet B/a sheet A.

[8] The laser-markable multilayer laminate for electronic passport according to [6] or [7], wherein the sheet A comprises a single-layer sheet including transparent polycarbonate resin composition including a thermoplastic polycarbonate resin and a laser light energy absorbing agent or the sheet A comprises a multilayer sheet 1 including skin layers and a core layer, the skin layers as both outermost layers including a thermoplastic polyester resin and the core layer including a transparent polycarbonate resin composition including a thermoplastic polycarbonate resin and a laser light energy absorbing agent, and the sheet A has an entire thickness of 50 to 200 $\mu$m and a thickness ratio of the core layer of 30 to less than 85% or the sheet A comprises a multilayer sheet 2 including skin layers and a core layer, the skin layers as both outermost layers including a thermoplastic polycarbonate resin and the core layer including a transparent polycarbonate resin composition including a thermoplastic polycarbonate resin and a laser light energy absorbing agent, and the sheet A has an entire thickness of 50 to 200 $\mu$m and a thickness ratio of the core layer of 30 to less than 85%, the multilayer sheet B comprises skin layers and a core layer, the skin layers as both outermost layers including a thermoplastic polyester resin, the core layer of the multilayer sheet B including a transparent thermoplastic resin including a thermoplastic polycarbonate resin, at least one layer of the skin layers and the core layer of the multilayer sheet B including a colorant, the multilayer sheet B has an entire thickness of 100 to 300 $\mu$m, and the core layer has a ratio of thickness thereof to the entire thickness of the multilayer sheet B of 30% or greater and less than 85%, and the composite hinge sheet has a thickness of 80 to 250 $\mu$m.

[9] The laser-markable multilayer laminate for electronic passport according to any one of [6] to [8] comprising a lamination of five sheets including a sheet A/a sheet B/the composite hinge sheet for a laser-markable multilayer laminate for electronic passport including an inlet/a sheet B/a sheet A.

[10] The laser-markable multilayer laminate for electronic passport according to any one of [6] to [8] further including an inlet sheet, and comprising a lamination of six sheets including a sheet A/a multilayer sheet B/the composite hinge sheet for a laser-markable multilayer laminate for electronic passport/the inlet sheet/a multilayer sheet B/a sheet A.

[11] The laser-markable multilayer laminate for electronic passport according to any one of [6] to [10], wherein at least one surface of at least one of the sheet A, the multilayer sheet B and the composite hinge sheet for a laser-markable multilayer laminate for electronic passport is subjected to matting with an average roughness (Ra) of 0.1 to 5 $\mu$m.

[12] An electronic passport, comprising the laser-markable multilayer laminate for electronic passport according to any one of [6] to [11], wherein the composite hinge sheet for a laser-markable multilayer laminate for electronic passport comprises at one end a protruding portion protruding by 5 to 100 mm from the sheet A and the multilayer sheet B, the protruding portion being machine-sewn bound or bonded or being machine-sewn bound and bonded with a cover or a back cover of the electronic passport.

Method for manufacturing the composite hinge sheet of the present invention as defined in claim 13 or 14.

Use of a molten thermoplastic resin as defined in claim 15.

The present invention has an excellent effect of providing a composite hinge sheet for a laser-markable multilayer laminate for electronic passport having excellent thermal adhesiveness, dimension accuracy, flexibility, resistance to repeated bending, strength for tearing, tensile or the like, and time-related stability against deterioration. The composite hinge sheet can be preferably used for an electronic passport and a laser-markable multilayer laminate for electronic passport. The present invention further has an excellent effect of providing an electronic passport and a laser-markable multilayer laminate for electronic passport having excellent laser-markability and high contrast between the original surface color and the printed portions and enabling clear letters, symbols and images, being excellent in thermal adhesiveness in a lamination step of multilayer sheets, and further having improved transparency in terms of the whole beam transmittance, having a sheet conveyance property, releasability from a die after thermal press, thermal resistance, foldability and wear resistance. Particularly, the present invention has excellent in inhibiting falsification and forgery.

As an additional excellent effect of the present invention is able to provide a laser-markable multilayer laminate for electronic passport using a laminate having woven fabric or non-woven fabric of a thermoplastic polyester or a thermoplastic polyamide having strength, flexibility, and transparency at a central portion of the laser-markable multilayer laminate for electronic passport in order to be bound with a cover or a back cover of an electronic passport by a simple manufacturing step such as machine sewing when the electronic passport is manufactured using the above-stated laser-markable multilayer laminate for electronic passport, and to provide a manufacturing method of an electronic passport using the laser-markable multilayer laminate for electronic passport.

Brief Description of the Drawings

Fig. 1 is a cross-sectional view illustrating an embodiment of a laser-markable multilayer laminate for electronic passport of the present invention, schematically illustrating the state where thermoplastic resin layers are integrated with a woven-fabric like sheet.

Fig. 2 is a schematic plan view of a woven-fabric like sheet.

Fig. 3 is a schematic cross-sectional view of the woven-fabric like sheet taken along the line A-A' of Fig. 2.

Fig. 4 is a schematic cross-sectional view illustrating an embodiment of a laser-markable multilayer laminate for electronic passport of the present invention including, as a basic constitutional unit, three sheets of sheet A/multilayer sheet B/composite hinge sheet for laser-markable multilayer laminate for electronic passport.

Fig. 5 is a schematic cross-sectional view illustrating an embodiment of a laser-markable multilayer laminate for electronic passport of the present invention, where the sheet A is a transparent laser marking sheet including a single layer.

Fig. 6 is a schematic cross-sectional view illustrating another embodiment of a laser-markable multilayer laminate for electronic passport of the present invention, where the sheet A is a transparent laser marking sheet including three layers.

Fig. 7 is a schematic cross-sectional view illustrating still another embodiment of a laser-markable multilayer laminate for electronic passport of the present invention, where the sheet A is a transparent laser marking sheet including three layers.

Fig. 8 is a schematic cross-sectional view of a laser-markable multilayer laminate for electronic passport of the present invention provided with a protruding portion.

Fig. 9A is a schematic view illustrating the case where a laser-markable multilayer laminate for electronic passport of the present invention is used in an e-Card type passport.

Fig. 9B is a schematic view illustrating the case where a laser-markable multilayer laminate for electronic passport of the present invention is used in an e-Cover type passport.

Fig. 10A is a side view schematically illustrating the measurement of sheet flexibility.

Fig. 10B is a side view schematically illustrating the measurement of sheet flexibility.

Fig. 11 is a schematic side view showing a tensile test for the measurement of strength at a machine-sewn portion.

Fig. 12A is a schematic view illustrating how to find an opening ratio of openings formed in a woven-fabric like sheet.

Fig. 12B is a partially enlarged and partially omitted schematic view of Fig. 12A.

Mode for Carrying out the Invention

Hereinafter, modes for carrying out a composite hinge sheet for laser-markable multilayer laminate for electronic passport, a laser-markable multilayer laminate for electronic passport and an electronic passport of the present invention will be described specifically. The present invention widely includes a composite hinge sheet for laser-markable multilayer laminate for electronic passport, a laser-markable multilayer laminate for electronic passport and an electronic passport including the invention-specifying matters and is not limited to the following embodiments.

[1] Structure of composite hinge sheet of the present invention:

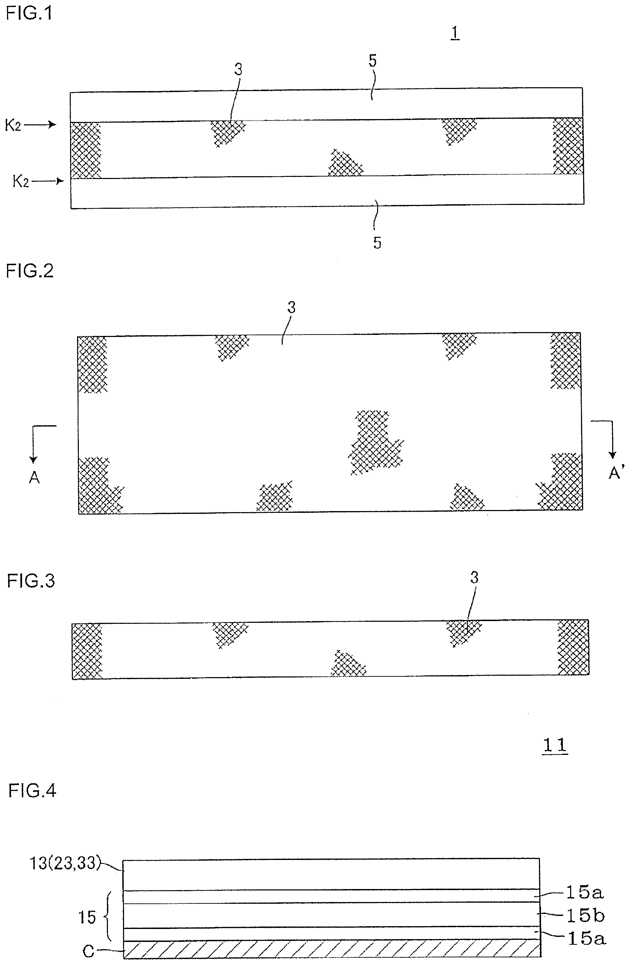

As shown in Fig. 1, a composite hinge sheet for laser-markable multilayer laminate for electronic passport of the present invention is a composite hinge sheet including thermoplastic resin layers 5 on both faces of a woven-fabric like sheet 3 including a large number of openings. The woven-fabric like sheet 3 includes woven fabric or nonwoven fabric including at least one type selected from thermoplastic polyester, thermoplastic polyamide and thermoplastic polypropylene. The thermoplastic resin layers 5 include, as a raw material, a resin having flexibility as surface hardness Shore A of 85 or greater and Shore D less than 70. A part of the thermoplastic resin enters the openings of the woven-fabric like sheet 5 to block all of the openings so that the thermoplastic resin layers 5 are integrated with the woven-fabric like sheet 3.

That is, the composite hinge sheet for laser-markable multilayer laminate for electronic passport of the present invention is used for making it easy to bind a laser-markable multilayer laminate for electronic passport (described later) containing data capable of specifying individuals with an electronic passport via the hinge sheet. The following describes the woven-fabric like sheet and the thermoplastic resin layers and then describes a relationship of them.

[1-1] Woven-fabric like sheet:

The woven-fabric like sheet making up the composite hinge sheet of the present invention preferably includes a large number of openings. Such a large number of openings allow a part of a thermoplastic resin described later to enter the large number of openings easily and block all of the openings, thus making it easy to achieve integration with the woven-fabric like sheet. That is, a part of a thermoplastic resin described later in a melting state is allowed to enter the openings of the woven-fabric like sheet while applying pressure thereto. As a result, the thermoplastic resin entering the openings of the woven-fabric like sheet forms thermoplastic resin layers at both faces of the woven-fabric like sheet via the openings. Like this, a new composite sheet having a flat surface, including the integration of the woven-fabric like sheet and the thermoplastic resin, can be obtained.

The shape of the "openings" is not particularly limited. Examples of the shape include a quadrangle mesh shape, a hexagonal mesh shape and a perforated sheet in a hole shape. The openings may be formed to extend through the woven-fabric like sheet (from one side to the other side) or may be formed to extend via gaps formed in a mesh shape of the woven-fabric like sheet.

The woven-fabric like sheet includes woven fabric (may be called mesh cloth) or nonwoven fabric including at least one type selected from thermoplastic polyester, thermoplastic polyamide and thermoplastic polypropylene. Since the woven-fabric like sheet is used for a hinge part of an electronic passport, it is required to have excellent thermal adhesiveness and processability as well as excellent durability and foldability. Further, the woven-fabric like sheet made of the above-stated materials makes it easy to implement a composite hinge sheet of the present invention. Moreover, the woven-fabric like sheet including woven fabric or nonwoven fabric made of at least one type selected from desired materials and including a large number of openings makes it easy to integrate with a thermoplastic resin in a molten state described later.

More specifically, the woven-fabric like sheet includes a plurality of openings at the sheet surface. For instance, as illustrated in Figs. 2 and 3, openings in a mesh shape are exemplified. Herein, Fig. 2 is a schematic plan view of the woven-fabric like sheet. Fig. 3 is a schematic cross-sectional view taken along the line A-A' of Fig. 2. This, however, is not a limiting example.

The woven-fabric like sheet preferably includes openings with a sufficient large opening ratio. The opening ratio of openings formed in the woven-fabric like sheet is important for making the woven-fabric like sheet and the thermoplastic resin composite (integration). A small opening ratio increases resistance for the thermoplastic resin in a molten state to enter the openings, so that the thermoplastic resin cannot enter all of the openings of the woven-fabric like sheet sufficiently. Therefore the openings cannot be blocked. The resultant will be such that the thermoplastic resin in a sheet form adheres to one side of the woven-fabric like sheet. Alternatively, even when the thermoplastic resin can enter the openings, the thermoplastic resin cannot enter the opposite side, so that all of the openings cannot be blocked. Thus, the composite sheet obtained will have nonuniform faces on which a thick layer of the thermoplastic resin is partially formed and a mesh face of the woven-fabric like sheet is partially left. Such a composite sheet is not preferable because it causes variations in thermal adhesiveness during a heat lamination step and a decrease in the total thickness of a laser-markable multilayer laminate for electronic passport during forming thereof. Additionally, such a composite sheet is not preferable because it tends to cause warpage, or causes fraying of woven fabric from an edge of the composite sheet during a cutting step, exfoliation between the thermoplastic resin layer and the woven fabric or the like.

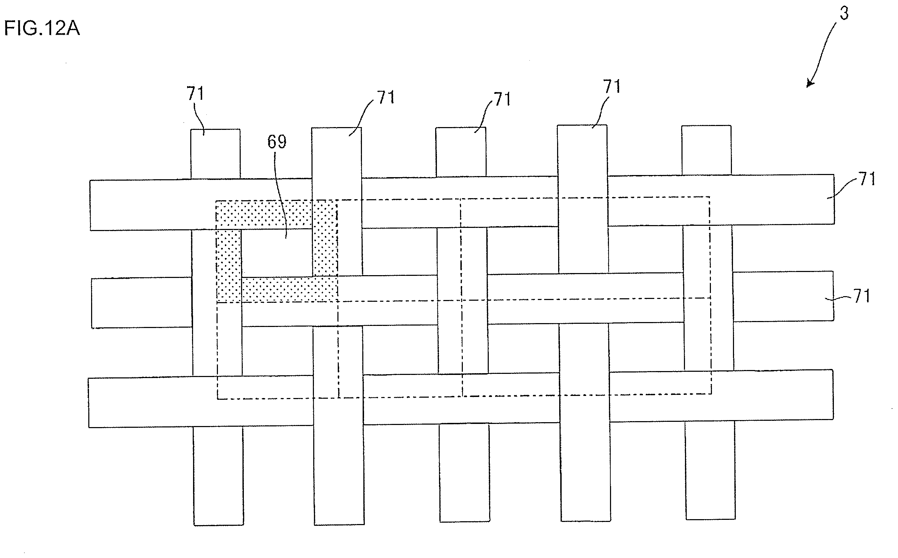

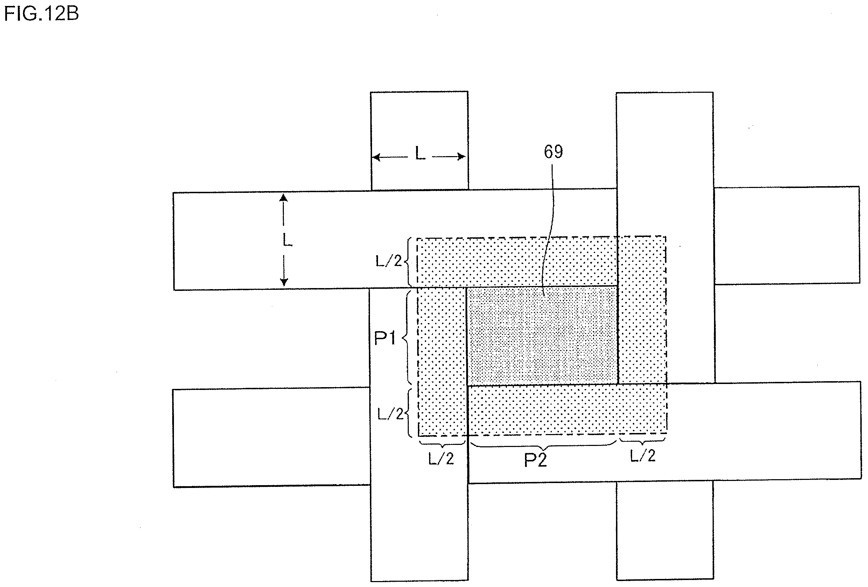

As illustrated in Fig. 12A, in the case of the woven-fabric like sheet 3 including openings 69 continuously formed, each surrounded by fibers 71, the opening ratio thereof will be the ratio of a rectangle surrounded by the thick line of Fig. 12B to a rectangle surrounded by the broken line of Fig. 12B. More specifically, the opening ration can be found by the following expression (1) where the length of a vertical side of the opening 69 is P1, the length of a horizontal side of the opening 69 is P2 and the diameter (fiber diameter) of fiber disposed around the opening 69 is L as illustrated in Fig. 12B:

$$\text{Opening ratio (\%) = P1} \times \text{P2 / (L/2+P1+L/2)} \times$$
$$\text{(L/2+P2+L/2)} \times \text{100 (Expression 1).}$$

"L/2" in this Expression 1 indicates the length to a center of a fiber, i.e., half the diameter of the fiber. As illustrated in Fig. 12B, the opening ratio can be found by finding the ratio of the area of the opening 69 with reference to the area surrounded by the broken line.

Fig. 12A is a schematic plan view of a woven-fabric like sheet. Fig. 12B is a partially enlarged and partially omitted schematic view of Fig. 12A, illustrating an overlapping portion of fibers.

The thus formed openings allow the woven-fabric like sheet to be integrated with a thermoplastic resin (a thermoplastic resin layer or a thermoplastic resin sheet) in advance. Therefore, even after a heat treatment for integration of sheet A/multilayer sheet B, described later, a hinge sheet will not generate deformation in thickness. That is, when a hinge sheet is configured as a woven-fabric like sheet, thickness deformation may occur during integration with so-called inlay and overlay by heat pressing process. As a result, variations in thickness are generated, which often poses a problem for the manufacturing of a passport having strict specifications as a forming product. In the present embodiment, however, since a product with a desired thickness can be formed, such a problem can be solved.

[1-2] Thermoplastic resin layer:

A thermoplastic resin layer making up a composite hinge sheet of the present invention includes, as a raw material, a thermoplastic resin having flexibility as surface hardness Shore A of 85 or greater and Shore D less than 70. Such a thermoplastic resin allows a composite sheet as integration with a woven-fabric like sheet to have flexibility and flexibility at a low temperature. Further, such a thermoplastic resin can secure thermal adhesiveness with a multilayer sheet B during a heat press procedure when forming a laser-markable multilayer laminate for electronic passport. These thermoplastic resin layers are formed on both faces of a woven-fabric like sheet by filling openings of the woven-fabric like sheet with a molten thermoplastic resin such as thermoplastic elastomer to block the openings.

Examples of such a resin having flexibility as surface hardness Shore A of 85 or greater and Shore D less than 70 include thermoplastic polyurethane elastomer (TPU) and hydrogenated styrene-based elastomer (SEPS).

When the thermoplastic resin layers are formed, inorganic filler, organic fillers, other thermoplastic resins or the like may be blended thereto within a range not impairing the functions. A lubricant, a stabilizer, a light stabilizer, an antioxidant, a UV absorbing agent, a colorant such as a pigment and a dye further may be blended, for example. More specifically, examples of the inorganic fillers include isinglass, mica, micro-mica, silica and calcium carbonate. Examples of organic fillers include organic fibers such as polyester fibers, PPS fibers and polyamide fibers. Examples of the other thermoplastic resins include acrylonitrile-styrene copolymer resin (AS resin), polypropylene resin, ABS resin, acrylic resin and polycarbonate resin.

More specifically, for the purpose of improving cutting workability and thermal resistance, a small amount of AS resin, polypropylene resin, ABS resin, acrylic resin, polycarbonate resin or the like may be blended. For the same purpose, isinglass, mica, micro-mica or silica may be blended as inorganic filler. Further, for the purpose of coloring, a colorant such as a pigment and a dye may be blended. For the purpose of improving stability during forming and in use, a lubricant, a stabilizer, a light stabilizer, an antioxidant, a UV absorbing agent and the like may be blended.

[1-3] Composite hinge sheet:

As described above, a composite hinge sheet of the present embodiment includes a woven-fabric like sheet and thermoplastic resin layers. That is, in the composite hinge sheet of the present embodiment, a thermoplastic resin in a molten state enters the openings of the woven-fabric like sheet as stated above for integration, whereby a composite sheet with both of the properties of them can be formed. In other words, a new composite sheet can be obtained, including both of flexibility of the thermoplastic resin such as thermoplastic elastomer and strength, stiffness and thermal resistance of the woven-fabric like sheet.

This composite hinge sheet is a sheet having a very important role to bind a sheet A (described later) where information such as images and letters is written by laser marking, a sheet B (described later) where information such as images and letters is printed and further a so-called inlet sheet including various information stored in a storage medium such as an IC chip, with a cover of a passport and other visa sheets integrally and firmly. To this end, the composite sheet has to have thermal adhesiveness enabling firm binding with the sheet B, appropriate flexibility and thermal resistance during thermal fusion bonding. Additionally, when this composite sheet is bound by a sewing machine with a cover or the like of (a passport), for example, the sheet has to have excellent tear strength and tensile strength at the machine-sewn portion, light stability and thermal resistance at this machine-sewn portion and further resistance to repeated folding i.e., an excellent hinge property. Therefore, the aforementioned materials meeting these demands are preferably used for the composite sheet.

The composite hinge sheet is preferably configured so that a thermoplastic resin in a molten state enters openings of a woven-fabric like sheet to block the openings, while forming thermoplastic resin layers on both faces of the woven-fabric like sheet where the woven-fabric like sheet and the thermoplastic resin are integrated harmoniously. Such a configuration can achieve a so-called thermoplastic composite sheet that is reinforced by the woven-fabric like sheet. Such a configuration further can achieve a new thermoplastic composite sheet having both of the strength, stiffness and thermal resistance of the woven-fabric like sheet and the flexibility, low-temperature properties and thermoplastic properties of the thermoplastic resin. Since this composite sheet has excellent thermal adhesiveness with the multilayer sheet B, when this composite hinge sheet is used as a hinge sheet for a laser-markable multilayer laminate for electronic passport described later, then sufficient interlayer peeling strength of multilayer sheet B/composite hinge sheet/multilayer sheet B can be obtained. Further, when a cover of a passport or the like is machine-sewn via the composite hinge sheet, even when the passport is repeatedly folded at the machine-sewn portion, the passport can have a hinge property resistant to such repeatedly folding. The passport further has excellent strength resistant to breakage at its machine-sewn portion. Moreover, the passport has a hinge property at a low temperature that can be resistant to usage in low-temperature areas in the world, both domestic and overseas. Further, the passport can have excellent hinge properties and strength resistant to breakage at its machine-sewn portion at high-temperature areas. Additionally, since the passport has excellent time-related stability against deterioration even over long time use such as 10 years, the passport can have a property resistant to long time use in every area.

Herein, the composite sheet is preferably manufactured by, immediately after melt coextrusion of the thermoplastic resin in a sheet form, conducting heat-laminate with the woven-fabric like sheet so that the thermoplastic resin layers are integrated with the woven-fabric like sheet. As a specific example, in the case of thermoplastic polyurethane elastomer, melt coextrusion is preferably conducted at temperatures of 170 to 240°C.

There is no particular limitation on the shape, the length, the size and the like of the composite hinge sheet as long as it has a shape, a size and the like making it easy to bind the laser-markable multilayer laminate for electronic passport, and they can be suitably selected as needed.

Herein, even when the composite hinge sheet is used for a passport as described later, the composite hinge sheet is preferably formed in advance, and then such formed composite hinge sheet is used to perform the attachment procedure such as jointing to a passport main body. As compared with the case where sheets making up the laser-markable multilayer laminate for electronic passport are laminated and heated, while forming the composite hinge sheet, a method of performing the attachment procedure such as jointing using the composite hinge sheet formed in advance has an advantage of not decreasing the total thickness of the laser-markable multilayer laminate for electronic passport.

For instance, when a woven-fabric like sheet only is used as a hinge sheet for heat pressing procedure, heat lamination is performed at a relatively large pressure. As a result, a part of a sheet adjacent to the woven-fabric like sheet may enter the openings of the woven-fabric like sheet. Such entering decreases the total thickness of the laser-markable multilayer laminate for electronic passport. Therefore, a variation in pressure applied during heat lamination causes a large variation in total thickness of the laser-markable multilayer laminate for electronic passport. Further, the above-described woven-fabric like sheet only is used as a hinge sheet, shortage of pressure applied during heat lamination leads to a state where the woven-fabric like sheet and the sheet adjacent thereto are brought into point contact with each other (at their interface). Therefore, peeling strength at the interface between this woven-fabric like sheet and the adjacent sheet greatly decreases.

Further, when the woven-fabric like sheet only is used as a hinge sheet as stated above, thermal fusion bonding of this hinge sheet with the adjacent sheet is achieved by heating the thermoplastic resins as the mutual sheet materials for softening. Therefore, the thermoplastic resins have to be softened at the thermal fusion bonding temperature. In other words, when a thermoplastic resin sheet including a thermoplastic resin only is used as the hinge sheet, the thermoplastic resin sheet will stick out from the laser-markable multilayer laminate for electronic passport by pressure applied during heat lamination. Then, "shrinkage" will occur at this sticking-out portion (binding portion) from the sheet other than this hinge sheet. Therefore, a problem will arise for machine-sewing binding. Further, sticking-out occurs at a portion other than this binding portion, and therefore a problem arises in dimension accuracy. In this way, sticking-out occurs, so that the total thickness of the laser-markable multilayer laminate for electronic passport tends to decrease.

On the other hand, in the case of a composite hinge sheet used as in the present embodiment, when the thermoplastic resin is softened during heat lamination process to be thermal fusion bonded with the adjacent multilayer sheet B, compatibility between the thermoplastic resin and the skin layer resin of the multilayer sheet B becomes good. As a result, thermal fusion bonding can be performed at a relatively low pressure. Further, since the composite-integrated woven-fabric like sheet is not softened, "sticking-out of resin" as stated above does not occur. Therefore, the total thickness of the laser-markable multilayer laminate for electronic passport does not decrease at all.

Herein, the thickness of the woven-fabric like sheet is preferably 60 μm or greater and 200 μm or less. A thickness of the woven-fabric like sheet less than 60 μm makes the occupancy of the woven-fabric like sheet to the overall volume of the composite sheet too small, thus causing the shortage of strength at a machine-sewn portion of the composite sheet, stiffness and thermal resistance. A thickness of the woven-fabric like sheet exceeding 200 μm makes the thickness ratio of the composite sheet larger because the total thickness of a laser-markable multilayer laminate for electronic passport is specified. In this case, when the sheet A and the multilayer sheet B are laminated as the laser-markable multilayer laminate for electronic passport as described later, the sheet A and the multilayer sheet B have to be made thin. Decrease in the thickness of the sheet A (thinner) causes degradation in laser color reproduction, and decrease in the thickness of the multilayer sheet B (thinner) causes a problem in sheet conveyance during printing process, and causes a problem of the shortage in opacifying property, which are not preferable.

The opening ratio of the woven-fabric like sheet is preferably 50% or greater and less than 80%. An opening ratio less than 50% causes a failure in the thermoplastic resin entering the openings of the woven-fabric like sheet, and a part of the openings are not blocked. Even when the resin enters all of the openings, the resin cannot reach sufficiently to the opposite side of the entering side (to the face on the opposite side of the entering face). Therefore, a composite hinge sheet in which woven fabric or non-woven fabric of PET and TPU are integrated cannot be obtained, which is not preferable. Further, cutting during cutting process becomes difficult or the composite hinge sheet curls during heat lamination process, which is also not preferable. When the opening ratio exceeds 80%, an industrial product as the woven-fabric like sheet cannot exist. Probably a problem arises in a weaving step because of too wide openings, or even when woven fabric can be obtained, the number of intersection points of the woven fabric is too small, so that the intersection points of the woven fabric are misaligned, i.e., so-called "the grain of the woven fabric is misaligned", and therefore presumably the woven fabric cannot be an industrial product.

The diameter of fibers is preferably about 40 to 100 μm. A fiber diameter less than 40 μm causes poor effect of improving strength and thermal resistance by woven fabric or non-woven fabric of PET. A fiber diameter exceeding 100 μm accordingly leads to the thickness of the woven fabric or non-woven fabric of PET exceeding 200 μm, which is not preferable.

More preferably, the thickness of the woven-fabric like sheet is 60 μm or greater and 200 μm or less, the fiber diameter is 40 to 100 μm and the opening ratio is 50% or greater and less than 80%, and a part of the thermoplastic resin in a molten state enters the openings of the woven-fabric like sheet so as to block the openings so that a part of an interface between the thermoplastic resin layers and the woven-fabric like sheet are integrated harmoniously. Such a desired thickness, desired fiber diameter and desired opening ratio as stated above, which are combined mutually, allow a composite hinge sheet to be formed securely having excellent thermal adhesiveness, dimension accuracy, flexibility, repeated folding resistance, strength for tear, tensile or the like and time-related stability against deterioration, and therefore are preferable.

Herein, the description "a part of the thermoplastic resin in a molten state enters the openings of the woven-fabric like sheet so as to block the openings" refers to the state where a thermoplastic resin in a molten state partly enters a large number of openings formed in the woven-fabric like sheet so as to block all of the openings without leaving the openings.

Further, it is preferable in the composite hinge sheet for laser-markable multilayer laminate for electronic passport that the thermoplastic resin layers are uniformly formed on both surfaces of the woven-fabric like sheet. For instance, when the composite hinge sheet includes woven fabric or non-woven fabric made of PET, for example, at a surface thereof, the surface becomes uneven. In this case, unevenness of the composite hinge sheet surface will be transferred to the sheet B during thermal fusion bonding process of the composite hinge sheet and the sheet B, and accordingly the unevenness will be unfortunately formed at an outermost surface of the heated laminate. This might impair the viewability of images and letters that are laser-marked personal images and text information on a laminate data page for electronic passport, which is not preferable. Moreover, since thermal adhesiveness between a material of a thread such as PET, polyamide or polypropylene and a skin layer of the sheet B is not sufficient, peeling strength of sheet B/sheet C is not sufficient, which is not preferable.

For instance, as illustrated in Fig. 1, an exemplified composite hinge sheet is obtained by filling openings of the woven-fabric like sheet with thermoplastic resin in a molten state, and is configured as a composite body including thermoplastic resin layer/woven-fabric like sheet/thermoplastic resin layer. That is, the composite hinge sheet of the present embodiment is a composite hinge sheet obtained by filling openings of a so-called PET woven fabric with thermoplastic elastomer. Further, the above-described thermoplastic resin layers are formed as so-called polymer layers on both faces of the composite hinge sheet. In this composite hinge sheet, since a part of the thermoplastic resin in a molten state enters the openings of the woven-fabric like sheet so as to block the openings, a part of the interfaces (K1, K2) are harmoniously integrated as illustrated in Fig. 1.

Note that, as described later, when the composite hinge sheet is used in the laser-markable multilayer laminate for electronic passport, an electronic passport or the like, the thickness of the composite hinge sheet is 80 to 250 μm, more preferably 100 to 200 μm.

That is, since the minimum thickness of PET woven fabric or non-woven fabric industrially manufactured is 48 μm, the composite hinge sheet with a thickness less than 50 μm cannot be formed, and the minimum thickness of the hinge sheet that can be formed is 80 μm. Further, a thinner hinge sheet tends to generate shrinkage during handling or during cutting or heat lamination process. Therefore, the hinge sheet is preferably formed at a thickness of 100 μm or greater.

On the other hand, a thickness of the hinge sheet of 300 μm or less and a total thickness of a data page of around 500 μm, or less than 500 μm are preferable because a passport obtained can be handled easily because of a small thickness. More specifically, a laminate for electronic passport includes (1) so-called "Data-Page" in which personal images and text information only are laser-marked and (2) a so-called "e-Card", into which an IC-CHIP and an ANTENNA are inserted, including personal images and text information laser-marked at an outermost layer. While this "e-Card" (2) has a specified total thickness of 800 μm, the "Data-Page" (1) does not have any specified total thickness, and a small total thickness is considered preferable for handling. On the other hand, in the case of a thicker hinge sheet, the sheet A and the sheet B has to be made thinner. However, a too thin sheet A makes the printing density of letters laser-marked therein light, or a too thin sheet B causes a failure in good printing by a printer when fixed information is printed on the sheet B by the printer. Therefore, presumably the lower limits of thickness for the sheet A and the sheet B are about 70 μm and about 110 μm, respectively. Then, the thickness of the sheet A becomes about 140 μm at an upper and a lower part of the laminate for electronic passport, and the thickness of the sheet B becomes about 220 μm at an upper and a lower part of the laminate for electronic passport, and therefore the total thickness of the four sheets becomes 360 μm. At this time, in the case of a hinge sheet with a thickness of 300 μm, the total thickness becomes 660 μm. On the other hand, in the case of a hinge sheet with a thickness of 140 μm, the total thickness becomes 500 μm. When calculation is performed with consideration reciting the total thickness for the sheet A of 50 to 200 μm and for the sheet B of 100 to 300 μm, other four sheets other than a hinge sheet, i.e., over sheet/inlay sheet/(hinge sheet)/inlay sheet/over sheet will be the thickness of 50 μm/100 μm/(300 μm)/100 μm/50 μm that is 600 μm in total. In the case of a hinge sheet with a thickness of 250 μm, their thicknesses will be 50 μm/100 μm/(250 μm)/100 μm/50 μm that is 550 μm in total. In general, since the thickness of the "Date-Page" is preferably about 400 to 600 μm, the thickness of the hinge sheet is preferably 300 μm or less. More preferably, the thickness of the composite hinge sheet is 80 to 250 μm, and further preferably, the thickness of the composite hinge sheet is 80 to 240 μm.

Note here that several types of plastic sheets for electronic passport on which personal information is described are currently available, including a data page, an e-Card, an e-Cover and the like. Among them, the e-Card only has a specified thickness of about 800 μm, which may be varied from country to country and include many imponderables. However, they are preferably as thin as possible, and therefore a hinge sheet as thin as possible is desired as well. In this respect, however, woven fabric or non-woven fabric of PET with a thickness less than 48 μm is not manufactured industrially because of its strength, productivity and the like. When a composite hinge sheet is formed using woven fabric or non-woven fabric of PET with a thickness of 48 μm, the total thickness will be about 80 μm industrially. Further, with consideration given to the workability, cutting processablity, and shrinkage generated during heat lamination process, for example, the thickness of 100 μm is required.

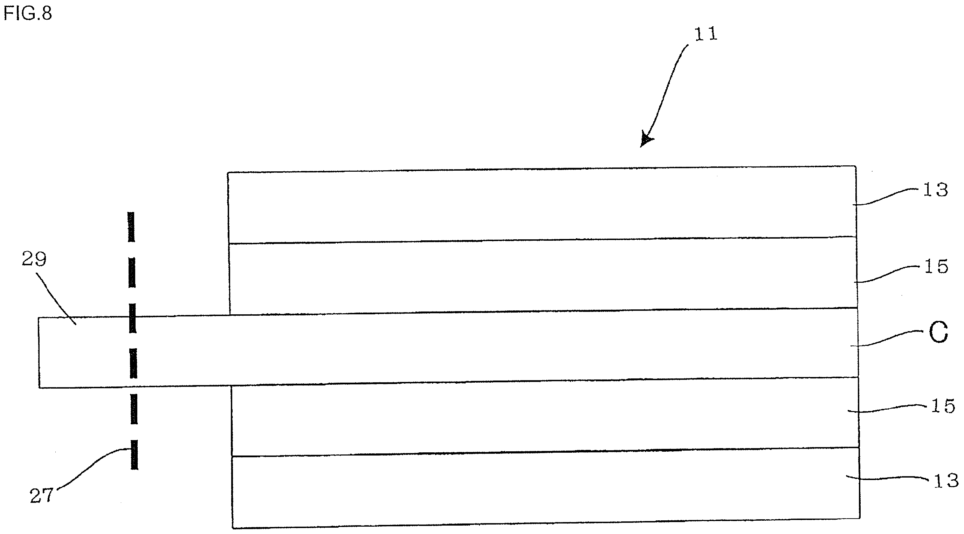

It is preferable that an end of the composite hinge sheet has a protruding portion protruding by 5 to 100 mm from the sheet A and the multilayer sheet B (see a protruding portion indicated with reference numeral 29 in Fig. 8). The protruding portion of the composite hinge sheet is formed for the ease of binding with an electronic passport. That is, the protruding portion extended longer than the sheet A and the multilayer sheet B at one end of the composite hinge sheet in the longitudinal direction allows the end of the composite hinge sheet to be incorporated with an electronic passport by machine sewing or bonding or by machine sewing and bonding. Reference numeral 27 in Fig. 8 denotes a machine-sewn portion.

The length of the protruding portion formed in the composite hinge sheet is preferably determined according to how to perform machine-sewing or bonding workability or how to perform machine-sewing and bonding workability. Further, the length of the protruding portion is preferably determined according to the strength of the machine sewing portion and bonding strength. When the composite hinge sheet is used in the laser-markable multilayer laminate for electronic passport, an electronic passport or the like as described later, the protruding portion preferably has a dimension of 5 to 100 mm, more preferably 5 to 50 mm and further preferably 5 to 20 mm.

The thus formed protruding portion makes it easier (using this protruding portion) to incorporate with an electronic passport by machine sewing or bonding or by machine sewing and bonding.

The protruding portion provided in the composite hinge sheet is preferable because an electronic passport can be easily formed where a five-layer laminate sheet including sheet A/multilayer sheet B/composite hinge sheet/multilayer sheet B/sheet A or a five-layer laminate sheet including sheet A/multilayer sheet B/inlet sheet E/multilayer sheet B/sheet A is machine-sewn or bonded or is machine-sewn and bonded with a cover or a back cover of the electronic passport.

The thermoplastic resin layers in the composite hinge sheet for laser-markable multilayer laminate for electronic passport include at least one type selected from the above-described thermoplastic elastomer or an amorphous polyester resin with a color difference ΔE after 100 hours of 6 or less in a QUV accelerated weathering test. This is because they can keep time-related stability against deterioration. The QUV accelerated weathering test is for evaluating durability and light (weather) fastness of various materials and products. Examples of the QUV accelerated weathering test include a xenon weather test, a sunshine weather test and a UV-ray fluorescent lamp test. In the QUV accelerated weathering test of the present invention, QUV accelerated weather fastness is evaluated by a UV-ray fluorescent lamp test using a tester produced by Q-Panel company. More specifically, in the UV-ray fluorescent lamp test, an acceleration test by light and condensation is conducted for a predetermined time for evaluation, including alternate cycle of UV-rays irradiation at a test sample temperature of 50 to 80°C and a condensation test at an in-darkness test sample temperature 40 to 60°C. Evaluation is made to observe how a test sample (sheet) deteriorates based on a difference in color of the test sample before and after the test. In general, once deterioration of plastic is started, the plastic turns yellow in most cases. Then, an increase in color difference means starting of yellowing greatly in the plastic. In general, a change can be recognized with the color difference ΔE of about 0.5 to 0.7, and the color difference as large as ΔE of 6 means that yellowing starts considerably. Therefore, the color difference ΔE is set at 6 or less. The color difference ΔE exceeding 6 makes the appearance bad and such a sheet gives unnatural appearance as a product, and so cannot be used practically.

In parallel with such a QUV accelerated weathering test, mechanical properties such as tensile break strength and stretch at break may be evaluated. More specifically, before and after the QUV accelerated weathering test, tests for tensile break strength and stretch at break may be performed so as to evaluate a holding ratio and durability of the test sample (sheet). As for these mechanical properties, the lower limit of the holding ratio presumably is at least about 60%. Less than 60% is not preferable for use as a product because the performance decreases to about half that of the initial one.

[2] Structure of laser-markable multilayer laminate for electronic passport of the present invention:

As illustrated in Fig. 4, a laser-markable multilayer laminate for electronic passport of the present invention preferably includes the composite hinge sheet C described so far, and is configured as a laser-markable multilayer laminate for electronic passport 11 including, as a basic constitutional unit, three sheets of sheet A/multilayer sheet B/composite hinge sheet for laser-markable multilayer laminate for electronic passport. That is, it includes the lamination structure of sheet A/multilayer sheet B described later, whereby at least two-layered lamination structure including a transparent laser-markable sheet and a colored sheet (including white sheet) is obtained. Such a basic constitutional unit including three sheets can further improve a contrast ratio in laser marking as compared with the lamination including a transparent laser-markable layer and a white layer, and can improve clarity of images or the like.

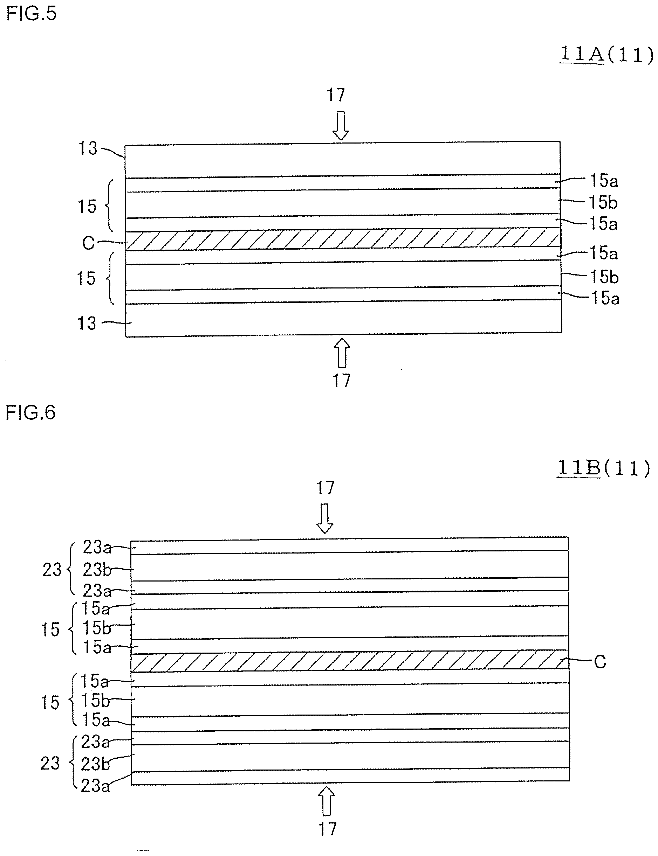

As illustrated in Fig. 5, Fig. 6 and Fig. 7, the laser-markable multilayer laminate for electronic passport of the present invention preferably includes the composite hinge sheet C described so far, and is configured as a laser-markable multilayer laminate for electronic passport 11A, 11B or 11C including, as a basic constitutional unit, five sheets of sheet A/multilayer sheet B/composite hinge sheet for laser-markable multilayer laminate for electronic passport/multilayer sheet B/sheet A. This configuration allows fixed information to be printed on one face (sheet A side) of the multilayer sheet B prior to the lamination of five sheets, and personal information to be laser marked in the sheet A. Accordingly, fixed information and personal information, which may be different or the same, can be printed or drawn by laser marking on both sides of a so-called "Data-Page".

More specifically, the laser-markable multilayer laminate for electronic passport is configured as follows. The sheet A is configured as a single layer sheet including a transparent polycarbonate resin composition including a thermoplastic polycarbonate resin and a laser light energy absorbing agent. Alternatively, the sheet A is configured as a multilayer sheet 1 including skin layers and a core layer. The skin layers as both outermost layers include a thermoplastic polyester resin and the core layer includes a transparent polycarbonate resin composition including a thermoplastic polycarbonate resin and a laser light energy absorbing agent. The sheet A has an entire thickness of 50 to 200 μm and the ratio of the thickness of the core layer is 30 to less than 85%. Alternatively, the sheet A is configured as a multilayer sheet 2 including skin layers and a core layer. The skin layers as both outermost layers include a thermoplastic polycarbonate resin and the core layer includes a transparent polycarbonate resin composition including a thermoplastic polycarbonate resin and a laser light energy absorbing agent. The sheet A has an entire thickness of 50 to 200 μm and the ratio of the thickness of the core layer is 30 to less than 85%. The multilayer sheet B is configured as a colored multilayer sheet including skin layers and a core layer. The skin layers at both outermost layers includes a thermoplastic polyester resin, and the core layer of the multilayer sheet B includes a transparent thermoplastic resin including a thermoplastic polycarbonate resin. At least one layer of the skin layers and the core layer of the multilayer sheet B includes a colorant. The multilayer sheet B has an entire thickness of 100 to 300 $\mu$m, and the core layer has a ratio of thickness thereof to the entire thickness of 30% or greater and less than 85%. The composite hinge sheet has a thickness of 80 to 250 $\mu$m.

That is, as illustrated in Fig. 4, the laser-markable multilayer laminate for electronic passport 11 uses the composite hinge sheet C described so far, and includes at least three sheets of sheet A/multilayer sheet B/composite hinge sheet for laser-markable multilayer laminate for electronic passport. The sheet A (reference numeral 13) is configured as a single layer sheet including a transparent polycarbonate resin composition including a thermoplastic polycarbonate resin and a laser light energy absorbing agent, and the multilayer sheet B (reference numeral 15) is configured as a color multilayer sheet including skin layers 15a and a core layer 15b. The skin layers 15a at both outermost layers include a thermoplastic polyester resin, and the core layer 15b of the multilayer sheet B includes a transparent thermoplastic resin including a thermoplastic polycarbonate resin. At least one layer of the skin layers 15a and the core layer 15b of the multilayer sheet B includes a colorant. The multilayer sheet B (reference numeral 15) has an entire thickness of 100 to 300 $\mu$m, and the core layer has a ratio of thickness thereof to the entire thickness of the multilayer sheet B (reference numeral 15) of 30% or greater and less than 85%. The composite hinge sheet has a thickness of 80 to 250 $\mu$m. Alternatively, as illustrated in Fig. 5, the laser-markable multilayer laminate for electronic passport 11A includes the composite hinge sheet C described so far, and includes five sheets of sheet A/multilayer sheet B/composite hinge sheet for laser-markable multilayer laminate for electronic passport/multilayer sheet B/sheet A. The sheet A (reference numeral 13) is configured as a single layer sheet including a transparent polycarbonate resin composition including a thermoplastic polycarbonate resin and a laser light energy absorbing agent. The multilayer sheet B (reference numeral 15) is configured as a colored multilayer sheet including skin layers 15a and a core layer 15b. The skin layers 15a at both outermost layers include a thermoplastic polyester resin, and the core layer 15b of the multilayer sheet B includes a transparent thermoplastic resin including a thermoplastic polycarbonate resin. At least one layer of the skin layers 15a and the core layer 15b of the multilayer sheet B includes a colorant. The multilayer sheet B (reference numeral 15) has an entire thickness of 100 to 300 $\mu$m, and the core layer has a ratio of thickness thereof to the entire thickness of the multilayer sheet B (reference numeral 15) of 30% or greater and less than 85%. The composite hinge sheet C has a thickness of 80 to 250 $\mu$m.

Alternatively, as illustrated in Fig. 4, the laser-markable multilayer laminate for electronic passport 11 uses the composite hinge sheet C described so far, and includes at least three sheets of sheet A/multilayer sheet B/composite hinge sheet for laser-markable multilayer laminate for electronic passport. The sheet A (reference numeral 23) is configured as a multilayer sheet 1 including skin layers and a core layer. The skin layers as both outermost layers include a thermoplastic polyester resin and the core layer includes a transparent polycarbonate resin composition including a thermoplastic polycarbonate resin and a laser light energy absorbing agent. The sheet A has an entire thickness of 50 to 200 $\mu$m and the ratio of the thickness of the core layer is 30 to less than 85%. The multilayer sheet B is configured as a colored multilayer sheet including skin layer and a core layer. The skin layers as both outermost layers include thermoplastic polyester resin, and the core layer of the multilayer sheet B includes a transparent thermoplastic resin including a thermoplastic polycarbonate resin. At least one layer of the skin layers and the core layer of the multilayer sheet B includes a colorant. The multilayer sheet B has an entire thickness of 100 to 300 $\mu$m, and the core layer has a ratio of thickness thereof to the entire thickness of the multilayer sheet B of 30% or greater and less than 85%. The composite hinge sheet has a thickness of 80 to 250 $\mu$m. Alternatively, as illustrated in Fig. 6, the laser-markable multilayer laminate for electronic passport 11B uses the composite hinge sheet C described so far, and includes five sheets of sheet A/multilayer sheet B/composite hinge sheet for laser-markable multilayer laminate for electronic passport/multilayer sheet B/sheet A. The sheet A is configured as a multilayer sheet 1 including skin layers and a core layer. The skin layers as both outermost layers include a thermoplastic polyester resin and the core layer includes a transparent polycarbonate resin composition including a thermoplastic polycarbonate resin and a laser light energy absorbing agent. The sheet A has an entire thickness of 50 to 200 $\mu$m and the ratio of the thickness of the core layer is 30 to less than 85%. The multilayer sheet B is configured as a colored multilayer sheet including skin layers and a core layer. The skin layers as both outermost layers of the multilayer sheet B includes thermoplastic polyester resin, and the core layer of the multilayer sheet B includes a transparent thermoplastic resin including a thermoplastic polycarbonate resin. At least one layer of the skin layers and the core layer of the multilayer sheet B includes a colorant. The multilayer sheet B has an entire thickness of 100 to 300 $\mu$m, and the core layer has a ratio of thickness thereof to the entire thickness of the multilayer sheet B of 30% or greater and less than 85%. The composite hinge sheet has a thickness of 80 to 250 $\mu$m.

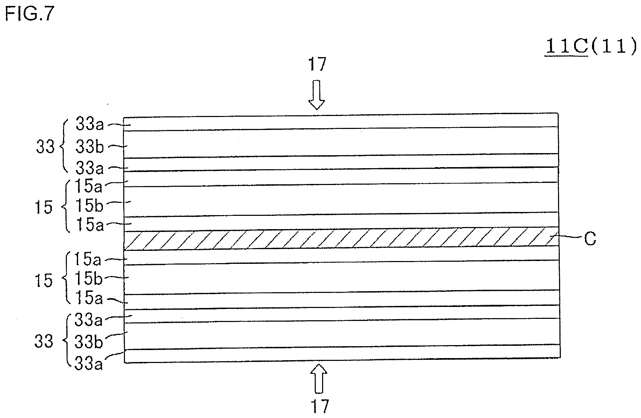

Alternatively, as illustrated in Fig. 4, the laser-markable multilayer laminate for electronic passport 11 uses the composite hinge sheet C described so far, and includes at least three sheets of sheet A/multilayer sheet B/composite hinge sheet for laser-markable multilayer laminate for electronic passport. The sheet A (reference numeral 33) is configured as a multilayer sheet 2 including skin layers and a core layer. The skin layers as both outermost layers include a thermoplastic polycarbonate resin and the core layer includes a transparent polycarbonate resin composition including a thermoplastic polycarbonate resin and a laser light energy absorbing agent. The sheet A has an entire thickness of 50 to 200 $\mu$m and the ratio of the thickness of the core layer is 30% to less than 85%. The multilayer sheet B is configured as a colored multilayer sheet including skin layer and a core layer. The skin layers as both outermost layers include thermoplastic polyester resin, and the core layer of the multilayer sheet B includes a transparent thermoplastic resin including a thermoplastic polycarbonate resin. At least one layer of the skin layers and the core layer of the multilayer sheet B includes a colorant. The multilayer sheet B has an entire thickness of 100 to 300 μm, and the core layer has a ratio of thickness thereof to the entire thickness of the multilayer sheet B of 30% or greater and less than 85%. The composite hinge sheet has a thickness of 80 to 250 μm. Alternatively, as illustrated in Fig. 7, the laser-markable multilayer laminate for electronic passport 11C uses the composite hinge sheet C described so far, and includes five sheets of sheet A/multilayer sheet B/composite hinge sheet for laser-markable multilayer laminate for electronic passport/multilayer sheet B/sheet A. The sheet A (reference numeral 33) is configured as a multilayer sheet 2 including skin layers 33a and a core layer 33b. The skin layers as both outermost layers include a thermoplastic polycarbonate resin and the core layer includes a transparent polycarbonate resin composition including a thermoplastic polycarbonate resin and a laser light energy absorbing agent. The sheet A has an entire thickness of 50 to 200 μm and the ratio of the thickness of the core layer is 30% to less than 85%. The multilayer sheet B is configured as a colored multilayer sheet including skin layers and a core layer. The skin layers as both outermost layers of the multilayer sheet B include thermoplastic polyester resin, and the core layer of the multilayer sheet B includes a transparent thermoplastic resin including a thermoplastic polycarbonate resin. At least one layer of the skin layers and the core layer of the multilayer sheet B includes a colorant. The multilayer sheet B has an entire thickness of 100 to 300 μm, and the core layer has a ratio of thickness thereof to the entire thickness of the multilayer sheet B of 30% or greater and less than 85%. The composite hinge sheet has a thickness of 80 to 250 μm.

The following describes each structure of the laser-markable multilayer laminates for electronic passport 11 (11A, 11B and 11C).

Herein, the descriptions such as "including three sheets (including the lamination of five sheets)" and the like refer to the state after the lamination of three sheets (five sheets), which does not limit the lamination method therefor. The same goes for the description of "including six sheets". The descriptions of "multilayer sheet" and "a sheet including the lamination of three layers" also refer to the state after the lamination of a plurality of layers (or three layers), which do not limit the lamination method therefor. The same goes for the following descriptions unless otherwise specified.

[A] Sheet A:

The sheet A of the present invention preferably includes a single layer transparent sheet including a core layer only or includes a transparent sheet including at least a skin layer and a core layer. This sheet A is preferably configured as a transparent laser-markable sheet at which a marking section can be formed by laser irradiation.

[A-1] Structure of Sheet A:

When the sheet A is configured as a sheet in a single layer structure, it is preferably formed by, but not limited to, melt coextrusion.

When the sheet A is configured as a sheet in a single layer structure, the sheet A may be made of a thermoplastic polycarbonate resin (PC). Further, the sheet A may be made of a transparent polycarbonate resin composition including this thermoplastic polycarbonate resin and a laser light energy absorbing agent described later. The sheet A is particularly preferably made of a transparent resin layer or a transparent resin composition including a transparent thermoplastic polycarbonate resin as a main component. This thermoplastic polycarbonate resin preferably used includes, but not limited, a resin with a melt volume rate of 4 to 20. A resin with a melt volume rate less than 4 is useful for the improvement of toughness of a sheet, but has poor forming workability. Therefore, such a resin will cause a trouble in the practical use and is not preferable. A resin with a melt volume rate more than 20 causes poor toughness of a sheet obtained, and is not preferable. The sheet A made of a transparent resin layer including a polycarbonate resin (PC) can suppress a so-called "bulge" due to foaming at a marking section by laser light irradiation. Such a sheet A further can improve wear resistance at a marking section when laser light is applied thereto.

When the sheet A is configured as a sheet in a single layer structure, it is important that such a sheet has high transparency. To this end, as a raw material of the sheet A configured as a single layer sheet, a resin or a filler, for example, which does not impair the transparency of a polycarbonate resin can be used without particular limitation. In order to improve scratch resistance or thermal resistance, a general polycarbonate resin and a special polycarbonate resin is preferably blended or a polycarbonate resin and a polyallylate resin is preferably blended.

More preferably, the sheet A is configured as a sheet in an "at least three-layered" structure including skin layers and a core layer. Herein, the "three-layered sheet" herein refers to "at least three layers", and is not limited to a three-layered sheet. In other words, the description of "three-layered sheet" for the sheet A is for convenience in explanation, and the "three-layered sheet" refers to a "sheet including at least three layers" and does not limit the sheet A to a sheet including "three layers". That is to say, as long as the sheet A includes three or more layers, any sheet including five layers, seven layers or any larger odd-numbered layers is included in the scope of the sheet A.

The description of "three-layered sheet" refers to the state after the lamination of three layers including skin layers and a core layer, which does not limit the lamination method therefor.

When the sheet A is configured as a sheet in an "at least three layered" structure including skin layers and a core layer, the sheet is preferably laminated by, but not limited to, melt coextrusion.

When the sheet A is configured as a sheet in a multilayer structure such as "at least three-layered" structure, it is necessary that the skin layers of the sheet A described later are disposed on outermost sides of the sheet having the multilayer structure on both of the sides of the sheet in such a manner that the core layer is sandwiched between the skin layers. Incidentally, though there is no particular limitation on the thickness of the skin layers of the sheet A, it is more preferable that the skin layers are formed to have a thickness in the predetermined range described later.

Herein, even in the case that the sheet A is configured of the aforementioned "larger odd-numbered layers", when the structure has a too large number of layers, a thickness of each of the skin layers and core layers becomes too small. In such a case, so-called die sticking may occur in the hot press step during lamination. Therefore, the sheet A preferably is a multilayer sheet including five layers, more preferably three layers.

The reason why the sheet A in the present embodiment is configured of odd-numbered layers as described above is because a multilayer sheet of even-numbered layers results in the same configuration as that of a multilayer sheet of odd-numbered layers. For example, a sheet including four layers has a disposition of a skin layer (PETG)/a core layer (PC)/a core layer (PC)/a skin layer (PETG) or a disposition of a skin layer (PC)/a core layer (PC)/a core layer (PC)/a skin layer (PC), which is, after all, the same configuration as that of a transparent laser-markable sheet of odd-numbered layers.

For example, as for a sheet A including three layers (so-called "three-layered sheet") as an example, the layers are disposed as in a skin layer (PETG)/a core layer (PC)/a skin layer (PETG) or in a skin layer (PC)/a core layer (PC)/a skin layer (PC) so that the two skin layers are on both of the outermost sides (one side and the other side) with a core layer as one layer being disposed between the two skin layers in the sheet A as a multilayer sheet. As for a multilayer sheet including five layers as an example, the layers may be disposed as in a skin layer (PETG)/a core layer (PC)/a skin layer (PETG)/a core layer (PC)/a skin layer (PETG) or in a skin layer (PC)/a core layer (PC)/a skin layer (PC)/a core layer (PC)/a skin layer (PC) so that the two skin layers are on both of the outermost sides (one side and the other side) to constitute the sheet A. The sheet A may be formed by disposing alternately skin layers and core layers. Herein, even the configuration of a single layer transparent laser-markable sheet including a core layer only as stated above has sufficient laser color saturation, leading to the effect of the present invention. More preferably, however, the sheet A is formed as a multilayer sheet 1 or a multilayer sheet 2 having a multilayer configuration as stated above. Such a sheet A as a multilayer sheet 2 having a multilayer structure enables laser light irradiation with higher power than in a single layer sheet including a core layer only, and can increase density of a laser marking section. Additionally, such a configuration can suppress a so-called "bulge" due to foaming at a marking section at the core layer, and can maintain the surface smoothness of the core layer. Furthermore, as compared with the case without the skin layer, such a multilayer configuration leads to a synergistic effect of improvement in wear resistance of the marking section because a skin layer is laminated above the marking section at the core layer. Such a sheet A as a multilayer sheet 1 can secure sufficient thermal adhesiveness. As a result, fine adjustment can be made in terms of the sheet conveyance property during lamination process, releasability from a die after thermal press, foldability and transparency.

It is preferable that the entire thickness (total thickness) of the sheet A, whether it is a single layer or a three-layered sheet (multilayer 1 or multilayer 2), be 50 to 200 $\mu$m. An entire thickness of the sheet A less than 50 $\mu$m causes insufficient laser markability, and is not preferable. In the case of a multilayer sheet 1, a problem of so-called die-sticking tends to occur, where a multilayer sheet adheres to a die in thermal fusion bonding during multilayer sheet lamination process. To avoid such a trouble, there is a need to control a thermal fusion bonding temperature, a pressure for pressing during thermal fusion bonding and a time for thermal fusion bonding. Such control, however, is complicated and tends to cause a trouble in the forming process, which is not preferable. An entire thickness of the sheet A exceeding 200 $\mu$m leads to difficulty in actual use as an electronic passport. For instance, when a laser-markable multilayer laminate for electronic passport is formed by laminating such a sheet A with a thickness exceeding 200 $\mu$m and a multilayer sheet B, the entire thickness thereof will exceed the maximum entire thickness of a typical electronic passport. A woven-fabric like sheet with a too small thickness decreases a composite effect of the woven-fabric like sheet (this may be called insert in another expression) because the total thickness of the composite sheet is specified. On the other hand, a woven-fabric like sheet with a too large thickness makes the total thickness of the composite sheet large, so that the thickness will be beyond the specification on the total thickness of the laser-markable multilayer laminate for electronic passport. When a so-called "data page" without an IC chip and an antenna is used in an electronic passport (or a laminate for electronic passport), a thickness as small as possible is preferable for handling of a passport. Then, with consideration given to the minimum thickness of other sheets except for the hinge sheet also, the thickness of the electronic passport (or laminate for electronic passport) will become about 500 $\mu$m, and therefore the thickness of the hinge sheet has to be 250 $\mu$m or less at maximum.

In addition, when the sheet A is a multilayer sheet including skin layers and a core layer (so-called three-layered sheet) and is a multilayer sheet 2, it is preferable that the entire thickness (total thickness) of the sheet A is 50 to 200 μm, and the ratio of the thickness of the core layer to the entire sheet thickness of the multilayer sheet is 30% or greater and less than 85%. A thickness of the core layer less than 30% causes insufficient laser markability, and is not preferable. A thickness of the core layer of 85% or greater makes the skin layers too thin. As a result, when laser light with high power is applied to the thus configured sheet, the laser light energy absorbing agent mixed in the core layer will absorb the laser light energy and converts the energy into heat, so that high heat tends to be generated. This degrades the effect of suppressing a so-called "bulge" at the laser light application section, and so such a thickness is not preferable. Even if favorable laser color saturation can be obtained by regulating laser light energy, wear resistance at the laser marking section is not sufficient as compared with the configuration of the thickness of a skin layer within the aforementioned desired range, and so such a thickness is not preferable.

When the sheet A is a multilayer sheet including skin layers and a core layer (so-called three-layered sheet) and is a multilayer sheet 1, it is preferable that the entire thickness (total thickness) of the sheet A is 50 to 200 μm and the ratio of the thickness of the core layer to the entire sheet thickness of the multilayer sheet is 30% or greater and less than 85%. A skin layer with a too small thickness causes problems of die-sticking and deterioration in thermal adhesiveness. On the other hand, a skin layer with a too large thickness accordingly makes a thickness of a core layer described later necessarily smaller. A core layer with a too small thickness causes problems of poor laser markability and warpage after multilayer lamination, which is not preferable.

The aforementioned desired entire thickness of the sheet A including a single layer sheet or a multilayer sheet 1, 2 (three-layered sheet) can realize local properties such as properties of the sheet A easily. Further, the aforementioned desired ratio of the thicknesses of the skin layers and the core layer to the three-layered sheet, in combination with the entire thickness of the three-layered sheet within the desired range, can make it easy to improve laser markability.

The whole beam transmittance of the sheet A is preferably 70% or greater and more preferably 85% or greater. For instance, when the laser-markable multilayer laminate for electronic passport of the present embodiment is used for an electronic passport, printing is typically performed for this purpose. To this end, below the sheet A, a white sheet with printing such as letters and figures being performed thereon (hereinafter printing on a white sheet such as letters and figures is called "printing section" as needed) is laminated, and then laser light is applied at a non-printing section in the sheet A as an outermost layer so as to turn the section in black, i.e., perform marking of images and letters. In this way, a design at the printing section is often combined with anti-counterfeit by laser marking for use. Manufacturing and use of such a combination can lead to clear images by the clarity at the printing section and black/white contrast at the laser marking section because the original surface color is white. That is, in the case of laminating a white sheet, for example, the transparency of an outermost layer in the aforementioned desired range of whole beam transmittance can maximize this effect (can maximize the clarity of black/white contrast). In other words, such transparency of the outermost layer becomes important to secure the clarity of the printing section and the clarity of black/white contrast at the laser marking section. On the other hand, whole beam transmittance less than 70% causes insufficient black/white contrast and causes a failure in securing sufficient markability. Further, since printing is performed on the original white sheet, a problem arises in visibility of this printing.

Note here that the "whole beam transmittance" is an index indicating the ratio of light passing through a film or the like with respect to light incident to the film. When incident light entirely passes, the whole beam transmittance will be 100%. The "whole beam transmittance" in the present specification shows a value by the measurement in keeping with JIS-K7105 (light transmittance and whole beam reflectance), and the whole beam transmittance may be measured using a haze meter produced by Nippon Denshoku Industries Co., Ltd. (trade name: "NDH 2000") or a spectrophotometer (trade name "EYE7000" produced by GretagMacbeth GmbH), for example.

[A-1-1] Skin Layer in Sheet A:

When skin layers are formed in the sheet A, i.e., when the sheet A is configured in a multilayer structure as a "three-layered structure", the skin layers are configured as both outermost layers disposed on outer sides of the multilayer sheet (three-layered sheet). That is, these skin layers serve as surface layers (both outermost layers) of the multilayer sheet (three-layered sheet) so as to sandwich a core layer in the multilayer sheet described later from both end face sides (outer sides).

Herein, the skin layers preferably have the same thickness. For instance, when the sheet A is configured as a multilayer sheet including skin layers each having a different thickness, the skin layers making up the multilayer sheet 2, laser marking is typically performed from the front side and the back side in a laser-markable multilayer laminate for electronic passport or in a card. In this case, different thicknesses of the skin layers as the outermost surface layer and the lowermost back layer of the lamination cause different effects of suppressing so-called "bulge" because of foaming of the marking in the core layer by laser light irradiation and different effects for resistance to wear at a marking section, which is not preferable. Further, when the sheet A is configured as a multilayer including three layers of a skin layer (PC)/a core layer (PC)/a skin layer (PC), where the core layer has a thickness of 30% or greater and less than 85%, then the skin layers will be 15% or more and less than 70% on both sides. A thickness of the skin layers less than 15% causes insufficient effects of suppressing so-called "bulge" because of foaming of the marking in the core layer by laser light irradiation and of improving wear resistance at a marking section. On the other hand, too thick skin layers lead to a thin core layer as a laser marking layer, thus leading to poor laser markability, which is not preferable.

Alternatively, when the sheet A is configured as a multilayer sheet including skin layers each having a different thickness, the skin layers making up the multilayer sheet 1, for instance, the sheet generates warpage during press process of the multilayer sheet, which is not preferable. Further, when the sheet A is configured including three layers of a skin layer (PETG)/a core layer (PC)/a skin layer (PETG), where the core layer has a thickness of 30% or greater and less than 85%, then the skin layers will be 15% or more and less than 70% on both sides. Too thin skin layers cause die-sticking and deterioration in thermal adhesiveness, and are not preferable. On the other hand, too thick skin layers lead to a thin core layer described later, thus causing problems such as poor laser markability and warpage after multilayer sheet lamination, which are not preferable. Accordingly, the skin layers are preferably formed to have a desired thickness.

In the case of a multilayer sheet 2, theses skin layers preferably include a polycarbonate resin (PC), particularly a transparent resin layer including a transparent polycarbonate resin as a main component. The polycarbonate resin preferably used includes, but not limited especially, a resin with a melt volume rate of 4 to 20. A resin with a melt volume rate less than 4 is useful for the improvement of toughness of a sheet, but has poor forming workability. Therefore, such a resin will cause a trouble in the practical use and is not preferable. A resin with a melt volume rate more than 20 causes poor toughness of a sheet obtained, and is not preferable. Such a skin layer made of a transparent resin layer including polycarbonate resin (PC) as a main component can suppress a so-called "bulge" due to foaming at a marking section in the core layer by laser light irradiation, and can improve wear resistance at a marking section when laser light is applied thereto.

Further, in the case of a multilayer sheet 2, it is important that skin layers have high transparency. Therefore, a resin that does not impair the transparency of a polycarbonate resin such as filler can be used without particular limitation. In order to improve scratch resistance or thermal resistance, a general polycarbonate resin and a special polycarbonate resin may be blended or a polycarbonate resin and a polyallylate resin may be blended, for example.

In the case of a multilayer sheet 1, a polyester-based resin composition, i.e., a substantially noncrystalline aromatic polyester-based resin composition described later prepared from a copolymerized polyester resin described later and a lubricant described later is preferable as a material forming the skin layers. Then, the skin layers are formed as layers including such a material.

(Copolymer polyester resin)

A copolymer polyester resin used for the multilayer sheet 1 preferably is blended as a main component of a noncrystalline aromatic polyester-based resin composition. The polyester resin described herein is a dehydration condensate of aromatic dicarboxylic acid and diol, and a substantially noncrystalline aromatic polyester-based resin composition used in the present invention refers to aromatic polyester resins with especially low crystallinity. They do not become whitish nor do not deteriorate in adhesiveness by crystallization even when heat forming processing is frequently performed by hot press or the like. Specific examples of this copolymer polyester resin include, for the skin layers, a copolymer polyester resin, which is a polyester composed of a dicarboxylic acid unit having mainly a telephthalate unit and an ethylene glycol unit (I) and a glycol unit having mainly 1,4-cyclohexane dimethanol unit (II), where (I)/(II) is 90 to 30/10 to 70 mol%. The reason why the component amounts of the ethylene glycol and 1, 4-cyclohexane dimethanol contained in the copolymer polyester resin are prepared is because the resin obtained with a substitution amount of the ethylene glycol component less than 10 mol% in the copolymer polyester resin is not sufficiently amorphous to cause recrystallization to proceed in the cooling step after thermal fusion bonding, which degrades thermal adhesiveness. The resin obtained with above 70 mol% is not sufficiently amorphous to cause recrystallization to proceed in the cooling step after thermal fusion bonding, which degrades thermal adhesiveness. Therefore, the resin obtained by preparing the component amounts of the ethylene glycol and 1, 4-cyrohexane dimethanol as in the present embodiment can be a preferable resin because the resin can be sufficiently amorphous and excellent in thermal adhesiveness.

As an example of this copolymer polyester resin, a substantially noncrystalline aromatic polyester based resin (abbreviated as "PETG", (trade name of "Easter Copolyester" produced by Eastman Chemical Company) where about 30 mol% of ethylene glycol component in polyethylene telephthalate is substituted by 1, 4-cyrohexane dimethanol is commercially available.

[A-1-2] Core Layer in Sheet A:

As described above, when the sheet A is configured as a three-layered sheet (multilayer 1, 2) including the skin layers on the outermost layers, the core layer is configured as a so-called nucleus layer disposed at the center of the three-layered sheet. That is, in the configuration of a three-layered sheet, the core layer is formed as a center layer of the three-layered sheet so as to be sandwiched between the two skin layers disposed on the outermost sides.

Herein, the core layer of the multilayer sheet 2 is preferably formed to have a ratio of the thickness to the entire sheet of 30% or greater and less than 85%. A thickness ratio of the core layer of 30% or greater increases contrast with an uncolored portion of an original white layer because of a thickness effect of a marking section in the core layer by laser light irradiation, and can improve visibility and clarity of the marking section. On the other hand, a thickness ratio of the core layer of 85% or greater causes insufficient effects of suppressing so-called "bulge" because of foaming of the marking in the core layer by laser light irradiation and of improving wear resistance at a marking section by laser light irradiation. A thickness ratio of the core layer less than 30% causes poor laser markability, and is not preferable.

The core layer of the multilayer sheet 1 is preferably formed to have a ratio of the thickness to the entire sheet of 30% or greater and less than 85%. A thickness ratio of the core layer of 85% or greater makes the skin layers relatively thinner because the total thickness of the sheet A is as thin as 50 to 150 $\mu$m. In this case, even when the skin layers include a lubricant, a problem of die-sticking occurs, where the sheet A adheres to a die in a heat process step in the lamination process, which is not preferable. A thickness ratio of the core layer less than 30% does not cause a problem of die-sticking in the lamination process because the skin layers are thick. However, such a ratio is not preferable because laser markability becomes degraded or the sheet generates warpage due to poor thermal resistance.

More preferably, the core layer of the multilayer sheet 1, 2 is formed to have a ratio of the thickness to the entire sheet of 40% or greater and less than 85%. In the case of a so-called three-layered transparent laser over sheet, a thickness ratio of the core layer thereof becomes a major element for laser color saturation (contrast). That is, whether in a three-layered structure of PC/PC (laser markable)/PC or in a three-layered structure of PETG/PC(laser markable)/PETG, the thickness of the core layer becomes a major element for laser markability, and a thicker core layer is preferable in terms of the laser markability. On the other hand, a thinner skin layer is preferable because such a skin layer can contribute to thermal adhesiveness with an inlay layer. Therefore, the thickness ratio of the core layer in the three-layered transparent laser-markable over sheet is more preferably 40% or greater and less than 85%. In this regard, in the three-layered transparent laser-markable over sheet exceeding 85%, skin layers thereof become too thin. Therefore it becomes difficult to control the thickness of the skin layers in two-types and three-layered coextrusion, and so it is difficult to form the sheet stably.

The core layer is made of a material (a raw material) including polycarbonate resin, particularly a transparent polycarbonate resin. The polycarbonate resin preferably used includes, but not limited, a resin with a melt volume rate of 4 to 20. A resin with a melt volume rate less than 4 is useful for the improvement of toughness of a sheet, but has poor forming workability. Therefore, such a resin will cause a trouble in the practical use and is not preferable. A resin with a melt volume rate more than 20 causes poor toughness of a sheet obtained, and is not preferable.

[A-1-3] Laser Light Energy Absorbing Agent:

When the sheet A is a single layer sheet in a single layer structure, the sheet A preferably includes a laser light energy absorbing agent, and when the sheet A is configured as a multilayer sheet 1, 2 as an at least three-layered sheet, the core layer thereof preferably includes a laser light energy absorbing agent. Herein, 0.0005 to 1 part by mass of a laser light energy absorbing agent is preferably included with respect to 100 parts by mass of a transparent resin including a polycarbonate resin as a main component. Such a configuration is preferable because it enables clear letters, symbols, and images with excellent laser color saturation for laser marking and with high contrasts between the original surface color and the printed portions.

Examples of laser light energy absorbing agents include at least one type selected from the group consisting of carbon black, titanium black, metal oxides, metal sulfides and metal nitrides. More preferably, in the single layer sheet or the core layer in the multilayer sheet 1, 2, the laser light energy absorbing agent includes at least one type or two types or more selected from the group consisting of carbon black, titanium black and metal oxides.

Herein, carbon black, titanium black, metal oxides, metal sulfides and metal nitrides added in the multilayer sheet 2 preferably have an average particle diameter less than 150 nm. Carbon black, titanium black, metal oxides, metal sulfides and metal nitrides added in the multilayer sheet 2 more preferably have an average particle diameter less than 100 nm. Further preferably, carbon black with an average particle diameter of 10 to 90 nm and a dibutylphthalate (DBT) oil absorption amount of 60 to 170 ml/100 gr or such carbon black in combination with titanium black or a metal oxide with an average particle diameter less than 150 nm is used. When the average particle diameter of carbon black, titanium black, metal oxides, metal sulfides and metal nitrides exceeds 150 nm, transparency of the sheet deteriorates, or serious unevenness occurs on the surface of the sheet, which is not preferable. When the average particle diameter of carbon black is less than 10 nm, laser color saturation deteriorates, and handling is difficult because it is too fine, which is not preferable. In addition, when the DBT oil absorption is less than 60 ml/100 gr, dispersibility is poor, while when it exceeds 170 ml/100 gr, it has a poor opacifying property, which is not preferable.

As for titanium black, metal oxides, metal sulfides and metal nitrides added in the multilayer sheet 1, they may have an average particle diameter similar to the above multilayer sheet 2. However, an average particle diameter of carbon black added in the multilayer sheet 1 preferably is 10 to 90 nm and has a dibutylphthalate (DBT) oil absorption amount of 60 to 170 ml/100 gr. When the average particle diameter of carbon black is less than 10 nm, laser color saturation deteriorates, and handling is difficult because it is too fine, which is not preferable. When the average particle diameter of carbon black exceeds 90 nm, transparency of the sheet deteriorates, or serious unevenness occurs on the surface of the sheet, which is not preferable. In addition, when the DBT oil absorption is less than 60 ml/100 gr, dispersibility is poor, while when it exceeds 170 ml/100 gr, it has a poor opacifying property, which is not preferable.

For the metal oxides added in the multilayer sheet 1, 2, exemplary metal making the oxides include zinc, magnesium, aluminum, iron, titanium, silicon, antimony, tin, copper, manganese, cobalt, vanadium, bismuth, niobium, molybdenum, ruthenium, tungsten, palladium, silver and platinum. Further, examples of the composite metal oxide include ITO, ATO and AZO.

Examples of the metal sulfide added in the multilayer sheet 1, 2 include zinc sulfide and cadmium sulfide. Examples of the metal nitride include titanium nitride.

In this way, carbon black, metal oxides, and composite metal oxides are preferably used as the energy absorber to be added in the multilayer sheet 1, 2 independently or in combination.

As the addition amount of the energy absorber to the multilayer sheet 2, preferably 0.0005 to 1 part by mass, more preferably 0.0008 to 0.1 part by mass, of carbon black is added (blended). When carbon black and at least one type selected from metal oxides, metal sulfides and metal nitrides with an average particle diameter less than 150 nm are used together, the blend amount of the mixture is 0.0005 to 1 part by mass, more preferably 0.0008 to 0.5 part by mass.

The reason why the addition amount (blend amount) of the energy absorber to the multilayer sheet 2 is adjusted at a desired amount in this way is that the sheet A is preferably transparent. That is, in the case of the usage for an electronic passport or for a laser-markable multilayer laminate for electronic passport, a transparent laser-markable sheet (a layer called an overlay) is laminated on a white sheet subjected to printing (a layer called an inlay). The overlay not subjected to printing is irradiated with laser light to produce black color for marking of images and letters. In this way, a design at the printing section is often combined with an anti-counterfeit effect by laser marking for use. Manufacturing and use in such a combination can lead to clear images by the clarity at a printing section and black/white contrast at a laser marking section because the original surface color is white. In other words, deterioration in the transparency of the overlay layer laminated on the aforementioned inlay layer causes unclarity of printed letters, images or the like. Further, poor black/white contrast at the laser marking section poses a problem in actual use. Accordingly, carbon black with a smaller average particle diameter is preferably used. In the case of using, as a laser energy absorbing agent, the mixture of carbon black and at least one type selected from other metal oxides, metal sulfides, metal carbonates and metal silicates as well, the average particle diameter of these metal oxides and metal sulfides is at least less than 150 nm and preferably less than 100 nm.

Therefore, when the average particle diameter of these laser energy absorbers added to the multilayer sheet 2 exceeds 150 nm, the transparency of the sheet A deteriorates, which is not preferable. In addition, when the blend amount of these laser energy absorbers exceeds 1 part by mass, transparency of the sheet A (multilayer sheet) deteriorates. Further, the resin deteriorates because of too much energy amount absorbed. As a result, a sufficient contrast cannot be obtained. On the other hand, when the addition amount of the laser energy absorber is less than 0.0005 part by mass, a sufficient contrast cannot be obtained, which is not preferable. The addition amount of these laser energy absorbers exceeding 1 part by mass causes not only unpreferable deterioration in transparency of the sheet A but also abnormal heat generation. As a result, resin is decomposed and foaming is generated, thus failing to perform desired laser marking.

As the addition amount of the energy absorber to the multilayer sheet 1, preferably 0.0001 to 3 parts by mass, more preferably 0.0001 to 1 part by mass, of carbon black is added (blended). When carbon black and at least one type selected from metal oxides, metal sulfides, metal carbonates and metal silicates with an average particle diameter less than 150 nm are used together, the blend amount of the mixture is 0.0001 to 6 parts by mass, more preferably 0.0001 to 3 parts by mass. The reason why the addition amount (blend amount) of the energy absorber is adjusted in this way is as follows. That is, the sheet A is preferably transparent, and printing is often performed in a color laser marking multilayer sheet B below the sheet A. In such a case, when the sheet A has poor transparency, printed images, letters and the like become unclar, posing a problem in actual use. Therefore, carbon black with a small average particle diameter is preferably used. In the case of using, as a laser energy absorbing agent, the mixture of carbon black and at least one type selected from other metal oxides, metal sulfides, metal carbonates and metal silicates as well, the average particle diameter of these metal oxides, metal sulfides, metal carbonates and metal silicates is at least less than 150 nm, preferably less than 100 nm, and more preferably less than 50 nm.

Therefore, when the average particle diameter of the laser energy absorbing agent added to the multilayer sheet 1 exceeds 150 nm, the transparency of the sheet A deteriorates, which is not preferable. In addition, when the blend amount of the laser energy absorbing agent exceeds 6 parts by mass, transparency of the sheet A (multilayer sheet 1) deteriorates. Further, the resin deteriorates because of too much energy amount absorbed. Therefore, a sufficient contrast cannot be obtained. On the other hand, when the addition amount of the laser energy absorber is less than 0.0001 part by mass, a sufficient contrast cannot be obtained, which is not preferable.

[A-1-4] Lubricant, Antioxidant and Anticolorant:

In the present embodiment, the sheet A, which is configured as a single layer sheet or the multilayer sheet 1, 2, preferably includes a lubricant. When the sheet A includes a so-called three-layered sheet, skin layers thereof preferably include a lubricant. The lubricant contained can prevent fusion bonding to a pressing plate during hot press.

Further, in the present embodiment, the sheet A, which is configured as a single layer sheet or the multilayer sheet 1, 2, preferably includes at least one type selected from an antioxidant and an anticolorant and at least one type selected from a UV absorbing agent and a light stabilizer as needed. When the sheet A includes a so-called three-layered sheet (multilayer sheet), at least one layer of skin layers and a core layer thereof preferably includes at least one type selected from an antioxidant and an anticolorant and at least one type selected from a UV absorbing agent and a light stabilizer as needed. The addition (blending) of at least one type of an antioxidant and an anticolorant effectively influences on the property deterioration and the hue stabilization due to decrease in the molecular weight during forming process. Examples of the at least one type selected from an antioxidant and an anticolorant include a phenol based antioxidant and a phosphite ester based anticolorant. The addition (blending) of at least one type selected from a UV absorbing agent and a light stabilizer effectively suppresses a lightfastness property from deteriorating during the storage of the sheet A and in the actual usage of an electronic passport as a final product.

Examples of the phenol based antioxidant include $\alpha$-tocopherol, butylhydroxytoluene; sinapyl alcohol, vitamin E, n-octadecyl-3-(3,5-di-t-butyl-4-hydroxyphenol) propionate, 3-5-di-t-butyl-4-hydroxytoluene, pentaerythrityltetrakis[3-(3,5-di-t-butyl-4-hydroxyphenyl) propyonate], triethyleneglycol-bis[3-(3-t-butyl-5-methyl-4-hydroxyphenyl)propionate], 1,6-hexanediol-bis[3-(3,5-di-t-butyl-4-hydroxyphenyl) propionate], 2-tert-butyl-6-(3'-tert-butyl-5'-methyl-2'-hydroxybenzil)-4-methylphenylacrylate, 2,6,-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-$\alpha$-methyl-benzyl-p-cresol), 2,2'-ethylidene-bis(4,6-di-tertbutylphenol), 2,2'-butylidene-bis(4-methyl-6-tertbutylphenol), 4,4'-butylidenebis(3-methyl-6-tertbutylphenol), triethylene glycol-N-bis-3-(3-tert-butyl-4-hydroxy-5-methylphenyl) propionate, 1,6-hexanediolbis[3-(3,5-di-tert-butyl-4-hydroxyphenyl)propionate], bis[2-tert-butyl-4-methyl6-(3-tert-butyl-5-methyl-2-hydroxybenzyl)phenyl]telephthalate, 3,9-bis{2-[3-(3-tert-butyl-4-hydroxy-5-methylphenyl)propionyloxy]-1,1,-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tertbutylphenol), bis(3,5-di-tert-butyl-4-hydroxybenzyl)sulfide, 4,4'-di-thiobis(2,6-di-tert-butylphenol), 4,4'-trithiobis(2,6-di-tert-butylphenol), 2,2-tiodiethylenebis-[3-(3,5-di-tert-butyl-4-hydroxyphenyl)propionate], 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris2[3(3,5-di-tert-butyl-4-hydroxyphenyl)propyonyloxy]ethylisocyanurate, and tetrakis[3-(3,5-di-tert-butyl-4-hydroxyphenyl)propyonyloxymethyl]methane.

Above all of these examples, preferable are n-octadecyl-3-(3,5-di-tert-buryl-hydroxyphenyl)propyonate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, and tetrakis[3-(3,5-di-tert-butyl-4-hydroxyphenyl)propyonyloxymethy]methane, and particularly preferable is n-octadecyl-3-(3,5-di-tert-butyl-4-hydroxyphenyl)propionate. The above hindered phenol based antioxidants may be used alone or in combination of two or more types.

Examples of the phosphite ester based anticolorant include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phospite, monodecyldiphenyl phosphite, monooctyldiphenyl phosphite, 2,2-methylenebis(4,6-di-tert-butylphenyl)octyl phosphite, tris(diethylphenyl) phosphite, tris(di-iso-propylphenyl) phosphite, tris(di-n-butylphenyl) phosphite, tris (2,4,-di-tert-butylphenyl) phosphite, tris(2,6-di-tert-butylphenyl) phosphite, distearylpentaerythritol diphosphite, bis(2,4-di-tert-butylphenyl)pentaerithritol diphosphite, bis(2,6-di-tert-butyl-4-methylphenyl)pentaerithritol diphosphite, bis(2,6-di-tert-butyl-4-ethylphenyl)pentaerithritol diphosphite, phenylbisphenol A pentaerithritol diphosphite, bis(nonylphenyl)pentaerithritol diphosphite, and dicyclohexylpentaerithritol diphosphite.

Further, other phosphite compounds can be used, which react with divalent phenols and which has a cyclic structure. Examples of the phosphite compounds include 2,2'-methylenebis(4,6-di-tert-butylphenyl) (2,4-di-tert-butylphenyl) phosphite, 2,2'-methylenebis(4,6-di-tert-butylphenyl)(2-tert-butyl-4-methylphenyl)phosphite, 2,2'-methylenebis(4-methyl-6-tert-butylphenyl) (2-tert-butyl-4-metylphenyl)phosphite, and 2,2'-ethylidenebis(4-methyl-6-tert-butylphenyl)(2-tert-butyl-4-methylphenyl) phosphite.

Above all, particularly preferable is tris(2,4-di-tert-butylphenyl)phosphite. The phosphite ester based anticolorants may be used alone or in combination of two or more kinds. Alternatively, it may be used together with a phenol based antioxidant.

Examples of the UV absorbing agent include 2-(2'-hydroxy-5'-methylphenyl)benzotriazole, 2-(2'-hydroxy-3',5'-di-tert-amylphenyl)benzotriazole, 2-(2'-hydroxy-3',5'-bis($\alpha,\alpha$'-dimethylbenzyl)phenylbenzotriazole, 2,2' methylenebis[4-(1,1,3,3-tetramethylbutyl)-6-(2H-benzotriazole-2-yl)phenol], and a benzotriazole based compound represented by a condensate with methyl-3-[3-tert-butyl-5-(2H-benzotriazole-2-yl)-4-hydroxyphenylpropionatepolyethylene glycol.

Further, examples of the UV absorbing agent include a hydroxyphenyltriazine based compound such as 2-(4,6-diphenyl-1,3,5-triazine-2-yl)-5-hexyloxyphenol, 2-(4,6-bis(2,4-dimethylphenyl)-1,3,5-triazine-2-yl)-5-hexyloxyphenol.

Further, examples of the UV absorbing agent include a cyclic imino ester based compound such as 2,2'-p-phenylenebis(3,1-benzoxazine-4-one), 2-2'-m-phenylenebis(3,1-benzoxazine-4-one), and 2,2'-p,p'-diphenylenebis(3,1-benzoxazine-4-one).

Examples of the light stabilizer include bis(2,2,6,6-tetramethyl-4-piperidyl)sebacate, bis(1,2,2,6,6-pentamethyl-4-piperidyl)sebacate, tetrakis (2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, poly{[6-(1,1,3,3-tetramethylbutyl)amino-1,3,5-triazine-2,4-diyl][(2, 2, 6,6-tetramethylpiperidyl)imino]hexamethylene[(2,2,6,6-tetramethylpiperidyl)imino]}, and a hyndered amine based light stabilizer represented by polymethylpropyl-3-oxy-[4-(2,2,6,6-tetramethyl)piperidinyl]siloxane or the like. Such a light stabilizer exhibits better performance in weather resistance in the use in combination with the aforementioned UV absorbing agent or, in some cases, with various antioxidants.

Examples of the lubricant include fatty acid esters, fatty acid amides, and fatty acid metal salts, and at least one type of lubricant selected from them is preferably added.

Examples of the fatty acid ester based lubricant includes butyl stearate, cetyl permirate, monoglyceride stearate, diglyceride stearate, triglyceride stearate, montan wax acid ester, wax ester, dicarboxylate ester, and complex ester. Examples of the fatty acid amide based lubricant include stearic acid amide and ethylenebis stearyl amide. Examples of the fatty acid metal salt based lubricant include calcium stearate, magnesium stearate, zinc stearate, aluminum stearate, and barium stearate.

Further, a single layer sheet of the sheet A is preferably configured as a transparent laser-markable sheet including 0.01 to 3 parts by mass of a lubricant as well as 0.1 to 5 parts by mass of at least one type selected from an antioxidant and an anticolorant and 0.1 to 5 parts by mass of at least one type selected from a UV absorbing agent and a light stabilizer with respect to 100 parts by mass of a transparent thermoplastic resin. Alternatively, a skin layer in the multilayer sheet 2 of the sheet A is preferably configured as a transparent laser-markable sheet including 0.01 to 3 parts by mass of a lubricant as well as 0.0005 to 1 part by mass of a laser light energy absorbing agent, 0.1 to 5 parts by mass of at least one type selected from an antioxidant and an anticolorant and 0.1 to 5 parts by mass of at least one type selected from a UV absorbing agent and a light stabilizer with respect to 100 parts by mass of a transparent thermoplastic resin.

Herein, the addition amount of the lubricant in the single layer as well as in the multilayer sheet 1, 2 is 0.01 to 3 parts by mass, more preferably 0.05 to 1.5 parts by mass. The addition amount of lubricant less than 0.01 part by mass causes a problem of fusion bonding to a pressing plate during hot press. On the other hand, the addition amount of lubricant exceeding 3 pats by mass causes a problem in interlayer fusion bonding during hot press of a multilayered lamination in an electronic passport or a card. Less than 0.1 part by mass of at least one type selected from an antioxidant and an anticolorant causes a tendency of a trouble of thermal oxidation of the polycarbonate resin at a melt coextrusion process and thermal discoloration due to the thermal oxidation. On the other hand, more than 5 parts by mass tends to cause a problem of bleeding of these additives, for example, which is not preferable. Less than 0.1 part by mass of at least one type selected from a UV absorbing agent and a light stabilizer has a poor effect, and tends to cause a problem of deterioration in a lightfastness property and accordingly discoloration. On the other hand, more than 5 parts by mass tends to cause a problem of bleeding of these additives, for example, which is not preferable.

[B] Structure of Multilayer Sheet B:

The multilayer sheet B of the present invention is configured as at least three-layered sheet including skin layers and a core layer, and is laminated by melt coextrusion for formation. Herein, the three-layered sheet according to the present embodiment is "at least three layers", and is not limited to a three-layered sheet. In other words, the description of "three-layered sheet" for the multilayer sheet B in the present embodiment is for convenience in explanation, and the "three-layered sheet" refers to a "sheet including at least three layers" and does not limit the sheet B to a sheet including "three layers". That is to say, as long as the sheet includes three or more layers, any sheet including five layers, seven layers or any larger odd-numbered layers is included in the scope of the multilayer sheet B of the present embodiment.

When the multilayer sheet B of the present embodiment is configured of the above-stated multilayer structure as well, it is necessary that the skin layers described later are disposed on outermost sides of the sheet having the multilayer structure on both the sides of the sheet in such a manner that the core layer is sandwiched between the skin layers. Incidentally, though there is no particular limitation on the thickness of the skin layers, it is more preferable that the skin layer is formed to have a thickness in the predetermined range described later.

Meanwhile, even in the case that the multilayer sheet B is configured of the aforementioned "larger odd-numbered layers", when the structure has a too large number of layers, a thickness of each of the skin layers and core layers becomes too small. In such a case, a problem of deterioration in thermal adhesiveness with the sheet A may occur. Therefore, the multilayer sheet B preferably includes five layers, more preferably three layers.

Here, the reason why the multilayer sheet B is configured of odd-numbered layers as described above is because a multilayer sheet of even-numbered layers results in the same configuration as that of a multilayer sheet of odd-numbered layers by necessity. For example, a multilayer sheet including four layers has a disposition of a skin layer (PETG)/a core layer (PC)/a core layer (PC)/a skin layer (PETG), which is, after all, the same configuration as that of a multilayer sheet of odd-numbered layers.

For example, as for a multilayer sheet including three layers as an example, the layers are disposed as in a skin layer (PETG)/a core layer (PC)/a skin layer (PETG) so that the two skin layers are on both the outermost sides (one side and the other side) with a core layer as one layer being disposed between the two skin layers in the multilayer sheet. As for a multilayer sheet including five layers as an example, the layers are disposed as in a skin layer (PETG)/a core layer (PC)/a skin layer (PETG)/a core layer (PC)/a skin layer (PETG) so that the two skin layers are on both the outermost sides (one side and the other side) and so that the skin layers and the core layers are disposed alternately. Such a multilayer sheet having a multilayer structure can secure sufficient thermal adhesiveness.

It is preferable that the entire thickness (total thickness) of the three-layered sheet (multilayer sheet B), is 100 to 300 μm, and that the ratio of the thickness of the core layer to the entire thickness of the multilayer sheet B is 30% or greater and less than 85%. The entire thickness of the three-layered sheet (multilayer sheet B) less than 100 μm accordingly makes a PETG layer as a skin layer of the multilayer sheet B necessarily thin. As a result, thermal adhesiveness between the sheet A (including both of "a single layer sheet" and a so-called "three-layered sheet") laminated at the outermost layer and the multilayer sheet B cannot be secured during thermal fusion bonding in the multilayer sheet lamination step. On the other hand, when the entire thickness of the three-layered sheet (multilayer sheet B) exceeds 300 μm, a laser-markable multilayer laminate for electronic passport using such a three-layered sheet will have an entire thickness exceeding a practicable range. For instance, as described above, a so-called "data page" without an IC chip and an antenna has an entire maximum thickness of 400 to 500 μm, and in the case of having an inlet layer with an IC chip and an antenna inserted therein, an entire maximum thickness will be 700 to 800 μm. In this way, such a three-layered sheet has poor practicability because it exceeds the entire maximum thickness. Further, in the multilayer sheet B, it is preferable that the ratio of the thickness of the core layer to the entire thickness is 30% or greater and less than 85%. This is for securing an opacifying property when printing is performed over the multilayer sheet B, or for securing visibility and clarity of a marking section. That is, too thin skin layers fail to secure thermal adhesiveness between the sheet A (including both of "a single layer sheet" and a so-called "three-layered sheet") laminated at the outermost layer and the multilayer sheet B during thermal fusion bonding in the multilayer sheet lamination step. On the other hand, too thick skin layers accordingly make the core layer described later necessarily thin. As a result, an opacifying property cannot be secured when printing is performed over the multilayer sheet B. Further when the skin layers do not include a colorant, contrast cannot be secured when black marking is performed to a transparent laser marking sheet as the outermost layer by laser light irradiation, and visibility and clarity at a marking section cannot be secured.

The aforementioned desired thickness of the entire three-layered sheet can realize not only local properties such as properties of the multilayer sheet B easily but also the properties of the laser-markable multilayer laminate for electronic passport of the present embodiment easily. Not only the total thickness of the three-layered sheet as a whole but also the ratio of the skin layers and the core layer making up the three-layered sheet to the three-layered sheet are set at the desired ratio as stated above, whereby effects of the present invention can be more exerted such as improvement of a contrast property, in association with the entire thickness of the three-layered sheet within the desired range.

Herein, the adhesiveness and the opacifying property of the multilayer sheet and the contrast with a laser marking section (of the sheet A) become extremely important elements concerning the feasibility of the multilayer sheet, the productivity, the ability of responding to market needs and the like. Accordingly, a relationship among the total thickness of the three-layered sheet as a whole, and the thicknesses of the skin layers and the core layer is described later in detail.

Similarly to the sheet A, the description such as "multilayer sheet" or "sheet including the lamination of three layers" refers to the state after the lamination of a plurality of layers (or three sheets), which does not limit the lamination method therefor.

[B-1] Skin layer in Multilayer Sheet B:

The skin layers in the multilayer sheet B are configured as both of the outermost layers disposed on the outsides of the three-layer sheet. That is, the skin layers are disposed so as to sandwich the core layer in the multilayer sheet B described later from both of the end face sides (outsides) of the core layer so as to play a role of surface layers (outermost layers) of the three-layer sheet.

The skin layers preferably have the same thickness. The multilayer sheet B including skin layers having different thicknesses causes variations in thermal adhesiveness between the sheet A as the outermost layer and the multilayer sheet B during thermal fusion bonding in the multilayer sheet lamination step, which is not preferable. The multilayer sheet B including skin layers having different thicknesses further may cause "warpage" of the laminate (laser-markable multilayer laminate for electronic passport) after hot press, which is not preferable. In addition, for example, in the case that the multilayer sheet B includes three layers of a skin layer (PETG)/a core layer (PC)/a skin layer (PETG) and that the thickness of the core layer is 30% or greater and less than 85%, then the skin layer is 15% or greater and less than 70% on both sides. When the skin layer is too thin, degradation in thermal adhesiveness will occur. On the other hand, when the skin layers are too thick, the core layer described later accordingly becomes thin. In this case, when a colorant is mixed in such a thin core layer only, resin containing the colorant may be put in only one extruder, and therefore labor for cleaning of the extruder can be reduced half that in the case of mixing a colorant in the skin layers as well as the core layer in extreme cases. A too thin core layer, however, causes the lack of an opacifying property when partial printing or entire printing is performed on the multilayer sheet B. When a colorant is mixed in the skin layers and the core layer, any problem concerning the opacifying property as stated above will not occur. However, when a three-layered sheet using two types of resins is formed by melt coextrusion, two extruders are required, and so a resin including a colorant has to be put in these two extruders. Therefore, after the production of a sheet formed by two-types and three-layered melt coextrusion, cleaning-up of the two extruders requires a lot of labor for cleaning of the colorant adhered to the extruders, often causing problems of productivity and cost. Therefore, it is preferable that the entire thickness (total thickness) of the three-layered sheet (multilayered sheet B) and the ratio of the thickness of the core layer to the entire thickness is formed within the desired ranges as stated above.

Preferable materials for forming these skin layers include a polyester-based resin composition, i.e., a copolymer polyester resin described later, which is a substantially noncrystalline aromatic polyester-based resin composition described later prepared therefrom. Then, the skin layers are formed as layers including such a material.

[B-1-1] Copolymer polyester resin:

A copolymer polyester resin used for the present embodiment preferably is blended as a main component of a noncrystalline aromatic polyester-based resin composition. The polyester resin described herein is a dehydration condensate of aromatic dicarboxylic acid and diol, and a substantially noncrystalline aromatic polyester-based resin composition used in the present invention refers to aromatic polyester resins with especially low crystallinity. They do not become whitish nor do not deteriorate in adhesiveness by crystallization even when heat forming processing is frequently performed by hot press or the like. Specific examples of this copolymer polyester resin include, for the skin layers, a copolymer polyester resin, which is a polyester composed of a dicarboxylic acid unit having mainly a telephthalate unit and an ethylene glycol unit (I) [hereinafter called an ethylene glycol unit (I)] and a glycol unit having mainly 1,4-cyclohexane dimethanol unit (II), where a ratio of the ethylene glycol unit (I) to the 1, 4-cyclohexane dimethanol unit (II) ((I)/(II)) is 90 to 30/10 to 70 mol%. The reason why the component amounts of the ethylene glycol and 1, 4-cyclohexane dimethanol contained in the copolymer polyester resin are prepared is because the resin obtained with a substitution amount of the ethylene glycol component less than 10 mol% in the copolymer polyester resin is not sufficiently amorphous to cause recrystallization to proceed in the cooling step after thermal fusion bonding, which degrades thermal adhesiveness. The resin obtained with above 70 mol% is not sufficiently amorphous to cause recrystallization to proceed in the cooling step after thermal fusion bonding, which degrades thermal adhesiveness. Therefore, the resin obtained by preparing the component amounts of the ethylene glycol and 1, 4-cyrohexane dimethanol as in the present embodiment can be a preferable resin because the resin can be sufficiently amorphous and excellent in thermal adhesiveness.

As an example of this copolymer polyester resin, a substantially noncrystalline aromatic polyester based resin (abbreviated as "PETG", (trade name of "Easter Copolyester" produced by Eastman Chemical Company) where about 30 mol% of ethylene glycol component in polyethylene telephthalate is substituted by 1, 4-cyrohexane dimethanol is commercially available.

[B-2] Core Layer in Multilayer Sheet B:

The core layer is configured as a so-called nucleus layer disposed at the center of the three-layered sheet. That is, the core layer is formed as the nucleus layer of the three-layered sheet in such a manner that it is sandwiched between two skin layers disposed on the outermost sides. As the thickness of the core layer, the ratio of the thickness of the core layer to the thickness of the entire sheet is preferably 30% or greater and less than 85%. It is more preferably 40% or greater and less than 80%. The ratio of the thickness of the core layer of 85% or greater relatively makes the skin layers thinner because the total thickness of the multilayer sheet B is as thin as 100 to 300 μm, leading to a unpreferable factor of variations in thermal adhesiveness between the sheet A (including both of "single layer sheet" and a so-called "three-layered sheet") as the outermost layers and the multilayer sheet B during thermal fusion bonding in the multilayer sheet lamination step. On the other hand, the thickness ratio of the core layer less than 30% causes a problem of failing to secure an opacifying property when printing is performed over the multilayer sheet B, and further causes a problem of failing to secure contrast when black marking is performed to the sheet A (including both of "single layer sheet" and a so-called "three-layered sheet") as the outermost layer by laser light irradiation. Further, visibility and clarity at a marking section cannot be secured.

The core layer may be made of a polycarbonate resin, particularly a transparent polycarbonate resin. The polycarbonate resin used, but not limited, preferably has a melt volume rate of 4 to 20. A resin with a melt volume rate less than 4 is useful for the improvement of toughness of a sheet, but has poor forming workability and has difficulty in the practical use, which is not preferable.

A resin with a melt volume rate more than 20 causes poor toughness of a sheet obtained, and is not preferable.

[B-2-1] Colorant of Resin such as Dye or Pigment:

The multilayer sheet B is a colored multilayer sheet, where at least one layer of the skin layers and the core layer in the multilayer sheet B includes 1 part by mass or greater of at least one type of a colorant for resin such as dyes and pigments with respect to 100 parts by mass of the above-stated copolymer polyester resin or with respect to 100 parts by mass of the above-stated polycarbonate resin. The multilayer sheet B is different from the sheet A in this point. The multilayer sheet B includes 1 part by mass or more of a colorant for resin such as colorant dyes and pigments for better contrast during marking by irradiation with laser light after the lamination of the sheet A and the lamination sheet of the colored multilayer sheet B and for securing of an opacifying property when printing is performed over the colored multilayer sheet B.

Examples of the colorant of resin such as colorant dyes and pigments include a white pigment, a yellow pigment, a red pigment and a blue pigment. Examples of the white pigment include titanium oxide, barium oxide and zinc oxide. Examples of the yellow pigment include iron oxide and titan yellow. Examples of the red pigment include iron oxide. Examples of the blue pigment include cobalt blue ultramarine. Herein a colorant for light coloring or tint colors is preferable for better contrast.

More preferably, a colorant of resin such as a white-colored dye or pigment for emphasizing contrast is added.

[B-3] Lubricant, Antioxidant and Anticolorant:

At least one of the core layer and the skin layers of the multilayer sheet B, including the above-stated single layer sheet and the multilayer sheet (a so-called three-layered sheet) preferably includes 0.1 to 5 parts by mass of at least one type selected from an antioxidant and an anticolorant and 0.1 to 5 parts by mass of at least one type selected from a UV absorbing agent and a light stabilizer with respect to 100 parts by mass of the thermoplastic resin. The addition (blending) of at least one type of an antioxidant and an anticolorant effectively influences on the property deterioration and the hue stabilization due to decrease in the molecular weight during forming process. The addition (blending) of at least one type selected from a UV absorbing agent and a light stabilizer effectively suppresses a lightfastness property from deteriorating during the storage of a laser-markable multilayer laminate for electronic passport and in the actual usage of an electronic passport as a final product. That is, this configuration allows a desired amount of the at least one type selected from an antioxidant and an anticolorant and the at least one type selected from a UV absorbing agent and a light stabilizer to be included selectively as needed. In addition, a region for inclusion may be selected as needed. Therefore, the effects of the present invention can be exerted more as the whole sheet synergistically.

Note here that the lubricant, the antioxidant and the anticolorant in the multilayer sheet B are the same as the lubricant, the antioxidant and the anticolorant in the sheet A, and therefore refer to the description for those in the sheet A (Lubricant, Antioxidant and Anticolorant:).

[3] Relationship between sheet A and multilayer sheet B:

As described above, the lamination of the sheet A and the multilayer sheet B can exert the effects of the present invention. That is, when the sheet A is configured as a PC (laser markable) transparent single-layer sheet or a transparent laser mark three-layered sheet (multilayer sheet 2) including PC/PC (laser markable)/PC, the colored multilayer sheet B including PETG/PC (white based colorant blended)/PETG is laminated on the face on the opposite of the face of the sheet A irradiated with laser. In such a configuration, laser is applied to the upper layer thereof (sheet A) to turn PC making up the core layer in black, whereby contrast can be secured and visibility and clarity of a marking section can be exerted. Further, when printing is performed at the outermost layer, any friction or wear occurring at the outermost layer makes the printing portion worn and the visibility thereof is degraded greatly. However, printing of images, letters or the like is performed on the surface of the multilayer sheet B as a layer below the sheet A, and therefore clarity of the printing portion can be kept and the printing portion can be protected.

When the sheet A is configured as a transparent laser mark three-layered sheet including PETG/PC (laser markable)/PETG, the colored multilayer sheet B including PETG/PC (color laser markable)/PETG is laminated on the face on the opposite of the face of the sheet A irradiated with laser. Such a configuration allows, even when laser irradiation at the upper layer (sheet A) makes the core layer PC turn black, the laser light to further pass through to turn the core PC layer of the lower layer (multilayer sheet B) black. Thereby, the density of black at a portion turning black by laser light is improved.

In this way, in order to sufficiently exert the clarity of an image (e.g., a face of a person) by laser marking, it becomes important to control the reflectivity and the contrast. For instance, insufficient reflectivity or low contrast degrades the clarity of an image. Further, when a three-layered sheet of PETG/PC(white)/PETG that is not laser-markable is thermal-fusion bonded with the above-stated sheet A (PETG/PC(laser markable)/PETG (transparent laser mark three-layered sheet) to form a laser-markable multilayer laminate for electronic passport, since the PETG transparent layer resides in the three-layered sheet as the lower layer, the reflectivity becomes insufficient, which is not preferable. Further, with consideration given to the reflectivity and the contrast, a PC (white) sheet is used instead of the above-stated three-layered sheet of PETG/PC(white)/PETG as the lower layer of the sheet A, the reflectively is improved than in the three-layered sheet of the PETG/PC(white)/PETG. This further leads to better clarity of images because the upper layer (sheet A) turning black by laser marking has better contrast with the white lower layer (PC sheet). When the lower layer is a PC (white) sheet, however, a problem of thermal adhesiveness with the upper layer arises. Especially, thermal adhesiveness at a low temperature of about 120 to 150°C is bad. On the other hand, although they are thermal fusion bonded at an increased temperature of 210 to 240°C, such a temperature causes the PETG layer as the upper layer to be softened or molten, thus failing to obtain a laser-markable multilayer laminate for electronic passport.

Therefore, the lower layer also is made laser-markable, whereby even after turning the core layer PC of the upper layer black by laser irradiation, the laser light further passes through to turn the core layer PC of the lower layer black. As a result, the density of black at a portion turning black by laser light is improved. Further, contrast equal to that in the case where the PC(white) sheet is used in the lower layer can be obtained. As a result, images can be clarified, and a problem of thermal adhesiveness does not occur. In this way, according to the present invention, a desired combination of the sheet A and the multilayer sheet B can lead to the effects of the present invention synergistically.

Note here that, in the above description, a laser-markable multilayer laminate for electronic passport in the present embodiment is described having a disposition pattern where the multilayer sheet B is disposed under the sheet A. However, the disposition is not limited to this. That is, it is not necessary to dispose the sheet A at an upper layer and the multilayer sheet B at a lower layer. For example, the sheet A may be disposed at a lower layer and the multilayer sheet B may be disposed at an upper layer. The reason why the sheet A (or multilayer sheet B) may be disposed at an upper layer or a lower layer is because the position (direction) where the laser-marked image or the like is observed by eyes is not limited to the vertical direction. For example, when a laser-markable multilayer laminate for electronic passport of the present embodiment is used in the form of a brochure such as a passport, the sheet A and the multilayer sheet B are disposed at the upper layer and at the lower layer, respectively, when the brochure is in a plan view in the open state. Next, when the next page is opened in a plan view, the sheet A and the multilayer sheet B will be disposed such that the multilayer sheet B and the sheet A disposed at the upper layer and at the lower layer, respectively. Therefore, the upper layer and the lower layer herein are used for convenience sake of description, and it means that the sheet A is disposed on the laser irradiation side. Such a disposition can achieve clarity of images or the like and high contrast in the sheet A and the multilayer sheet B after being laser-marked.

The laser-markable multilayer laminate for electronic passport in the present embodiment includes not only the case of laminating sheet A/multilayer sheet B but also the case of, after performing various printing to the surface of the multilayer sheet B, laminating sheet A/(printed) multilayer sheet B/composite hinge sheet C/(printed) multilayer sheet B/sheet A. Further, it includes the case of laminating sheet A/multilayer sheet B/composite hinge sheet C/multilayer sheet B/sheet A. It further includes the case of, after thermal fusion bonding of a lamination sheet of the multilayer sheet B/hinge sheet C/multilayer sheet B and printing on the surface of this lamination sheet, further laminating sheet A/the lamination sheet/sheet A. Flexible adaption according to the purpose for use and the method for use is possible.

[4] Method for Forming Sheet A and Multilayer Sheet B:

Examples of a method to obtain the sheet A and the colored multilayer sheet B in the present invention include a method of melt co-extruding a resin composition for each layer for forming and laminating the same, a method of forming each layer in a film shape and laminating the same, a method of melt co-extruding two layers for forming and laminating a film separately formed on the two layers. From the viewpoints of productivity and costs, lamination by melt coextrusion, which is then formed, is preferable.

More specifically, the resin composition of each layer is prepared or is formed into a pellet shape as necessary to be put in each hopper of a three-layer T die extruder where T dies are subjected to shared connection, followed by being melted at a temperature ranging from 200°C to 300°C for T-die melt coextrusion forming. Thereafter, the resultant is cooled for solidification with a cooling roll or the like to form a three-layered laminate. Incidentally, the sheet A and the colored multilayer sheet B of the present invention can be formed by a known method without being limited to the aforementioned method. For example, they can be obtained in accordance with the description on Pages 6 and 7 of JP-A-10-71763.

The sheet A and the multilayer sheet B obtained as stated above are cut into predetermined dimensions, and thereafter are laminated and bonded by thermal fusion bonding in a desired time, at a desired pressure and a desired temperature, whereby a laser-markable multilayer laminate can be obtained. This may be manufactured by another method. Firstly, the sheet A and the multilayer sheet B each are extruded for forming as a two-type thee-layered sheet by melt coextrusion forming. Thereafter, a roll-shaped sheet wound around in a roll shape is made to pass between heating rollers heated at a predetermined temperature. For instance, the roll-shaped sheet is made to pass through to be in a configuration of sheet A/multilayer sheet B/sheet A or multilayer sheet B/sheet made of polyester elastomer or the like/multilayer sheet B to be heated and pressurized by the heating rollers. Thereby, a long-length lamination sheet is manufactured, which is then cut into predetermined dimensions for manufacturing. This may be manufactured by still another method. The sheet A and the multilayer sheet B are cut into predetermined dimensions. Then, they are disposed as in the configuration of sheet A/multilayer sheet B/sheet A, in the sheet of sheet A/multilayer sheet B/sheet made of polyester elastomer or the like, or woven fabric or nonwoven fabric of polyester/multilayer sheet B/sheet A, or in the configuration of a cut-sheet lamination sheet including multilayer sheet B/another sheet/multilayer sheet B, and then are manufactured similarly to the above by a hot press machine.

Herein, the desired time, the desired pressure and the desired temperature are not limited especially, and the desired time, the desired pressure and the desired temperature are selected appropriately as needed. In a typical case, the desired time ranges from 10 seconds to 6 minutes, the desired pressure ranges from 1 to 20 MPa and the desired temperature ranges from 120 to 170°C as an example.

[5] Other laminates:

As described above, a laser-markable multilayer laminate for electronic passport of the present invention is preferably configured as a five-layered laminate including sheet A/multilayer sheet B/composite hinge sheet/multilayer sheet B/sheet A. That is, the configuration of the laminate of sheet A/multilayer sheet B can improve the clarity of images or the like. In electronic passports, fixed information specific to countries or the like is printed on one face of the multilayer sheet B (on the side of the transparent laser marking layer). In such a case, printing on the white-based multilayer sheet B can emphasize the clarity of images or the like. For example, as compared with printing on a dark-color based multilayer sheet B such as brown and black, the former case is preferable because clear printing is possible without influences by the base surface color. Further, after printing this fixed information on the multilayer sheet B, variable information such as personal information and personal images is laser-marked to turn black. In such a case also, fixed information is printed to be a light color having a lot of parts in white. This can increase contrast with base light color, so that clear images and letters can be obtained. Therefore, the color of the colored multilayer sheet B (color sheet B) is preferably a light color such as white.

Further, the configuration of the five-layered laminate including sheet A/multilayer sheet B/composite hinge sheet/multilayer sheet B/sheet A enables laser marking either from a surface or from a rear face. Further, when this five-layered laminate is thermal fusion bonded by hot press forming, the obtained five-layered laminate has one feature that is free from warpage. Herein, as for a thickness of each layer, the sheet A preferably has a thickness of 50 to 200 $\mu$m, the multilayer sheet B preferably has a thickness of 100 to 300 $\mu$m, and the composite hinge sheet preferably has a thickness of 80 to 250 $\mu$m.

Preferably, in the five-layered laminate including sheet A/multilayer sheet B/composite hinge sheet/multilayer sheet B/sheet A, the sheet A has a so-called three-layered configuration as stated above. Refer to the description on the sheet A for a so-called three-layered configuration.

The laser-markable multilayer laminate for electronic passport described so far preferably includes the lamination of five sheets including sheet A/sheet B/the above-stated composite hinge sheet for laser-markable multilayer laminate for electronic passport including inlet/sheet B/sheet A. This is preferable because the composite hinge sheet includes an inlet layer including an IC chip and an antenna inserted therein and so can be made thin.

Herein, the five-layer lamination sheet as in the present embodiment can be manufactured by various methods. For instance, after laminating sheet A/multilayer sheet B/composite hinge sheet/multilayer sheet B/sheet A, the lamination is thermal fusion bonded (thermal lamination) by hot press, whereby a five-layered laminate can be manufactured.

When printing is to be performed to the above-stated laminate, after printing/curing of a photo-curable or thermosetting type ink may be performed to one side of the multilayer sheet B. Then, sheet A/printed multilayer sheet B/composite hinge sheet/printed multilayer sheet B/sheet A may be laminated, further, and then thermal fusion bonding (thermal lamination) may be performed by hot press. As another manufacturing method, the multilayer sheet B/composite hinge sheet/multilayer sheet B may be subjected to hot press for thermal fusion bonding and lamination. Then, printing may be performed to a surface of this laminate. Then sheet A/(the multilayer sheet B/composite hinge sheet/multilayer sheet B) laminate/sheet A may be laminated and be hot pressed. It can be manufactured, as well.

Further, after printing/curing of a photo-curable or thermosetting type ink may be performed to one side of the multilayer sheet B and a thin coating of varnish as a type of adhesive may be applied to the printed face and may be dried as needed. Then the sheet A/varnish applied and printed multilayer sheet B/composite hinge sheet/varnish applied and printed multilayer sheet B/sheet A may be laminated and be hot-pressed, whereby thermal fusion bonding can be performed firmly.

Further, a high-temperature activation adhesive may be applied beforehand on one face of the sheet A (the face thermal fusion bonded with the printed face of the multilayer sheet B) to have a thickness after dried of 3 to 20 $\mu$m, preferably 3 to 10 $\mu$m, and more preferably 5 to 10 $\mu$m. Then, similarly to the above, the sheet A (on one face thereof a high-temperature activation adhesive is applied)/multilayer sheet B/composite hinge sheet/multilayer sheet B/the sheet A (on one face thereof a high-temperature activation adhesive is applied) are laminated, and are thermal fusion bonded (thermal lamination) by hot press. Thereby, thermal fusion bonding can be performed firmly.

When printing is performed to such a laminate, more preferably, after printing/curing of a photo-curable or thermosetting type ink may be performed to one side of the multilayer sheet B, and sheet A/printed multilayer sheet B/composite hinge sheet/printed multilayer sheet B/sheet A may be laminated, and then thermal fusion bonding (thermal lamination) may be performed by hot press, whereby a laser-markable multilayer laminate for electronic passport is formed. Another method also is available as follows. After printing/curing of a photo-curable or thermosetting type ink may be performed to one side of the multilayer sheet B and a thin coating of varnish as a type of adhesive may be applied to the printed face and may be dried as needed. Then the sheet A/varnish applied and printed multilayer sheet B/composite hinge sheet/varnish applied and printed multilayer sheet B/sheet A may be laminated and be hot-pressed. A laser marking multilayer laminate for electronic passport is manufactured in this way, thereby improving the convenience such as the ease of forming.

However, the method is not limited to the above, and the aforementioned five-layer laminate may be formed within the range of not deviating from the constitution and the effects of the present invention.

The hot press temperature for thermal fusion bonding (thermal lamination), but varying with the types of the composite hinge sheet, ranges from 100 to 170°C and preferably from 130 to 160°C. A hot press temperature less than 100°C may cause an adhesion failure, and a hot press temperature exceeding 170°C may cause defects such as warpage or shrinkage of the five-layer laminate or extending off of a sheet, which is not preferable.

[6] Matting:

It is preferable that at least one surface of at least one of the sheet A, the multilayer sheet B and the composite hinge sheet for laser-markable multilayer laminate for electronic passport is subjected to matting with the average roughness (Ra) of 0.1 to 5 $\mu$m. The reason why the sheet surface(s) of the aforementioned respective sheets is (are) subjected to matting selectively as needed is because, for example, in the case of the hot press forming of the sheet A and the multilayer sheet B, the matting allows the air between the sheet A and the multilayer sheet B to be easily come out. On the other hand, in a case where the sheets without matting are conveyed to the lamination step, it becomes difficult to detach the multilayer sheet when a sheet without matting is sucked/vacuumed, aligned and laminated, and thereafter when air is injected to detach the sheet. Further, a problem of misalignment in the lamination tends to occur even when the sheet can be detached. The average roughness (Ra) of matting exceeding 5 $\mu$m tends to degrade thermal adhesiveness between the sheet A and the multilayer sheet B.

The average roughness (Ra) of the surface less than 0.1 $\mu$m leads to a tendency of causing a problem of sticking of the sheet to the conveying apparatus upon conveyance or lamination of the sheet as described above.

[7] Inlet sheet:

Preferably, an inlet sheet is used to dispose an IC chip (may be called "IC-Chip") and an antenna as needed. For instance, an IC-Chip and an antenna (may be called an "Antenna") are usually disposed in a sheet formed from a raw material such as PETG, which may be used as an inlet sheet. This inlet sheet may be disposed on one side of the composite hinge sheet for use. Further, an IC-chip and an antenna may be disposed directly on the composite hinge sheet described so far to configure as a composite hinge sheet serving as an inlet sheet, as well. This is for making it easy to dispose the IC chip and the antenna, which can be a so-called IC-chip embedded type laser-markable multilayer laminate for electronic passport.

A thermoplastic resin sheet such as PETG of about 200 to 300 $\mu$m may be cut, into which an IC-Chip and an Antenna are inserted, to form an inlet sheet. Then, this may be used as the configuration of over sheet (e.g., sheet A)/inlay sheet (e.g., sheet B)/inlet sheet/composite hinge sheet/inlay sheet (e.g., sheet B)/over sheet (e.g., sheet A). Further, this may be the configuration of over sheet/inlay sheet/composite hinge sheet/inlet sheet/inlay sheet/over sheet for an e-Card.

Further, the laser-markable multilayer laminate for electronic passport described so far may use an inlet sheet to be configured as the lamination of six sheets including sheet A/multilayer sheet B/the above-described composite hinge sheet for laser-markable multilayer laminate for electronic passport/inlet sheet/multilayer sheet B/sheet A to constitute a laser-marlable multilayer laminate for electronic passport. When the inlet sheet and the hinge sheet are separately manufactured, the resultant is a six-layered laminate including the lamination of six sheets, which has one more layer than the five-layered laminate including the lamination of five sheets, and therefore is inferior in the productivity. However, such a six-layered laminate has versatility, and therefore this can be one of preferable embodiments.

Herein, when the inlet sheet is configured not to be shared as in the above-stated composite hinge sheet serving as an inlet sheet but to be a separate body, such an inlet sheet may include a substantially noncrystalline aromatic polyester-based resin composition or a thermoplastic resin sheet made of the above-stated resin composition as a base material. More specifically, this may be configured as a thermoplastic resin sheet made of a copolymer polyester resin, which is a polyester composed of a dicarboxylic acid unit having mainly a telephthalate unit and an ethylene glycol unit (I) and a glycol unit having mainly 1,4-cyclohexane dimethanol unit (II), where a ratio of the ethylene glycol unit (I) to the 1, 4-cyclohexane dimethanol unit (II) ((I)/(II)) is 90 to 30/10 to 70 mol%. Then, a sheet with an IC chip and an antenna arranged is disposed to the thermoplastic resin sheet made of this polymer polyester resin to form an inlet sheet. Further, this inlet sheet is laminated on one face of the composite hinge sheet so as to cover the IC chip and the antenna to form the inlet sheet, and thereafter the sheet A and the multilayer sheet B are each laminated and hot-pressed, whereby a laminate can be formed. Further, after configuring sheet A/multilayer sheet B/composite hinge sheet/inlet sheet E/multilayer sheet B/sheet A, then a laminate may be formed by hot press. Such a configuration can prevent the IC chip and the antenna from being damaged by stress, heat or the like during hot press, which is preferable.

When the inlet sheet is laminated, the composite hinge sheet (or composite hinge sheet serving as inlet sheet, as well) includes at one end a protruding portion protruding by 5 to 100 mm from the sheet A and the multilayer sheet B, and this protruding portion is used (via) to machine-sewn bind or bond or machine-sewn bind and bond the inlet sheet with the electronic passport, which is one of preferable embodiments.

An adhesive sheet or the like is preferably used as a material for inlet sheet, instead of the above-stated substantially noncrystalline aromatic polyester-based resin composition or a thermoplastic resin sheet made of the above-stated resin composition, more specifically, instead of "a copolymer polyester resin, which is a polyester composed of a dicarboxylic acid unit having mainly a telephthalate unit and an ethylene glycol unit (I) and a glycol unit having mainly 1,4-cyclohexane dimethanol unit (II), where a ratio of the ethylene glycol unit (I) to the 1, 4-cyclohexane dimethanol unit (II) ((I)/(II)) is 90 to 30/10 to 70 mol%". This can not only omit the hot press step for forming the inlet sheet but also reduce damages of the IC chip and the antenna due to stress and heat that tend to be applied during excessive hot press. Examples of such an adhesive sheet, but not limited to this, include a polyester based adhesive sheet of about 30 $\mu$m in thickness (e.g., Aron Melt PES-111EE sheet produced by Toa Gosei Co., Ltd.). Herein, also when the aforementioned copolymer polyester resin or the adhesive sheet is used, the thickness of the inlet is preferably within the aforementioned desired range as a whole.

Preferably, the laser-markable multilayer laminate for electronic passport described so far is formed, after printing on a surface of the multilayer sheet B, as a five-layered laminate including the aforementioned sheet A/multilayer sheet B/composite hinge sheet/multilayer sheet B/sheet A or as a six-layered laminate including the aforementioned sheet A/multilayer sheet B/inlet sheet E/composite hinge sheet/multilayer sheet B/sheet A. Such formed laser-markable multilayer laminate for electronic passport has excellent laser markability, high contrast between the original surface color and the printed portions and so can obtain clear letters, symbols and images.

For instance, in an e-Card with an IC-Chip and an antenna disposed therein, when an inlet sheet E with an IC-Chip and an antenna disposed therein is used, the inlet sheet E is disposed as follows. That is, the inlet sheet E will be disposed on one side of the hinge sheet in the five-layered laminate including the sheet A/multilayer sheet B/hinge sheet/multilayer sheet B/sheet A as a basic unit of the data page. More specifically, this will be the configuration of a six-layered laminate including sheet A/multilayer sheet B/inlet sheet E/hinge sheet/multilayer sheet B/sheet A. Further, when an IC-Chip and an antenna are disposed in a hinge sheet and a hinge sheet serving as both of the inlet sheet and the hinge sheet (hereinafter called a hinge sheet (2) as needed) is used, this may be a five-layered laminate of sheet A/multilayer sheet B/inlet sheet E/hinge sheet (2)/multilayer sheet B/sheet A

[8] Electronic passport:

Preferably, an electronic passport uses the aforementioned laser-markable multilayer laminate for electronic passport, where the composite hinge sheet for laser-markable multilayer laminate for electronic passport includes at one end a protruding portion protruding by 5 to 100 mm from the sheet A and the multilayer sheet B, and this protruding portion is machine-sewn bound or bonded or machine-sewn bound and bonded with a cover or a back cover of the electronic passport. This configuration makes it easy to form an electronic passport. For instance, when the aforementioned laser-markable multilayer laminate for electronic passport is used and a five-layered laminate including the lamination of five sheets of the aforementioned sheet A/multilayer sheet B/composite hinge sheet/multilayer sheet B/sheet A is configured, the protruding portion of the composite hinge sheet is used to be machine-sewn bound or bonded or machine-sewn bound and bonded with a cover or a back cover of the electronic passport, whereby an electronic passport can be formed. Similarly, when the aforementioned laser-markable multilayer laminate for electronic passport is used and a six-layered laminate including the lamination of six sheets of the aforementioned sheet A/multilayer sheet B/inlet sheet E/composite hinge sheet/multilayer sheet B/sheet A is configured, the protruding portion of the composite hinge sheet is used to be machine-sewn bound or bonded or machine-sewn bound and bonded with a cover or a back cover of the electronic passport, whereby an electronic passport can be formed.

[9] Anti-counterfeit portion:

An anti-counterfeit portion is preferably further formed. The anti-counterfeit portion provided can securely prevent counterfeit or the like in combination with the aforementioned features. Herein, examples of the anti-counterfeit portion include letters and images (person images) by laser irradiation as well as hologram, micro-letters, microwave letters, embossed letters, oblique printing (oblique letters), lenticule, black-light printing, pearl printing or the like performed on at least one of the sheet A, the multilayer sheet B, the composite hinge sheet and the inlet sheet.

[10] Laser Marking:

A laser-markable multilayer laminate for electronic passport of the present embodiment produces a color by applying a laser beam thereto. Examples of the laser beam include a gas laser such as He-Ne laser, Ar laser, $CO_2$ laser, or excimer laser; a solid laser such as YAG laser or Nd·$YVO_4$ laser; semiconductor layer; and pigment laser. Among them, YAG laser and Nd·$YVO_4$ laser are preferable.

Incidentally, as described above, to the aforementioned resin composition may be added other additives such as a release agent, a stabilizer, an antioxidant, an ultraviolet absorber, and a reinforcing agent as needed within a range not imparting the properties of the resin composition.

In the laser-markable method of the present embodiment, the laser beam may be in a single mode or multi mode, and a laser beam having a narrow beam diameter such as 20 to 40 $\mu$m as well as a wide beam diameter of 80 to 100 $\mu$m may be used. A laser beam having a beam diameter of 20 to 40 $\mu$m in a single mode is preferable because contrast between a printing colored section and the base becomes three or more, thus leading to a printing quality with good contrast.

In this way, when laser beam is applied to the laser-markable multilayer laminate for electronic passport of the present embodiment, in the case of a single layer sheet or the multilayer sheet 2, a sheet A making up the laser-markable multilayer sheet produces a color. Since this sheet A is made of a polycarbonate resin of high thermal resistance as a main component, high-power laser light can be applied thereto. As a result, images or the like can be drawn easily and more clearly. Particularly, when the sheet A is the multilayer sheet 2 including the three layers of PC/PC (laser color layer)/PC, a PC transparent skin layer is provided on a PC laser color layer, whereby clearer images or the like can be drawn. For instance, in the case where a much higher-power laser light is applied to the PC laser color layer single layer, "foaming" occurs in the sheet, thus causing a "bulge" phenomenon at the surface of the sheet. Even under the same condition, the sheet A including a PC transparent skin layer provided on the PC laser coloring layer can suppress the "bulge" phenomenon because of the effect of the PC transparent skin layer. The effect obtained from the provision of this PC transparent skin layer is not limited to this. In the case of the PC laser color layer single layer, a marking portion in the sheet is directly ground by external friction. On the other hand, when the PC transparent skin layer is provided, although the PC transparent skin layer might be ground, the laser marking portion is not ground. Therefore, the laser marking portion can have more excellent scratch resistance and wear resistance.

Further, since the sheet made of a polycarbonate resin has high thermal resistance, a thermal fusion bonding of the multilayer laminate of the resin sheet has to be performed at a high temperature ranging from 200 to 230°C. A problem further arises in the productivity of the hot press step. Additionally, various printing is typically performed on an intermediate layer called an inlay layer in a plastic data sheet of an electronic passport. When printing is performed on the inlay layer, and then thermal fusion bonding is performed at a high temperature ranging from 200 to 230°C during the hot press step of the multilayer lamination, the printing is often "burned". Printed letters and images may change in color, which is therefore not preferable.

To cope with this problem, a coloring three-layered sheet of the present invention including PETG/PC (colored)/PETG is laminated on the PC laser coloring layer transparent single layer sheet as an overlay or on an inlay as a base layer of the transparent three-layered sheet including PC/PC(laser coloring layer)/PC. That is, since PETG has a glass-transition temperature at about 80°C, which is lower than a glass-transition temperature of a polycarbonate resin by about 60 to 70°C. Therefore, the thermal fusion bonding can be performed at a temperature at 150 to 170°C, whereby the thermal fusion bonding temperature can be reduced by about 50 to 60°C. As a result, a change in color of the printed letters or images in the printed layer can be suppressed. Accordingly, the laser-markable multilayer laminate for electronic passport of the present embodiment has excellent laser markability. When laser light is applied to the surface layer or a core layer of the surface layer to produce a black color for marking of images and letters, clear letters and images of black/which contrast can be drawn because the base layer is white.

A three-layered coextrusion sheet (multilayer sheet 1) of PETG/PC (laser coloring layer)/PETG is used for a transparent laser marking over sheet (overlay), whereby the core layer PC (laser coloring layer) has excellent scratch resistance and wear resistance at marking because of the PETG skin layer. It further has excellent thermal adhesiveness with a printed inlay layer. Especially, this leads to an effect of excellent thermal adhesiveness at a relatively low heat temperature at 150 to 170°C. In this way, the transparent laser marking single layer or multilayer sheet of the present embodiment leads to excellent laser markability and enables marking performed deeply in the transparent laser marking layer itself, thus making it possible to perform marking of excellent printing density as well as excellent scratch resistance and wear resistance at a marking section.

More preferably, in a method for laser-markable the aforementioned laser-markable multilayer laminate for electronic passport, as illustrated in Figs. 5 and 7, laser light is applied for printing from the sheet A side (from the sheet A side of the single layer sheet or of the multilayer sheet 2) laminated in the laser-markable multilayer laminate for electronic passport (making up the laser-markable multilayer laminate for electronic passport). Alternatively, as illustrated in Fig. 6, laser light is applied for printing from the sheet A side (from the sheet A side of the multilayer sheet 1) laminated in the laser-markable multilayer laminate for electronic passport (making up the laser-markable multilayer laminate for electronic passport). In this way, desired laser light 7 is applied from a transparent laser marking (multilayer) sheet side of the present embodiment, whereby images or the like can be drawn easily and clearly. Therefore, using the single layer sheet or the multilayer sheet 2, in combination with the multilayer sheet B, the composite hinge sheet and the inlet sheet E, to lead to excellent laser markability and excellent thermal adhesiveness as well as excellent wear resistance at the marking portion. Further, using the multilayer sheet 1, in combination with the multilayer sheet B, the composite hinge sheet and the inlet sheet E, to lead to excellent laser markability and to allow white letters, white symbols and white patterns to be more easily and clearly drawn on a black base by a laser beam at the surface or an interface portion between a base and a cover. Especially, information codes such as barcodes can be marked with good resolution.

[11] Applications:

A laser-markable multilayer laminate for electronic passport of the present embodiment can be used preferably for an electronic passport.

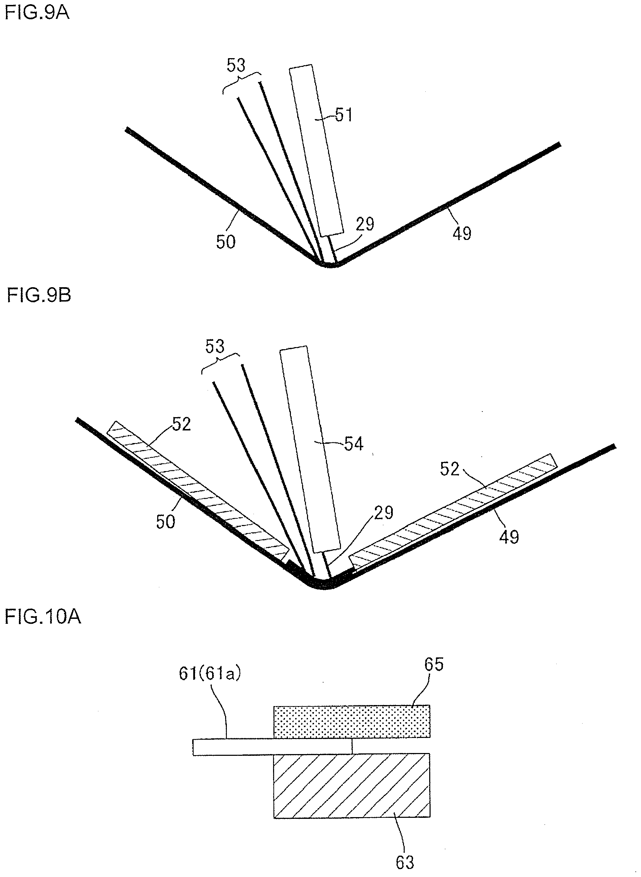

More specifically, passports as illustrated in Fig. 9A and Fig. 9B are exemplified. For instance, as illustrated in Fig. 9A, in the case of an e-Card type passport, an IC chip (IC-CHIP) and an antenna (ANTENNA) are inserted in a laminate 51 as an inlet (Inlet), and such a laminate is bound between a cover 49 and a back cover 50 via a protruding portion 29 of a hinged part. On the e-Card as the lamination 51, personal information (face image and personal information) is written by laser marking on demand. That is, the personal information is written on demand on the IC chip or a plastic sheet (plastic-sheet) provided in the e-Card. Herein, reference numeral 53 in the drawing denotes a visa sheet. Alternatively, as illustrated in Fig. 9B, in the case of an e-Cover type passport, an IC chip and an antenna are provided in a plastic inlay 52 (Plastic-Inlay) attached to a cover 49 or a back cover 50, and additionally a lamination 54 called data page (Data-Page) made of a plastic sheet (Plastic-sheet) is bound via a protruding portion 29 of a hinged part. In the case of the e-Cover type, personal information will be written on the IC chip and the plastic sheet of the data page on demand.

Examples

Hereinafter the present invention will be described more specifically by way of Examples. However, the present invention is by no means limited to the Examples. Various evaluations and measurements in Examples were carried out by the following methods.

[1] Composite hinge sheet:

For the following Examples 1 to 6 and Comparative Examples 1 to 6, the following experiments were conducted about [1-1] cut sheet workability, [1-2] sheet flexibility, [1-3] strength at machine-sewn portion, [1-4] sheet warpage, [1-5] sheet thermal resistance and [1-6] time-related stability against deterioration. Further, for evaluation of a heated laminate also, experiments were conducted about [1-7] thermal adhesiveness, [1-8] thermal resistance and [1-9] thickness uniformity of laminate.

[1-1] Cut Sheet Workability:

Cut sheet workability was evaluated based on the following criteria for a cutting property during cutting into 110 × 300 mm by a die cut blade and workability after cutting and during the conveyance to a heat lamination step.

<<Judgment Criteria>>

○: Good for the cutting property and the workability
Δ: Although the cutting property was good, the workability had a problem
ΔΔ: The cutting property was fair and the workability had a problem
×: The cutting property had a problem, but workability had no problem
××: The cutting property and the workability had problems

[1-2] Flexibility of Sheet:

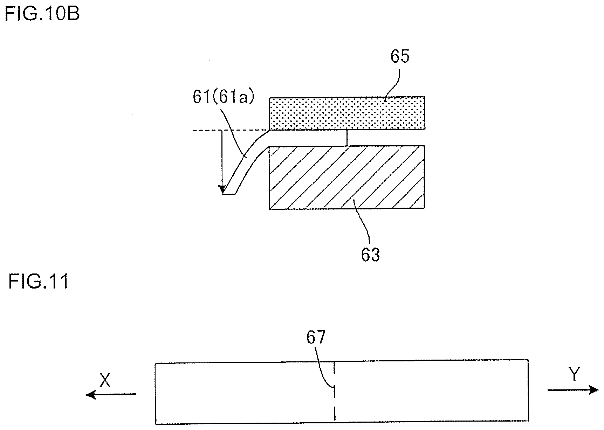

A cut sheet of 10 mm in width × 100 mm in length was prepared. As illustrated in Fig. 10A, such a cut sheet was made to protrude from a base by 5 cm in length, and the degree of dropping of the cut sheet as a test sample was measured, which was evaluated by the following criteria for evaluation of flexibility of the sheet. More specifically, as illustrated in Fig. 10A, a cut sheet 61 was placed on a horizontal base 63, an upper portion of the cut sheet 61 was pressed by a supporting board 65, and then as illustrated in Fig. 10B, the degree of dropping of a protruding portion 61a of the cut sheet 61 was measured.

<<Judgment Criteria>>

◎: Excellent because "dropping" of the sheet was 2 cm or greater.
○: Good because "dropping" of the sheet was 1 cm to less than 2 cm.
Δ: A problem tends to occur because "dropping" of the sheet was 0.4 cm to less than 1 cm.
×: Bad because "dropping" of the sheet was less than 0.4 cm.

[1-3] Strength at Machine-Sewn Portion

As illustrated in Fig. 11, a hinge sheet test sample of 20 × 100 mm was prepared, under which paper was spread, and perforation 67 was bored with a pitch of 5 mm by an industrial sewing machine. Then, after the paper was removed, tensile experiment was conducted in such a manner that the sample was stretched in the directions of arrow X and Y in the drawing at an experiment rate of 300 mm/min. Then, the strength (N/cm) of the machine-sewn portion was measured and was evaluated by the following criteria.

<<Judgment Criteria>>

◎: Very excellent because the strength of the machine-sewn portion was 40 (N/cm) or greater, or a breakage occurred at a part other than the machine-sewn portion, and the strength thereof was 40 (N/cm) or greater.
○: Good because the strength of the machine-sewn portion was 20 (N/cm) or greater and less than 40 (N/cm).
Δ: A problem tends to occur because the strength of the machine-sewn portion was 10 (N/cm) or greater and less than 20 (N/cm).
ΔΔ: A problem was observed to some extent, and the strength of the machine-sewn portion was 10 (N/cm) or greater and less than 15 (N/cm).
×: Bad because the strength of the machine-sewn portion was less than 10 (N/cm).

[1-4] Sheet Warpage:

After cutting a sheet into 300 × 300 mm, the sheet was placed on a horizontal base, and the height of an end portion rising from the horizontal base was measured and evaluated by the following criteria.

<<Judgment Criteria>>

◎: Very excellent because the height at each end portion was 0.1 mm or less.
○: Good because the height at each end portion was less than 1 mm.
∆: A problem tends to occur because the height at each end portion was less than 3 mm.
X: Bad because the height at each end portion was 3 mm or greater.

[1-5] Sheet Thermal Resistance:

After cutting a sheet into 300 × 300 mm, the sheet was placed horizontally on a Teflon sheet of 1 mm in thickness, and the state after 150°C × 10 minutes was observed and evaluated by the following criteria.

<<Judgment Criteria>>

◎: No "curl" was observed at all in the sheet.
○: Although "curl" was observed slightly, the sheet can be used without problem.
∆: "Curl" of the sheet was serious, and a problem occurred in the machine-sewing binding.
∆∆: Although curl was not like a cylinder shape, "curl" of the sheet was serious, and a problem occurred in the machine-sewing binding.
×: Since the sheet was curled like a cylinder shape, the sheet was unusable.

[1-6] Time-related Stability against Deterioration:

After cutting a sheet into 50 × 90 mm, the sheet was subjected to a 100-hour experiment using a QUV accelerated weathering tester, and then was taken out. The sheet was evaluated about color difference (∆E) with a sample not subjected to the test and about sheet flexibility by a finger-touch test, and time-related stability against deterioration was evaluated by the following criteria. Herein, this QUV accelerated weathering test was conducted under the conditions of irradiation energy of 1.6 mW/cm$^2$ and the temperature at 63°C.

<<Judgment Criteria>>

◎: Excellent, ∆E less than 3, and very excellent in flexibility as well
○: Good, ∆E less than 6 as well as good flexibility
∆: A problem tends to occur because of ∆E of 6 or greater, but flexibility was good and a problem tends to occur as a whole. Or although good ∆E less than 6, a problem tends to occur for flexibility and a problem tends to occur as a whole.
×: A problem tends to occur because of ∆E of 6 or greater and a problem tends to occur for flexibility. Bad as a whole.
The sheet flexibility after the QUV accelerated weathering test was evaluated by the following criteria.

<<Judgment Criteria>>

◎: Very excellent without differences from a sample not subjected to the test.
○: Good because although a slight difference was observed from a sample not subjected to the test, the sheet had sufficient flexibility.
∆: Greatly changed in flexibility from a sample not subjected to the test, and a problem tends to occur.
×: Bad because the sheet generated a crack and was fragile.

[1-7] Thermal adhesiveness

The sheet A and the multilayer sheet B were cut into 100 × 300 mm. The hinge sheet was cut into 110 × 300 mm. Thereafter, a release agent was applied at one ends of the sheet A and the multilayer sheet B, and then five sheets including sheet A/multilayer sheet B/hinge sheet/multilayer sheet B/sheet A were sandwiched between two chrome plating steel sheets and was preheated using a rotary vacuum press machine (produced by Nissei Plastic Industrial Co., Ltd.) at a temperature of 100°C for 90 seconds. Thereafter, it was pressurized at a temperature of 160°C and with an actual surface pressure of 20 kgf/cm$^2$ for 90 seconds. Further, after cooling for 90 seconds, the lamination sheet was taken out, and was cut into a test sample of 20 mm in width including the release agent application portion, which was subjected to a peeling test at a test rate of 300 mm/min. Thermal adhesiveness between the hinge sheet and the multilayer sheet B was evaluated by the following criteria. Herein, as the sheet A, (Manufacturing Example 1) sheet A[1] described later was used, and as the multilayer sheet B, (Manufacturing Example 11) multilayer sheet B[1] described later was used.

<<Judgment Criteria>>

◎: Very good because peeling strength was 50 N/cm or greater or material fracture of sheet was observed.
○: Good because peeling strength was 20 N/cm or greater and less than 50 N/cm.
Δ: A problem tends to occur because peeling strength was 10 N/cm or greater and less than 20 N/cm.
×: Bad because peeling strength was less than 10 N/cm.
××: Failed in thermal fusion bonding (easily peeled off by hands), failure in manufacturing.

[1-8] Thermal Resistance:

Using the laminate after thermal adhesiveness test, appearance of the portion protruding by 10 mm from the sheet A and the multilayer sheet B at one end of the laminate was visually evaluated. In this way, thermal resistance of the hinge sheet during the thermal fusion bonding lamination step was evaluated.

<<Judgment Criteria>>

◎: Good because no shrinkage was observed.
○: Shrinkage in a level without problems was observed slightly.
Δ: Shrinkage was observed.
ΔΔ: Shrinkage was observed greatly, partially softened.
×: Bad because shrinkage was observed greatly or partially softened, and dropping was observed.
××: Very bad because softening and dropping were observed.

[1-9] Thickness Uniformity of Laminate:

Using the laminate after thermal adhesiveness test, the total thickness of the laminate was measured, and the thickness uniformity of the laminate was evaluated by the following criteria.

<<Judgment Criteria>>

○: Good because a decrease in total thickness was less than 3%.
Δ: A problem tends to occur because a decrease was 3% to less than 6%.
×: Bad because a decrease in total thickness was 6% or greater.

(Example 1) Composite Hinge Sheet [1]

As a thermoplastic polyurethane elastomer (TPU), non-yellowing type "Miractran XN-2004" produced by Nippon Miractran Co., Ltd. having hardness (Shore A (hereinafter may be called "Shore-A" as needed) of 95 was used, and as polyester woven fabric (hereinafter may be called "PET-mesh" or "PET-mesh cloth" as needed), monofilament polyester "TNo-80-48" produced by Nippon Tokusyu Fabric Co., Ltd. of 48 μm in fiber diameter, 80 μm in thickness and 72% in opening ratio was used. Then, the TPU was melt-coextruded from a T-die extruder at 185°C and was roll-compressed with the PET-mesh at the exit of T-die so that the TPU including TPU/PET-mesh was completely integrated with the PET-mesh to form TPU skin layers on both faces of the PET-mesh. In this way, a TPU/PET-mesh composite hinge sheet of 150 μm in total thickness was formed.

(Example 2) Composite Hinge Sheet [2]

The TPU and the PET-mesh similar to Example 1 were used. Further, similarly to Example 1, the TPU was melt-coextruded from two T-die extruders at 185°C and was roll-compressed immediately after the exit of T-die to be in the configuration of TPU/PET-mesh/TPU. In this way, a TPU/PET-mesh composite hinge sheet of 150 μm in total thickness was formed, where TPU and PET-mesh were completely integrated.

(Example 3) Composite Hinge Sheet [3]

Instead of the PET-mesh of Example 1, monofilament polyamide "NNo-100M" produced by Nippon Tokusyu Fabric Co., Ltd. of 71 μm in fiber diameter, 125 μm in thickness and 52% in opening ratio as woven fabric of thermoplastic polyamide (hereinafter called "polyamide-mesh" as needed) was used. Others were the same as in Example 1, whereby a TPU/polyamide-mesh composite hinge sheet of 150 μm in total thickness was formed including completely integrated TPU/polyamide-mesh.

(Example 4) Composite Hinge Sheet [4]

Instead of the TPU of Example 1, hydrogenated styrene-based elastomer (SEPS), produced by Kuraray Co., Ltd., "SEPTON 2104" having hardness (Shore-A) of 98 was used, and the PET-mesh of Example 1 was used. Further, it was melt-coextruded from a T-die extruder at 230°C and was roll-compressed with the PET-mesh at the exit of T-die so that a SEPS/PET-mesh composite hinge sheet of 150 μm in total thickness was formed including completely integrated SEPS/polyamide-mesh.

(Example 5) Composite Hinge Sheet [5]

Monofilament polyester woven fabric "TNo-250SS" produced by Nippon Tokusyu Fabric Co., Ltd. of 30 μm in fiber diameter, 50% in opening ratio and 47 μm in thickness was used, and the same TPU as Example 1 was used. Further, similarly to Example 1, a TPU/PET-mesh composite hinge sheet of 150 μm in total thickness was formed including completely integrated TPU and PET-mesh and TPU skin layers are formed on both faces of the PET-mesh.

(Example 6) Composite Hinge Sheet [6]

Monofilament polyester woven fabric "TNo-250SS" produced by Nippon Tokusyu Fabric Co., Ltd. of 30 μm in fiber diameter, 50% in opening ratio and 47 μm in thickness was used, and similarly to Example 1, a TPU/PET-mesh cloth composite hinge sheet of 70 μm in total thickness was formed including completely integrated TPU and PET-mesh cloth and TPU skin layers are formed on both faces of the PET-mesh cloth.

(Comparative Example 1) Hinge Sheet [7]

Monofilament polyester woven fabric "TNo-150T" produced by Nippon Tokusyu Fabric Co., Ltd. of 54 μm in fiber diameter, 46% in opening ratio and 84 μm in thickness was used, and the TPU of Example 1 was used. Further, similarly to Example 1, the manufacturing of a hinge sheet was tried. However, TPU did not enter openings of the woven fabric because of small opening ratio of the polyester woven fabric, and therefore a TPU/PET-mesh hinge sheet of 150 μm in total thickness was formed having a lamination configuration close to a two-layered lamination configuration of TPU and PET, where TPU partially entered the openings of polyester woven fabric but did not block all of the openings.

(Comparative Example 2) Hinge Sheet [8]

Instead of thermoplastic polyurethane elastomer (TPU) of Example 1, special propylene-based elastomer (TAF) produced by Sumitomo chemical Co., Ltd. "Tafthren T3522" having hardness (Shore D (hereinafter may be called "Shore-D" as needed) of 78 was used, and PET-mesh of Example 1 was used. Further, using a T-die extruder at a melt coextrusion temperature of 200°C, similarly to Example 1, a TAF/PET-mesh composite hinge sheet of 150 μm in total thickness was formed including completely integrated PETG and PET-mesh and TAF skin layers formed on both faces of the PET-mesh.

(Comparative Example 3) Hinge Sheet [9]

As a thermoplastic polyurethane elastomer (TPU), non-yellowing type "Miractran XN-2004" produced by Nippon Miractran Co., Ltd. having hardness (Shore A) of 95 was used, and a hinge sheet as a TPU single sheet of 150 μm in total thickness was obtained using a T-die extruder at 185°C.

(Comparative Example 4) Hinge Sheet [10]

As a thermoplastic polyurethane elastomer (TPU), non-yellowing type "Miractran XN-2004" produced by Nippon Miractran Co., Ltd. having hardness (Shore A) of 95 was used, and as polyester woven fabric (PET-mesh), monofilament polyester "TNo-80-48" produced by Nippon Tokusyu Fabric Co., Ltd. of 48 μm in fiber diameter, 80 μm in thickness and 72% in opening ratio was used. Then, after melt coextrusion of the TPU from a T-die extruder at 185°C, it was lightly roll-compressed by bringing into contact with PET-mesh, whereby a hinge sheet of 150 μm in total thickness as a lamination sheet was obtained, where TPU and PET-mesh just came into contact with at their interfaces and TPU did not enter the openings of the polyester woven fabric and did not block the openings.

(Comparative Example 5) Hinge Sheet [11]

As a thermoplastic polyester elastomer (TPEE), "Hytrel 7272" produced by Du Pont Co., Ltd. having hardness (Shore-D) of 72 was used, and PET-mesh of Example 1 was used. Further, similarly to Example 1, TPEE was melt-coextruded from a T-die extruder at 230°C and was roll-compressed with the PET-mesh at the exit of T-die so that a TPEE/PET-mesh composite hinge sheet of 150 μm in total thickness was formed where the TPU including TPEE/PET-mesh was completely integrated with the PET-mesh.

(Comparative Example 6) Hinge Sheet [12]

Hydrogenated styrene-based elastomer (SEPS), produced by Kuraray Co., Ltd., "SEPTON 4033" having hardness (Shore-A) of 76 was used, and the PET-mesh of Example 1 was used. Further, similarly to Example 4, a SEPS/PET-mesh hinge sheet of 150 μm in total thickness was formed.

Using the aforementioned Examples 1 to 6 and Comparative Examples 1 to 6, various evaluations were conducted about aforementioned [1-1] to [1-9]. Table 1 and Table 2 show results thereof.

[Table 1]

|  | Example 1 | Example 2 | Example 3 | Example 4 | Example 5 | Example 6 |
|---|---|---|---|---|---|---|
| Structure | TPU/PET - mesh | TPU/PET - mesh | TPU/ polyamide-mesh | SEPS/PET-mesh | TPU/PET - mesh | TPU/PET - mesh |
|  | Composite | Composite | Composite | Composite | Composite | Composite |
| Total Thickness | 150μm | 150μm | 150μm | 150μm | 150μm | 70μm |
| Cut sheet Workability | ○ | ○ | ○ | ○ | Δ | ΔΔ |
| Sheet Flexibility | ◎ | ◎ | ◎ | ◎ | ◎ | ◎ |
| Strength at Machine-sewn Portion | ○ | ○ | ◎ | ○ | Δ | ΔΔ |
| Sheet Warpage | ◎ | ◎ | ◎ | ◎ | ◎ | ◎ |
| Sheet Thermal Resistance | ◎ | ◎ | ◎ | ◎ | ○ | ΔΔ |
| Time-related Stability against Deterioration | ○ | ○ | ○ | ○ | ○ | ○ |
| Thermal Adhesiveness | ○ | ○ | ○ | ○ | ○ | ○ |
| Thermal Resistance | ◎ | ◎ | ◎ | ○ | Δ | ΔΔ |
| Thickness Uniformity | ○ | ○ | ○ | ○ | ○ | ○ |

[Table 2]

|  | Comparative Example 1 | Comparative Example 2 | Comparative Example 3 | Comparative Example 4 | Comparative Example 5 | Comparative Example 6 |
|---|---|---|---|---|---|---|
| Structure | TPU/PET - mesh | TAF/PET-mesh | TPU | TPU/PET-mesh | TPEE/PET-mesh | SEPS/PET-mesh |

(continued)

| | Comparative Example 1 | Comparative Example 2 | Comparative Example 3 | Comparative Example 4 | Comparative Example 5 | Comparative Example 6 |
|---|---|---|---|---|---|---|
| | Pseudo-lamination structure | Composite | Single | Lamination structure | Composite | Composite |
| Total Thickness | 150μm | 150μm | 150μm | 150μm | 150μm | 150μm |
| Cut sheet Workability | × | ○ | ×× | × | ○ | × |
| Sheet Flexibility | ○ | × | ◎ | ○ | ○ | ○ |
| Strength at Machine-sewn Portion | ○ | ◎ | Δ | ○ | ○ | Δ |
| Sheet Warpage | Δ | Δ | ◎ | Δ | ○ | ○ |
| Sheet Thermal Resistance | × | Δ | ○ | × | ○ | ○ |
| Time-related Stability against Deterioration | ○ | ◎ | ○ | ○ | × | ○ |
| Thermal Adhesiveness | ○ | × | ○ | ○ | ○ | ○ |
| Thermal Resistance | Δ | Δ | × | Δ | ○ | × |
| Thickness Uniformity | Δ | ○ | ○ | Δ | ○ | ○ |

(Consideration 1)

As illustrated in Table 1 and Table 2, Examples 1 to 4 had excellent cut sheet workability, excellent sheet flexibility and strength at machine-sewn portion, were free from sheet warpage, had excellent thermal adhesiveness of a hinge sheet and further had time-related stability against deterioration. Therefore, they could be used securely for a long time of 10 years as in a passport. Further, in the heat lamination step as well, they had excellent thermal adhesiveness, thermal resistance and thickness uniformity, which could be practically used as a laminate for passport. As compared with Examples 1 to 4, since the hinge sheet of Example 5 had a small fiber diameter of polyester woven fabric and a small thickness, the hinge sheet had poor effect for TPU of reinforcing by the polyester woven fabric. More specifically, it had inferior strength at the machine-sewn portion and such thermal resistance in the heat lamination step. Example 6 had bad cut sheet workability and inferior strength at the machine-sewn portion because of a thickness as thin as 70 μm, and had inferior sheet thermal resistance and thermal resistance in the heat lamination step. However, in terms of balance of various evaluations of the aforementioned [1-1] to [1-9], it was preferable than Comparative Examples, and therefore it was included in Examples.

On the other hand, since in the hinge sheet of Comparative Example 1 polyester woven fabric had small opening ratio of 46%, TPU could not enter the openings of the woven fabric sufficiently. That is, the hinge sheet had a two-layer lamination structure including TPU and PET woven fabric where TPU partially entered the openings of the polyester woven fabric, and therefore it had poor cut sheet workability and the hinge sheet had large warpage. Further, in the thermal resistance test of the hinge sheet, it was curled greatly, and so it was difficult to use it. Therefore, in the heat lamination step, it had poor thermal resistance and thickness uniformity. Since the hinge sheet of Comparative Example 2 using special propylene-based elastomer (TAF) having high hardness instead of TPU, the hinge sheet was confirmed to have poor flexibility and poor thermal adhesiveness. Therefore, it was shown that the hinge sheet had low feasibility for bookbinding by machine-sewing.

Since the hinge sheet of Comparative Example 3 was a TPU single sheet, the hinge sheet had excellent sheet flexibility but poor cut sheet workability and thermal resistance in the heat lamination step. Therefore, it had difficulty for feasibility. Since the hinge sheet of Comparative Example 4 was configured as a lamination structure sheet where TPU and PET-mesh come into contact at their interfaces, the hinge sheet had poor cut sheet workability and had large warpage similarly to the hinge sheet of Comparative Example 1. Further, the sheet generated curl greatly in the thermal resistance test, and therefore had poor thermal resistance and thickness uniformity in the heat lamination step, which had low feasibility. Since the hinge sheet of Comparative Example 5 used Hytrel 7272 as TPEE instead of TPU of Example 1, the hinge sheet had insufficient time-related stability against deterioration. Therefore, it could not be used securely for a long time. Since the hinge sheet of Comparative Example 6 using SEPS having small hardness instead of TPU of Example 1, it had poor cut sheet workability and poor thermal resistance in the heat lamination step. Therefore it was difficult to use.

In this way, the hinge sheets of Comparative Examples 1 to 6 caused problems in the manufacturing process of the laminate, and so had difficulty for feasibility. Even when they are manufactured, a trouble will occur for normal use of a passport such as folding of pages of the passport, and additionally it was demonstrated by the aforementioned experiments that they caused a problem such as time-related stability against deterioration. Therefore, it was confirmed that they had poor feasibility.

[2] Laser-marking multilayer laminate for electronic passport and electronic passport:

Next, the following experiments were carried out for Examples 7 to 13 and Comparative Examples 7 to 15 using the aforementioned composite hinge sheet as well as the sheet A and the multilayer sheet B described later.

[2-1] Transparency of Sheet A:

The whole beam transmittance of the sheet A was measured by a spectrophotometer (trade name of "EYE7000" produced by GretagMacbeth GmbH).

<<Judgment Criteria>>

○: Good, whole beam transmittance of 80% or greater, △: A problem might occur because whole beam transmittance of 60% or greater and less than 80%, ×: Bad, whole beam transmittance less than 60%.

[2-2] Sheet conveyance property:

After cutting the transparent laser marking sheet A in 100 × 300 mm, when they were conveyed by a sheet conveyer and were placed at a predetermined position of a die in a hot press machine, the sheet conveyance property was evaluated by the following criteria:

<<Judgment Criteria>>

○: Good without problems;
△: When the sheet was vacuumed, conveyed and detached, a problem occurred because the sheet was difficult to be detached from a vacuum unit and misaligned; and
×: It was hard to detach a sheet from a vacuum unit.

[2-3] Releasability after Lamination Hot Press Forming

Using a vacuum pressing machine (produced by Nissei Plastic Industrial Co., Ltd.), a laminated sheet was sandwiched between two chrome plating steel sheets and was preheated at a press temperature of 100° C for 2 minutes. Thereafter, it was held at a press temperature of 170° C and with an actual surface pressure of 12 kgf/cm$^2$ for 2 minutes. Further, after cooling to a room temperature, the sample sandwiched between the chrome plating steel sheets was taken out together with the chrome plating steel sheets, and die releasability was evaluated as follows when the chrome plating steel sheets were peeled off from the sample.

<<Judgment Criteria>>

○: easy peeling, Δ: sample adhered slightly to the die, although peeling was possible, scratches occurred on the sheet surface and unusable, ✕: sample adhered to die.

[2-4] Air Bubble Releasing Property:

As stated above, a state of air bubbles left in the lamination after hot press was observed, and the air bubble releasing property was evaluated as follows.

<<Judgment Criteria>>

○: Good because no bubbles were observed in the lamination, Δ: A trouble tends to occur because bubbles slightly remained in the lamination, ✕: Bad because a lot of bubbles remained in the lamination.

[2-5] Thermal Adhesiveness:

After a release agent was applied at one ends of the sheet A and the multilayer sheet B, five sheets including sheet A/multilayer sheet B/hinge sheet/multilayer sheet B/sheet A were sandwiched between two chrome plating steel sheets and was preheated using a vacuum press machine (produced by Nissei Plastic Industrial Co., Ltd.) at a press temperature of 100°C for 2 minutes. Thereafter, it was held at a press temperature of 160°C and with an actual surface pressure of 12 kgf/cm$^2$ for 2 minutes. Further, after cooling to a room temperature, the lamination sheet was taken out, and the sheets were peeled off from the release agent application portion by hands for evaluation of thermal adhesiveness between the laminated sheets as follows.

<<Judgment Criteria>>

◎: No peeling and excellent thermal adhesiveness, ○: very limited part was peelable but sheet fracture occurred (material fracture), Δ: Peelable by a relatively large force, ✕: Peeling occurred entirely, ✕✕: Peeling occurred after hot press, or peeling occurred entirely by a very small force.

[2-6] Laser Markability:

Using the aforementioned heated lamination sheet, laser markability thereof was evaluated by Nd·YVO$_4$ laser (trade name of "LT-100SA" produced by Laser Technology Inc. and trade name of "RSM103D" produced by Rofin-Sinar technologies Inc.). Specifically, marking was performed at a laser irradiation rate of 400 mm/sec, and laser markability was determined based on the clarity of images and the surface state of a marking portion as follows.

<<Judgment Criteria>>

◎: Excellent clarity without anomalies such as bulge at a laser irradiation portion
○: Good clarity without anomalies such as bulge at a laser irradiation portion
Δ: Insufficient clarity or slight bulge occurred at the laser irradiation portion
✕: Bad clarity or terrible bulge occurred at the laser irradiation portion

[2-7] Contrast:

After printing on the multilayer sheet B and processing for the aforementioned [2-5], [2-6], contrast of images or the like by laser marking and images or the like by printing were evaluated visually.

<<Judgment Criteria>>

○: Clarity and visibility of images by laser marking and images by printing did not change.
Δ: Clarity and visibility of images by laser marking and images by printing decreased.
✕: Clarity and visibility of images by laser marking and images by printing were degraded.

[2-8] Wear Resistance of laser-markable multilayer laminate for electronic passport

For the aforementioned thermal fusion bonded laminate in [2-6] in which a black laser marking portion was formed by laser light irradiation, wear resistance was tested. More specifically, using a rubbing tester (produced by Imoto Machinery Co., Ltd.,) test was conducted using #00 steel wool (load 500gr) 50 times (reciprocate 25 times) and states before and after the test were judged visually for evaluation of wear resistance.

<<Judgment Criteria>>

◎: No anomalies at a marking portion, clarity and visibility of images did not change.
○: Although a marking portion was scraped, clarity and visibility of images were good.
Δ: A marking portion was scraped more, and clarity and visibility of images were degraded.
✕: A marking portion was scraped greatly, and clarity and visibility of images were extremely degraded.

(Manufacturing Example 1) Sheet A[1]:

As a skin layer, polycarbonate (trade name of "TARFLON FN2500A" produced by Idemitsu Kosan Co., Ltd., with a melt volume rate = 8 cm$^3$/10min.) was used, and as a core layer, 0.0015 part by mass of carbon black (#10 produced by Mitsubishi Chemical Corporation, with an average particle diameter of 75 nm and a DBP oil absorption of 86 ml/100 g) as the energy absorber absorbing a laser beam was blended. Further 0.1 part of n-octadesyl-3-(3,5-di-t-butyl-4-hydroxyphenyl)propionate (trade name of "Irganox 1076" produced by Ciba Specialty Chemicals Inc.) as the phenol based antioxidant, and 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber were blended to obtain a three-layered sheet A including skin layer/core layer/skin layer by T-die melt coextrusion. The sheet had a total thickness of 100 μm with the skin layers on the front and rear sides having the same thickness, and the layers had a configuration of the skin layer (18 μm)/the core layer (64 μm)/the skin layer (18 μm) so that the ratio of the thickness of the core layer was 64%. Further, both of the surfaces were subjected to matting to have an average surface roughness (Ra) of 0.5 to 1.8 μm to obtain a three-layered sheet A[1].

(Manufacturing Example 2) Sheet A[2]:

A sheet A[2] was obtained in a similar manner to Manufacturing Example 1 except that the sheet had a total thickness of 100 μm with the skin layers on the front and rear sides having the same thickness, and the layers had a configuration of the skin layer (28 μm)/the core layer (44 μm)/the skin layer (28 μm) so that the ratio of the thickness of the core layer was 44%.

(Manufacturing Example 3) Sheet A[3]:

A sheet A[3] was obtained in a similar manner to Manufacturing Example 1 except that the sheet had a total thickness of 100 μm with the skin layers on the front and rear sides having the same thickness, and the layers had a configuration of the skin layer (45 μm)/the core layer (10 μm)/the skin layer (45 μm) so that the ratio of the thickness of the core layer was 10%.

(Manufacturing Example 4) Sheet A (single layer sheet A)[4]:

Polycarbonate (trade name of "TARFLON FN2500A" produced by Idemitsu Kosan Co., Ltd., with a melt volume rate = 8 cm$^3$/10min.) was used, and 0.0015 part by mass of carbon black (#10 produced by Mitsubishi Chemical Corporation, with an average particle diameter of 75 nm and a DBP oil absorption of 86 ml/100 gr) as the energy absorber absorbing a laser beam was blended. Further 0.1 part of n-octadesyl-3-(3,5-di-t-butyl-4-hydroxyphenyl)propionate ("Irganox 1076" produced by Ciba Specialty Chemicals Inc.) as the phenol based antioxidant, and 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber were blended to obtain a transparent laser-markable single layer sheet of 100 μm in total thickness by T-die melt coextrusion. Further, a single layer sheet A[4] was obtained, both of which surfaces were subjected to matting to have an average surface roughness (Ra) of 0.5 to 1.8 μm.

(Manufacturing Example 5) Sheet A[5]:

As a skin layer, to 100 parts by mass of noncrystalline polyester (trade name of "Easter GN071" produced by Eastman Chemical Company, with EG/CHDM = 70/30 mol%) was blended 0.3 part by mass of calcium stearate as a lubricant. As a core layer, polycarbonate (trade name of "TARFLON FN2500A" produced by Idemitsu Kosan Co., Ltd., with a melt volume rate = 8 cm$^3$/10min.) was used, and 0.0015 part by mass of carbon black (#10 produced by Mitsubishi Chemical Corporation, with an average particle diameter of 75 nm and a DBP oil absorption of 86 ml/100 g) as the energy absorber absorbing a laser beam was blended with the polycarbonate. Further 0.1 part of (n-octadesyl-3-(3,5-di-t-butyl-4-hydroxyphenyl)propionate ("Irganox 1076" produced by Ciba Specialty Chemicals Inc.) as the phenol based antioxidant and 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber were blended to obtain a three-layered sheet A[5] including skin layer/core layer/skin layer by T-die melt coextrusion. The sheet had a total thickness of 100 μm with the skin layers on the front and rear sides having the same thickness, and the layers had a configuration of the skin layer (18 μm)/the core layer (64 μm)/the skin layer (18 μm) so that the ratio of the thickness of the core layer was 64%. Further, both of the surfaces were subjected to matting to have an average surface roughness (Ra) of 0.5 to 1.8 μm to obtain a three-layered sheet A[5].

(Manufacturing Example 6) Sheet A[6]:

Similarly to Manufacturing Example 5, the sheet had a total thickness of 100 μm with the skin layers on the front and rear sides having the same thickness, and the layers had a configuration of the skin layer (40 μm)/the core layer (20 μm)/the skin layer (40 μm) so that the ratio of the thickness of the core layer was 20%. Further, both of the surfaces were subjected to matting to have an average surface roughness (Ra) of 0.5 to 1.8 μm to obtain a three-layered sheet A[6].

(Manufacturing Example 7) Sheet A[7]:

In Manufacturing Example 5, three-layer coextrusion was tried where the layers had a configuration of the skin layer (5 μm)/the core layer (90 μm)/the skin layer (5 μm) so that the ratio of the thickness of the core layer was 90%. However, since the skin layers were too thin, it was difficult to manufacture this layer configuration stably.

(Manufacturing Example 8) Sheet A[8]:

Sheet A[8] was obtained similarly to Manufacturing Example 5 except that a lubricant was not added to noncrystalline polyester.

(Manufacturing Example 9) Sheet A[9]:

Sheet A[9] was obtained similarly to Manufacturing Example 5 except that carbon black as a laser light energy absorbing agent was not blended to the core layer of the three-layered sheet of Manufacturing Example 5.

(Manufacturing Example 10) Sheet A[10]:

Sheet A[10] was obtained similarly to Manufacturing Example 5 except that 5 parts by mass of carbon black as a laser light energy absorbing agent was blended to the core layer of the three-layered sheet of Manufacturing Example 5.

(Manufacturing Example 11) Multilayer Sheet B[1]:

As a skin layer, noncrystalline polyester (trade name of "Easter GN071" produced by Eastman Chemical Company, with EG/CHDM = 70/30 mol%) was used, and as a core layer, polycarbonate (trade name of "TARFLON FN2500A" produced by Idemitsu Kosan Co., Ltd., with a melt volume rate = 8 cm$^3$/10min.) was used, and 0.3 part by mass of calcium stearate as a lubricant was blended to the noncrystalline polyester. Further, to the polycarbonate were blended 0.1 part of (n-octadesyl-3-(3,5-di-t-butyl-4-hydroxyphenyl)propionate ("Irganox 1076" produced by Ciba Specialty Chemicals Inc.) as the phenol based antioxidant, 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber and 5 parts of titanium oxide to obtain a three-layered multilayer sheet B including skin layer/core layer/skin layer by T-die melt coextrusion. The sheet had a total thickness of 200 μm with the skin layers on the front and rear sides having the same thickness, and the layers had a configuration of the skin layer (25 μm)/the core layer (150 μm)/the skin layer (25 μm) so that the ratio of the thickness of the core layer was 75%. Further, both of the surfaces were subjected to matting to have an average surface roughness (Ra) of 0.5 to 1.8 μm to obtain a multilayer sheet B.

(Manufacturing Example 12) Multilayer Sheet B[2]:

A multilayer sheet B[2] was obtained in a similar manner to Manufacturing Example 11 except that the sheet had a total thickness of 200 μm, and the layers had a configuration of the skin layer (12 μm)/the core layer (176 μm)/the skin layer (12 μm) so that the ratio of the thickness of the core layer was 88%.

(Manufacturing Example 13) Multilayer Sheet B[3]:

A multilayer sheet B[3] was obtained in a similar manner to Manufacturing Example 11 except that the sheet had a total thickness of 200 μm, and the layers had a configuration of the skin layer (80 μm)/the core layer (40 μm)/the skin layer (80 μm) so that the ratio of the thickness of the core layer was 20%.

(Manufacturing Example 14) Multilayer Sheet B[4]:

As a skin layer, polycarbonate (trade name of "TARFLON FN2500A" produced by Idemitsu Kosan Co., Ltd., with a melt volume rate = 8 cm$^3$/10min.) was used, and as a core layer, 5 parts of titanium oxide was blended to the polycarbonate, and further 0.1 part of n-octadesyl-3-(3,5-di-t-butyl-4-hydroxyphenyl)propionate (trade name of "Irganox 1076" produced by Ciba Specialty Chemicals Inc.) as the phenol based antioxidant and 0.2 part of 2-(2'-hydroxy-3',5'-di-t-butylphenyl)-5-chlorobenzotriazole (trade name of "Tinuvin 327" produced by Ciba Specialty Chemicals Inc.) as the ultraviolet absorber were blended so that the sheet had a total thickness of 200 μm with the skin layers on the front and rear sides having the same thickness by T-die melt coextrusion. The layer configuration was skin layer (40 μm)/core layer (120 μm)/skin layer (40 μm) so that the ratio of the core layer was 60%. Further, both of the surfaces were subjected to matting to have an average surface roughness (Ra) of 0.5 to 1.8 μm to obtain a multilayer sheet B[4].

Using the aforementioned Manufacturing Examples 1 to 14, various evaluations of [2-1] to [2-8] were conducted as Examples 7 to 13 and Comparative Examples 7 to 15 in the configurations illustrated in Table 3 and Table 4. As the sheet C, the TPU/PET-mesh composite hinge sheet (composite hinge sheet, sheet C[1]) of 150 μm in total thickness where PET-mesh and TPU were composite-integrated in Example 1 was formed and used.

[Table 3]

| | Sheet A | Multilayer sheet B | Sheet C | Lamination structure | Transparency | Conveyance property | Releasability from a die | Air bubble releasing property | Thermal adhesiveness | Laser markability | Contrast | Wear resistance |
|---|---|---|---|---|---|---|---|---|---|---|---|---|
| Example 7 | A[1] | B[1] | C1 | A1/B1/C1/B1/A1 | ○ | ○ | ○ | ○ | ◎ | ◎ | ○ | ◎ |
| Example 8 | A[2] | B[1] | C1 | A2/B1/C1/B1/A2 | ○ | ○ | ○ | ○ | ◎ | ○ | ○ | ◎ |
| Example 9 | A[4] | B[1] | C1 | A4/B1/C1/B1/A4 | ○ | ○ | ○ | ○ | ◎ | ◎ | ○ | ○ |
| Example 10 | A[5] | B[1] | C1 | A5/B1/C1/B1/A5 | ○ | ○ | ○ | ○ | ◎ | ○ | ○ | ◎ |
| Example 11 | A[4] | B[1] | C2 | A4/B1/C2/B1/A4 | ○ | ○ | ○ | ○ | ◎ | ◎ | ○ | ◎ |
| Example 12 | A[4] | B[1] | C3 | A4/B1/C3/B1/A4 | ○ | ○ | ○ | ○ | ◎ | ○ | ○ | ◎ |
| Example 13 | A[1] | B[1] | C4 | A4/B1/C4/B1/A4 | ○ | ○ | ○ | ○ | ◎ | ○ | ○ | ◎ |

[Table 4]

| | Sheet A | Multilayer sheet B | Sheet C | Lamination structure | Transparency | Conveyance property | Releasability from a die | Air bubble releasing property | Thermal adhesiveness | Laser markability | Contrast | Wear resistance |
|---|---|---|---|---|---|---|---|---|---|---|---|---|
| Comparative Example 7 | A[3] | B[1] | C1 | A3/B1/C1/B1/A3 | ○ | ○ | ○ | ○ | ◎ | × | × | ◎ |
| Comparative Example 8 | A[6] | B[1] | C1 | A6/B1/C1/B1/A6 | ○ | ○ | ○ | ○ | ◎ | × | × | ◎ |
| Comparative Example 9 | A[7] | B[1] | C1 | A7/B1/C1/B1/A7 | - | - | - | - | - | - | - | - |
| Comparative Example 10 | A[8] | B[1] | C1 | A8/B1/C1/B1/A8 | ○ | ○ | × | ○ | ◎ | ○ | ○ | ◎ |
| Comparative Example 11 | A[9] | B[1] | C1 | A9/B1/C1/B1/A9 | ○ | ○ | ○ | ○ | ◎ | × | × | × |
| Comparative Example 12 | A[10] | B[1] | C1 | A10/B1/C1/B1/A10 | × | ○ | ○ | ○ | ◎ | × | × | ◎ |
| Comparative Example 13 | A[4] | B[2] | C1 | A4/B2/C1/B2/A4 | × | ○ | ○ | ○ | Δ to × | ◎ | ○ | ◎ |
| Comparative Example 14 | A[4] | B[3] | C1 | A4/B3/C1/B3/A4 | ○ | ○ | ○ | ○ | ◎ | ○ | × | ◎ |
| Comparative Example 15 | A[4] | B[4] | C1 | A4/B4/C1/B4/A4 | ○ | ○ | ○ | ○ | × | ◎ | ○ | ◎ |

EP 2 487 029 B1

(Consideration 2)

As illustrated in Table 3, laser-markable multilayer laminates for electronic passport of Examples 7 to 13 could obtain good results, and all of the laser-markable multilayer laminates for electronic passport had excellent transparency, conveyance property, releasability from a die, and air bubble releasing property. Especially, Examples 8, 10, 12 and 13 had remarkable effects for thermal adhesiveness and wear resistance, and Example 9 showed an remarkable effect for thermal adhesiveness and laser markability.

On the other hand, in Comparative Example 7, since the sheet A[3] (Manufacturing Example 3) had the thickness ratio of the core layer of 10%, it had poor laser markbility and contrast. Since this thickness ratio of the core layer made the core layer extremely thin, it was difficult to control the thickness ratio and obtain a three-layered sheet stably, and therefore presumably the industrial manufacturing thereof will be difficult. In Comparative Example 8, since the sheet A[6] (Manufacturing Example 6) had the thickness ratio of the core layer of 20%, it had poor laser markbility and contrast. In Comparative Example 9, although three-layer coextrusion was tried for the sheet A[7] (Manufacturing Example 7) with the thickness ratio of the core layer of 90%, since the skin layers were too thin, the configuration of these layers failed in stable and sufficient manufacturing. Table 4 shows "-" indicating unmeasurable. In Comparative Example 10, since the sheet A[8] (Manufacturing Example 8) did not include a lubricant, the sheet had poor releasability from a die. Further, in Comparative Example 11, since the sheet A[9] (Manufacturing Example 9) did not include carbon black as a laser light energy absorbing agent, the sheet had poor laser markbility and contrast. Similarly, in Comparative Example 12, the core layer of the sheet A[10] (Manufacturing Example 10) included 5 parts by mass of carbon black as a laser light energy absorbing agent, the sheet itself showed black color. As a result, transparency deteriorated and PC resin burned and foaming occurred by laser light irradiation, so the sheet could not be used practically.

Further, in Comparative Example 13, since the sheet B[2] (Manufacturing Example 12) had the thickness ratio of the core layer of 88%, it had poor thermal adhesiveness. Additionally, since the three-layer sheet of Manufacturing Example 12 had such a high thickness ratio of the core layer of 88%, the skin layers had a thickness as small as 12 $\mu$m even in the total thickness of 200 $\mu$m. Therefore, it was difficult to control the thickness of each layer and manufacture a three-layered sheet stably, and therefore presumably the industrial manufacturing thereof will be difficult. In Comparative Example 14, since the multilayer sheet B[3] (Manufacturing Example 13) had the thickness ratio of the core layer of 20%, the sheet had poor opacifying property and resulted in poor contrast at a laser marking section. Further, in Comparative Example 15, since a three-layered sheet of PC/PC/PC was used for the multilayer sheet B[4] (Manufacturing Example 14), the sheet had poor thermal adhesiveness with the sheet A as the over sheet and poor thermal adhesiveness with the composite hinge sheet.

Industrial Applicability

A composite hinge sheet of the present invention can be preferably used for a laser-markable multilayer laminate for electronic passport. Further, when manufacturing a laser-markable multilayer laminate for electronic passport, the composite hinge sheet of the present invention can be used preferably as a hinge sheet excellent in thermal adhesiveness and dimension accuracy of the laminate, soft and excellent resistance to repeated bending after bookbinding for binding with a cover or the like, excellent tearing and tensile strength at a binding portion and excellent time-related stability for lightfastness during actual use. A laser-markable multilayer laminate for electronic passport of the present invention includes a sheet A and a color laser marking multilayer sheet B each including a non-PVC-based multilayer sheet, and includes a laminate structure of sheet A/multilayer sheet B/hinge sheet/multilayer sheet B/sheet A. Thereby, the laser-markable multilayer laminate for electronic passport of the present invention has clear and excellent laser markability not only for letters and numbers but also for images by laser light irradiation, which is a multilayer sheet having excellent sheet conveyance property, lamination property, thermal adhesiveness and being free from deformation and "warpage" of the lamination sheet, and so having excellent thermal resistance even during lamination and hot press process of the multilayer sheet. When such a laser-markable multilayer laminate for electronic passport is book-bound as an electronic passport, the bookbinding can be performed by a simple method such as machine-sewing. Further, such a laser-markable multilayer laminate for electronic passport is very effective for anti-counterfeit by laser marking, and so can be preferably used for an electronic passport.

Description of Reference Numerals

1, C: Composite hinge sheet, 3: Woven-fabric like sheet, 5: Thermoplastic resin sheet, 11, 11A, 11B, 11C: Laser-marking multilayer laminate for electronic passport, 13: Sheet A, 13a: Skin layer (of Sheet A), 13b: Core layer (of Sheet A), 15: Multilayer sheet B, 15a: Skin layer (of Multilayer sheet B), 15b: Core layer (of Multilayer sheet B), 17: Laser beam, 23: Sheet A, 23a: Skin layer (of Sheet A), 23b: Core layer (of Sheet A), 27: Machine-sewn portion, 29: Protruding portion, 49: Cover, 50: Back cover, 51: Laminate, 52: Plastic Inlay, 53: Visa sheet, 54: Laminate, 61: Cut sheet, 61a:

Protruding portion, 63: Horizontal base, 65: Supporting board, 67: Perforation, 69: Opening, 71: Fiber, C: Composite hinge sheet

**Claims**

1.  A composite hinge sheet (1, C) for a laser-markable multilayer laminate for electronic passport (11, 11A, 11B, 11C), the composite hinge sheet (1, C) comprising a woven-fabric like sheet (3) including a large number of openings (69), on both faces of the woven-fabric like sheet (3) thermoplastic resin layers (5) being disposed, wherein

    the woven-fabric like sheet (3) includes woven fabric or non-woven fabric including at least one type selected from thermoplastic polyester, thermoplastic polyamide and thermoplastic polypropylene, and
    a part of the thermoplastic resin is provided in the openings (69) of the woven-fabric like sheet (3) to block all of the openings (69) and to integrate the thermoplastic resin layers (5) with the woven-fabric like sheet (3), wherein the composite hinge sheet (1, C) is **characterized in that** the thermoplastic resin layers (5) are formed by filling openings of the woven-fabric like sheet with a molten thermoplastic resin as a raw material having flexibility as surface hardness Shore A of 85 or greater and Shore D less than 70 to block the openings.

2.  The composite hinge sheet (1, C) for a laser-markable multilayer laminate for electronic passport (11, 11A, 11B, 11C), according to claim 1, wherein the woven-fabric like sheet (3) has a thickness of 60 $\mu$m or greater and 200 $\mu$m or less, a fiber (71) diameter of 40 to 100 $\mu$m, and an opening ratio of 50% or greater and less than 80%.

3.  The composite hinge sheet (1, C) for a laser-markable multilayer laminate for electronic passport (11, 11A, 11B, 11C), according to claim 1 or 2, wherein the compostite hinge sheet (1, C) is obtained by, immediately after melt coextrusion of the thermoplastic resin in a sheet form, a resultant is heat-laminated with the woven-fabric like sheet (3) so that the thermoplastic resin layers (5) are integrated with the woven-fabric like sheet (3).

4.  The composite hinge sheet (1, C) for a laser-markable multilayer laminate for electronic passport (11, 11A, 11B, 11C), according to any one of claims 1 to 3, wherein the thermoplastic resin layers (5) are further uniformly formed on surfaces of both sides of the woven-fabric like sheet (3).

5.  The composite hinge sheet (1, C) for a laser-markable multilayer laminate for electronic passport (11, 11A, 11B, 11C), according to any one of claims 1 to 4, wherein the thermoplastic resin layers (5) have a color difference $\Delta$E after 100 hours of 6 or less in the accelerated weathering test as described in the description.

6.  A laser-markable multilayer laminate for electronic passport (11, 11A, 11B, 11C), comprising, as a basic constitutional unit, three sheets of a sheet A (13, 23, 33)/a multilayer sheet B (15)/the composite hinge sheet (1, C) for a laser-markable multilayer laminate for electronic passport (11, 11A, 11B, 11C), according to any one of claims 1 to 5.

7.  A laser-markable multilayer laminate for electronic passport (11, 11A, 11B, 11C), comprising, as a basic constitutional unit, five sheets of a sheet A (13, 23, 33)/a multilayer sheet B (15)/the composite hinge sheet (1, C) for a laser-markable multilayer laminate for electronic passport (11, 11A, 11B, 11C), according to any one of claims 1 to 5/a multilayer sheet B (15)/a sheet A (13, 23, 33).

8.  The laser-markable multilayer laminate for electronic passport (11, 11A, 11B, 11C), according to claim 6 or 7, wherein

    the sheet A (13) comprises a single-layer sheet including transparent polycarbonate resin composition including a thermoplastic polycarbonate resin and a laser light energy absorbing agent, or
    the sheet A (23) comprises a multilayer sheet (1) including skin layers (23a) and a core layer (23b), the skin layers (23a) as both outermost layers including a thermoplastic polyester resin and the core layer (23b) including a transparent polycarbonate resin composition including a thermoplastic polycarbonate resin and a laser light energy absorbing agent, and
    the sheet A (23) has an entire thickness of 50 to 200 $\mu$m and a thickness ratio of the core layer (23b) of 30 to less than 85%, or
    the sheet A (33) comprises a multilayer sheet (2) including skin layers (33a) and a core layer (33b), the skin layers (33a) as both outermost layers including a thermoplastic polycarbonate resin and the core layer (33b) including a transparent polycarbonate resin composition including a thermoplastic polycarbonate resin and a laser light energy absorbing agent, and

the sheet A (33) has an entire thickness of 50 to 200 μm and a thickness ratio of the core layer (33b) of 30 to less than 85%,

the multilayer sheet B (15) comprises skin layers (15a) and a core layer (15b), the skin layers (15a) as both outermost layers including a thermoplastic polyester resin,

the core layer (15b) of the multilayer sheet B (15) including a transparent thermoplastic resin including a thermoplastic polycarbonate resin,

at least one layer of the skin layers (15a) and the core layer (15b) of the multilayer sheet B (15) including a colorant,

the multilayer sheet B (15) has an entire thickness of 100 to 300 μm, and the core layer (15b) has a ratio of thickness thereof to the entire thickness of the multilayer sheet B (15) of 30% or greater and less than 85%, and the composite hinge sheet (1, C) has a thickness of 80 to 250 μm.

9. The laser-markable multilayer laminate for electronic passport (11, 11A, 11B, 11C), according to any one of claims 6 to 8 comprising a lamination of five sheets including a sheet A (13, 23, 33)/a sheet B (15)/the composite hinge sheet (1, C) for a laser-markable multilayer laminate for electronic passport (11, 11A, 11B, 11C), including an inlet/a sheet B (15)/a sheet A (13, 23, 33).

10. The laser-markable multilayer laminate for electronic passport (11, 11A, 11B, 11C), according to any one of claims 6 to 8 further including an inlet sheet, and comprising a lamination of six sheets including a sheet A (13, 23, 33)/a multilayer sheet B (15)/the composite hinge sheet (1, C) for a laser-markable multilayer laminate for electronic passport (11, 11A, 11B, 11C), /the inlet sheet/a multilayer sheet B (15)/a sheet A (13, 23, 33).

11. The laser-markable multilayer laminate for electronic passport (11, 11A, 11B, 11C), according to any one of claims 6 to 10, wherein at least one surface of at least one of the sheet A, (13, 23, 33) the multilayer sheet B (15) and the composite hinge sheet (1, C) for a laser-markable multilayer laminate for electronic passport (11, 11A, 11B, 11C), is subjected to matting with an average roughness (Ra) of 0.1 to 5 μm.

12. An electronic passport, comprising the laser-markable multilayer laminate for electronic passport (11, 11A, 11B, 11C), according to any one of claims 6 to 11, wherein the composite hinge sheet (1, C) for a laser-markable multilayer laminate for electronic passport (11, 11A, 11B, 11C), comprises at one end a protruding portion (29) protruding by 5 to 100 mm from the sheet A (13, 23, 33) and the multilayer sheet B (15), the protruding portion (29) being machine-sewn bound or bonded or being machine-sewn bound and bonded with a cover or a back cover of the electronic passport.

13. Method for manufacturing the composite hinge sheet according to any one of claims 1 to 5,
wherein the method comprises:

a step of melt coextrusion of the thermoplastic resin as defined in any one of claims 1 to 5 in a sheet form, and
a step of conducting heat-lamination with the woven-fabric like sheet as defined in any one of claims 1 to 5 so that the thermoplastic resin layers are integrated with the woven-fabric like sheet.

14. Method according to claim 13,
wherein the melt coextrusion is conducted at a temperature of 170 to 240°C.

15. Use of a molten thermoplastic resin as a raw material having flexibility as surface hardness Shore A of 85 or greater and Shore D less than 70 to block openings of a woven-fabric like sheet of a composite hinge sheet.

**Patentansprüche**

1. Ein Verbunddatenblatt (1, C) für ein lasermarkierbares mehrschichtiges Laminat für einen elektronischen Ausweis (11, 11A, 11B, 11C), das Verbunddatenblatt (1, C), umfassend ein gewebtes stoffartiges Blatt (3), das eine große Anzahl von Öffnungen (69) beinhaltet, wobei an beiden Seiten des gewebten stoffartigen Blattes (3) thermoplastische Harzschichten (5) angeordnet sind, wobei

das gewebte stoffartige Blatt (3) beinhaltet gewebten Stoff oder nicht gewebten Stoff, welcher zumindest eine Art, ausgewählt von thermoplastischen Polyester, thermoplastischen Polyamid und thermoplastischen Polypropylen beinhaltet,

und

ein Teil des thermoplastischen Harzes ist in den Öffnungen (69) des gewebten stoffartigen Blatts (3) bereitgestellt, um all die Öffnungen (69) zu blockieren und um die thermoplastischen Harzschichten (5) mit dem gewebten stoffartigen Blatt (3) zu integrieren,

wobei das Verbunddatenblatt (1, C) **dadurch gekennzeichnet ist, dass** thermoplastische Harzschichten (5) durch das Füllen von Öffnungen des gewebten stoffartigen Blatts mit einem geschmolzenen thermoplastischen Harz gebildet sind, welches als ein Rohmaterial eine Flexibilität als Oberflächenhärte Shore A von 85 oder größer oder Shore D von weniger als 70 aufweist, um die Öffnungen zu blockieren.

2. Verbunddatenblatt (1, C) für ein lasermarkierbares mehrschichtiges Laminat für einen elektronischen Ausweis (11, 11A, 11B, 11C), nach Anspruch 1, wobei das gewebte stoffartige Blatt (3) eine Dicke von 60 $\mu$m oder größer und 200 $\mu$m oder weniger, eine Faser (71) mit einem Durchmesser von 40 bis 100 $\mu$m und ein Öffnungsverhältnis von 50% oder größer und weniger als 80% aufweist.

3. Verbunddatenblatt (1, C) für ein lasermarkierbares mehrschichtiges Laminat für einen elektronischen Ausweis (11, 11A, 11B, 11C), nach Anspruch 1 oder 2, wobei das Verbunddatenblatt (1, C) unverzüglich nach Schmelz-Coextrusion des thermoplastischen Harzes in eine Blattform erhalten wird, ein Resultat ist wärmelaminiert mit dem gewebten stoffartigen Blatt (3), sodass die thermoplastischen Harzschichten (5) mit dem gewebten stoffartigen Blatt (3) eingebunden sind.

4. Verbunddatenblatt (1, C) für ein lasermarkierbares mehrschichtiges Laminat für einen elektronischen Ausweis (11, 11A, 11B, 11C) nach einem der Ansprüche 1 bis 3, wobei die thermoplastischen Harzschichten (5) ferner einheitlich an Oberflächen der beiden Seiten des gewebten stoffartigen Blattes gebildet sind.

5. Verbunddatenblatt (1, C), für lasermarkierbares mehrschichtiges Laminat für einen elektronischen Ausweis (11, 11A, 11B, 11C), nach einem der Ansprüche 1 bis 4, wobei die thermoplastischen Harzschichten (5) eine Farbdifferenz $\Delta E$ nach 100 Stunden von 6 oder weniger in dem beschleunigten Witterungstest wie in der Beschreibung beschrieben, aufweisen.

6. Lasermarkierbares mehrschichtiges Laminat für einen elektronischen Ausweis (11, 11A, 11B, 11C), umfassend, als eine grundlegende konstitutionelle Einheit, drei Blätter eines Blatts A (13, 23, 33) / eines mehrschichtigen Blatts B (15) / des Verbunddatenblatts (1, C) für ein lasermarkierbares mehrschichtiges Laminat für einen elektronischen Ausweis (11, 11A, 11B, 11C) nach einem der Ansprüche 1 bis 5.

7. Lasermarkierbares mehrschichtiges Laminat für einen elektronischen Ausweis (11, 11A, 11B, 11C), als eine grundlegende konstitutionelle Einheit, 5 Blätter eines Blatts A (13, 23, 33) / eines mehrschichtigen Blatts B (15) / des Verbunddatenblatts (1, C) für ein lasermarkierbares mehrschichtiges Laminat für einen elektronischen Ausweis (11, 11A, 11B, 11C), nach einem der Ansprüche 1 bis 5 / eines mehrschichtigen Blatts B (15) / eines Blatts A (13, 23, 33).

8. Lasermarkierbares mehrschichtiges Laminat für einen elektronischen Ausweis (11, 11A, 11B, 11C) nach Anspruch 6 oder 7, wobei

das Blatt A (13) ein einzelschichtiges Blatt umfasst, welches transparente Polycarbonatharzzusammensetzung beinhaltet, das ein thermoplastisches Polycarbonatharz und ein Laserlichtenergieabsorptionsmittel beinhaltet, oder

das Blatt A (23) ein mehrschichtiges Blatt (1) umfasst, das Hautschichten (23a) und eine Kernschicht (23b) beinhaltet, wobei die Hautschichten (23a) als beide am Weitesten außenliegenden Schichten ein thermoplastisches Polyesterharz beinhaltet und die Kernschicht (23b) eine transparente Polycarbonatharzzusammensetzung ein thermoplastisches Polycarbonatharz und ein Laserlichtenergieabsorptionsmittel beinhaltet, und

das Blatt A (23) eine Dicke von 50 bis 200 $\mu$m und ein Dickeverhältnis der Kernschicht (23b) von 30 bis weniger als 85% aufweist, oder

das Blatt A (33) ein mehrschichtiges Blatt (2) umfasst, das beinhaltet Hautschichten (33a) und eine Kernschicht (33b), die Hautschichten (33a) als beide am Weitesten außenliegenden Schichten, die ein thermoplastisches Polycarbonatharz beinhalten und die Kernschicht (23b), die eine transparente Polycarbonatharzzusammensetzung beinhaltet, die ein thermoplastisches Polycarbonatharz und ein Laserlichtabsorptionsmittel beinhaltet, und

das Blatt A (33) eine Gesamtdicke von 50 bis 200 $\mu$m und ein Dickenverhältnis der Kernschicht (33b) von 30 bis weniger als 85% aufweist,

das mehrschichtige Blatt B (15) umfasst Hautschichten (15a) und eine Kernschicht (15b), die Harzschichten (15a) als beide am Weitesten außenliegende Schichten ein thermoplastisches Polyesterharz beinhalten,

die Kernschicht (15b) des mehrschichtigen Blatts B (15), die ein transparentes thermoplastisches Harz beinhaltet, die ein thermoplastisches Polycarbonatharz beinhaltet,

zumindest eine Schicht der Hautschicht (15a) und der Kernschicht (15b) des mehrschichtigen Blatts B (15) beinhaltend ein transparentes thermoplastisches Harz beinhaltend ein thermoplastisches Polycarbonatharz,

zumindest eine Schicht der Hautschicht (15a) und der Kernschicht (15b) des mehrschichtigen Blatts B (15) beinhaltend einen Farbstoff,

das mehrschichtige Blatt B (15) eine Gesamtdicke von 100 bis 300 $\mu$m aufweist und die Kernschicht (15b) ein Verhältnis von Dicke davon zu der gesamten Dicke des mehrschichtigen Blatts B (15b) von 30% oder größer und weniger als 85% aufweist, und

das Verbunddatenblatt (1, C) eine Dicke von 80 bis 250 $\mu$m aufweist.

**9.** Lasermarkierbares mehrschichtiges Laminat für einen elektronischen Ausweis (11, 11A, 11B, 11C) nach einem der Ansprüche 6 bis 8, umfassend:

eine Lamination von 5 Blättern beinhaltend ein Blatt A (13, 23, 33) / ein Blatt B (15) / das Verbunddatenblatt (1, C) für lasermarkierbares mehrschichtiges Laminat für einen elektronischen Ausweis (11, 11A, 11B, 11C) beinhaltend ein Einlassblatt / ein Blatt B (15) / ein Blatt A (13, 23, 33).

**10.** Lasermarkierbares mehrschichtiges Laminat für einen elektronischen Ausweis (11, 11A, 11B, 11C), nach einem der Ansprüche 6 bis 8, ferner beinhaltend ein Einlassblatt, und umfassend eine Lamination von 6 Blättern beinhaltend ein Blatt A (13, 23, 33) / ein mehrschichtiges Blatt B (15) / das Verbunddatenblatt (1, C) für ein lasermarkierbares mehrschichtiges Laminat für einen elektronischen Ausweis (11, 11A, 11B, 11C),/ das Einlassblatt / ein mehrschichtiges Blatt B (15) / ein Blatt A (13, 23, 33).

**11.** Lasermarkierbares mehrschichtiges Laminat für einen elektronischen Ausweis (11, 11A, 11B, 11C) nach einem der Ansprüche 6 bis 10, wobei zumindest eine Oberfläche von zumindest einem des Blatts A (13, 23, 33), des mehrschichtigen Blatts B (15) und des Verbunddatenblatts (1, C) für ein lasermarkierbares mehrschichtiges Laminat für einen elektronischen Ausweis (11, 11A, 11B, 11C) dem Mattieren mit einer durchschnittlichen Rauheit (Ra) von 0,1 bis 5 $\mu$m unterworfen wird.

**12.** Elektronischer Ausweis, umfassend das lasermarkierbare mehrschichtige Laminat für einen elektronischen Ausweis (11, 11A, 11B, 11C) nach einem der Ansprüche 6 bis 11, wobei das Verbunddatenblatt (1, C) für ein lasermarkierbares mehrschichtiges Laminat für einen elektronischen Ausweis (11, 11A, 11B, 11C) umfasst zumindest ein Ende eines vorstehendenden Abschnitts (29) vorstehend um 5 bis 10 mm von dem Blatt A (13, 23, 33) und dem mehrschichtigen Blatt B (15) der vorstehende Abschnitt (29) ist maschinennahtgebunden oder gebunden oder ist maschinennahtgebunden oder gebunden mit einer Abdeckung oder einer rückseitigen Abdeckung des elektronischen Ausweises.

**13.** Verfahren zum Herstellen des Verbunddatenblatts nach einem der Ansprüche 1 bis 5, wobei das Verfahren umfasst:

einen Schritt des Schmelz-Coextruierens des thermoplastischen Harzes wie in einem der Ansprüche 1 bis 5 definiert in einer Blattform, und

einen Schritt des Durchführens von Wärmelaminierung mit dem gewebten stoffartigen Blatt wie in einem der Ansprüche 1 bis 5 definiert so, dass die thermoplastischen Harzschichten mit dem gewebten strukturartigen Blatt eingefasst werden.

**14.** Verfahren nach Anspruch 13, wobei die Schmelz-Coextrusiion bei einer Temperatur von 170 bis 240°C durchgeführt wird.

**15.** Verwendung eines geschmolzenen thermoplastischen Harzes als ein Rohmaterial, das Flexibilität wie Oberflächenhärte Shore A von 85 oder größer oder Shore D weniger als 70 aufweist, um Öffnungen des gewebten stoffartigen Blatts des Verbunddatenblatts zu blockieren.

**Revendications**

**1.** Feuille d'articulation composite (1, C) pour un stratifié multicouche pouvant être marqué au laser pour passeport électronique (11, 11A, 11B, 11C), la feuille d'articulation composite (1, C) comprenant une feuille de type tissu tissé (3) incluant un grand nombre d'ouvertures (69), sur les deux faces de la feuille de type tissu tissé (3) étant disposées des couches de résine thermoplastique (5), dans laquelle la feuille de type tissu tissé (3) inclut du tissu tissé ou tissu non tissé incluant au moins un type sélectionné parmi le polyester thermoplastique, du polyamide thermoplastique et du polypropylène thermoplastique,
et
une partie de la résine thermoplastique est prévue dans les ouvertures (69) de la feuille de type tissu tissé (3) pour bloquer toutes les ouvertures (69) et pour intégrer les couches de résine thermoplastique (5) avec la feuille de type tissu tissé (3),
dans laquelle la feuille d'articulation composite (1, C) est **caractérisée en ce que** les couches de résine thermoplastique (5) sont formées en remplissant des ouvertures de la feuille de type tissu tissé avec une résine thermoplastique fondue en tant que matière première ayant une flexibilité en tant que dureté en surface Shore A de 85 ou plus et Shore D de moins de 70 afin de bloquer les ouvertures.

2. Feuille d'articulation composite (1, C) pour un stratifié multicouche pouvant être marqué au laser pour passeport électronique (11, 11A, 11B, 11C), selon la revendication 1, dans laquelle la feuille de type tissu tissé (3) a une épaisseur de 60 μm ou plus et de 200 μm ou moins, un diamètre de fibre (71) de 40 à 100 μm, et un rapport d'ouverture de 50 % ou plus et de moins de 80 %.

3. Feuille d'articulation composite (1, C) pour un stratifié multicouche pouvant être marqué au laser pour passeport électronique (11, 11A, 11B, 11C), selon la revendication 1 ou 2, dans laquelle la feuille d'articulation composite (1, C) est obtenue, juste après la coextrusion par fusion de la résine thermoplastique sous une forme de feuille, par le fait qu'un produit obtenu est thermiquement stratifié avec la feuille de type tissu tissé (3) de telle sorte que les couches de résine thermoplastique (5) sont intégrées avec la feuille de type tissu tissé (3).

4. Feuille d'articulation composite (1, C) pour un stratifié multicouche pouvant être marqué au laser pour passeport électronique (11, 11A, 11B, 11C), selon l'une quelconque des revendications 1 à 3, dans laquelle les couches de résine thermoplastique (5) sont en outre formées de manière uniforme sur des surfaces des deux côtés de la feuille de type tissu tissé (3).

5. Feuille d'articulation composite (1, C) pour un stratifié multicouche pouvant être marqué au laser pour passeport électronique (11, 11A, 11B, 11C), selon l'une quelconque des revendications 1 à 4, dans laquelle les couches de résine thermoplastique (5) ont une différence de couleur ΔE après 100 heures de 6 ou moins lors de l'essai de vieillissement accéléré tel que décrit dans la description.

6. Stratifié multicouche pouvant être marqué au laser pour passeport électronique (11, 11A, 11B, 11C), comprenant, en tant qu'unité constitutionnelle de base, trois feuilles d'une feuille A (13, 23, 33)/d'une feuille multicouche B (15)/de la feuille d'articulation composite (1, C) pour un stratifié multicouche pouvant être marqué au laser pour passeport électronique (11, 11A, 11B, 11C), selon l'une quelconque des revendications 1 à 5.

7. Stratifié multicouche pouvant être marqué au laser pour passeport électronique (11, 11A, 11B, 11C), comprenant, en tant qu'unité constitutionnelle de base, cinq feuilles d'une feuille A (13, 23, 33)/d'une feuille multicouche B (15)/de la feuille d'articulation composite (1, C) pour un stratifié multicouche pouvant être marqué au laser pour passeport électronique (11, 11A, 11B, 11C), selon l'une quelconque des revendications 1 à 5/d'une feuille multicouche B (15)/d'une feuille A (13, 23, 33).

8. Stratifié multicouche pouvant être marqué au laser pour passeport électronique (11, 11A, 11B, 11C), selon la revendication 6 ou 7, dans lequel
la feuille A (13) comprend une feuille monocouche incluant une composition de résine de polycarbonate transparente incluant une résine de polycarbonate thermoplastique et un agent d'absorption d'énergie lumineuse laser, ou
la feuille A (23) comprend une feuille multicouche (1) incluant des couches de revêtement (23a) et une couche centrale (23b), les couches de revêtement (23a) en tant que les deux couches les plus extérieures incluant une résine de polyester thermoplastique et la couche centrale (23b) incluant une composition de résine de polycarbonate transparente incluant une résine de polycarbonate thermoplastique et un agent d'absorption d'énergie lumineuse laser, et
la feuille A (23) a une épaisseur totale de 50 à 200 μm et un rapport d'épaisseur de la couche centrale (23b) de 30 à moins de 85 %, ou
la feuille A (33) comprend une feuille multicouche (2) incluant des couches de revêtement (33a) et une couche centrale (33b), les couches de revêtement (33a) en tant que les deux couches les plus extérieures incluant une résine de polycarbonate thermoplastique et la couche centrale (33b) incluant une composition de résine de polycarbonate transparente incluant une résine de polycarbonate thermoplastique et un agent d'absorption d'énergie lumineuse laser, et

la feuille A (33) a une épaisseur totale de 50 à 200 $\mu$m et un rapport d'épaisseur de la couche centrale (33b) de 30 à moins de 85 %,

la feuille multicouche B (15) comprend des couches de revêtement (15a) et une couche centrale (15b), les couches de revêtement (15a) en tant que les deux couches les plus extérieures incluant une résine de polyester thermoplastique,

la couche centrale (15b) de la feuille multicouche B (15) incluant une résine thermoplastique transparente incluant une résine de polycarbonate thermoplastique, au moins une couche des couches de revêtement (15a) et la couche centrale (15b) de la feuille multicouche B (15) incluant un colorant,

la feuille multicouche B (15) a une épaisseur totale de 100 à 300 $\mu$m, et la couche centrale (15b) a un rapport d'épaisseur de celle-ci sur l'épaisseur totale de la feuille multicouche B (15) de 30 % ou plus et de moins de 85 %, et

la feuille d'articulation composite (1, C) a une épaisseur de 80 à 250 $\mu$m.

9. Stratifié multicouche pouvant être marqué au laser pour passeport électronique (11, 11A, 11B, 11C), selon l'une quelconque des revendications 6 à 8 comprenant une stratification de cinq feuilles incluant une feuille A (13, 23, 33)/une feuille B (15)/la feuille d'articulation composite (1, C) pour un stratifié multicouche pouvant être marqué au laser pour passeport électronique (11, 11A, 11B, 11C), incluant une entrée/une feuille B (15)/une feuille A (13, 23, 33).

10. Stratifié multicouche pouvant être marqué au laser pour passeport électronique (11, 11A, 11B, 11C), selon l'une quelconque des revendications 6 à 8 incluant en outre une feuille d'entrée, et comprenant une stratification de six feuilles incluant une feuille A (13, 23, 33)/une feuille multicouche B (15)/la feuille d'articulation composite (1, C) pour un stratifié multicouche pouvant être marqué au laser pour passeport électronique (11, 11A, 11B, 11C), /la feuille d'entrée/une feuille multicouche B (15)/une feuille A (13, 23, 33).

11. Stratifié multicouche pouvant être marqué au laser pour passeport électronique (11, 11A, 11B, 11C), selon l'une quelconque des revendications 6 à 10, dans lequel au moins une surface d'au moins une de la feuille A (13, 23, 33), de la feuille multicouche B(15) et de la feuille d'articulation composite (1, C) pour un stratifié multicouche pouvant être marqué au laser pour passeport électronique (11, 11A, 11B, 11C), est soumise à un matage avec une rugosité moyenne (Ra) de 0,1 à 5 $\mu$m.

12. Passeport électronique, comprenant le stratifié multicouche pouvant être marqué au laser pour passeport électronique (11, 11A, 11B, 11C), selon l'une quelconque des revendications 6 à 11, dans lequel la feuille d'articulation composite (1, C) pour un stratifié multicouche pouvant être marqué au laser pour passeport électronique (11, 11A, 11B, 11C), comprend au niveau d'une extrémité une portion saillante (29) faisant saillie de 5 à 100 mm depuis la feuille A (13, 23, 33) et la feuille multicouche B (15), la portion saillante (29) étant attachée cousue à la machine ou collée ou attachée cousue à la machine et collée avec une couverture ou un plat verso de couverture du passeport électronique.

13. Procédé de fabrication de la feuille d'articulation composite selon l'une quelconque des revendications 1 à 5, dans lequel le procédé comprend :

une étape de coextrusion par fusion de la résine thermoplastique telle que définie selon l'une quelconque des revendications 1 à 5 sous une forme de feuille, et
une étape de mise en oeuvre de stratification thermique avec la feuille de type tissu tissé telle que définie selon l'une quelconque des revendications 1 à 5 de telle sorte que les couches de résine thermoplastique sont intégrées avec la feuille de type tissu tissé.

14. Procédé selon la revendication 13, dans lequel la coextrusion par fusion est mise en oeuvre à une température de 170 à 240 °C.

15. Utilisation d'une résine thermoplastique fondue en tant que matière première ayant une flexibilité en tant que dureté en surface Shore A de 85 ou plus ou Shore D de moins de 70 pour bloquer les ouvertures d'une feuille de type tissu tissé d'une feuille d'articulation composite.

FIG.1

FIG.2

FIG.3

FIG.4

FIG.5

11A(11)

17

13

15 { 15a
15b
15a

C

15 { 15a
15b
15a

13

17

FIG.6

11B(11)

17

23 { 23a
23b
23a

15 { 15a
15b
15a

C

15 { 15a
15b
15a

23 { 23a
23b
23a

17

FIG.7

$\underline{11C(11)}$

17

33 { 33a
     33b
     33a
15 { 15a
     15b
     15a
                                                    C
15 { 15a
     15b
     15a
33 { 33a
     33b
     33a

17

FIG.8

EP 2 487 029 B1

FIG.9A

FIG.9B

FIG.10A

FIG.10B

65

61(61a)

63

FIG.11

67

X

Y

FIG.12A

EP 2 487 029 B1

FIG.12B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006097276 A1
- WO 2006053738 A2
- WO 2007034129 A1
- JP 2002273832 A
- JP 3889431 B
- JP 9123636 A
- WO 9819870 A
- JP 2001213072 A
- US 006135503 A
- JP 2000203174 A
- EP 1592565 A
- EP 1502765 A
- JP 10071763 A